(19) Europäisches Patentamt
European Patent Office
Office européen des brevets

(11) Publication number: **0 330 617 B1**

# (12) EUROPEAN PATENT SPECIFICATION

(45) Date of publication of patent specification: **03.07.91 Bulletin 91/27**

(51) Int. Cl.$^5$: **G02B 1/04**, C08G 77/46, C08F 230/08

(21) Application number: **89810125.8**

(22) Date of filing: **16.02.89**

## (54) Wettable, flexible, oxygen permeable contact lens containing block copolymer polysiloxane-polyoxyalkylene backbone units.

(30) Priority: **26.02.88 US 160789**

(43) Date of publication of application: **30.08.89 Bulletin 89/35**

(45) Publication of the grant of the patent: **03.07.91 Bulletin 91/27**

(84) Designated Contracting States: **AT BE CH DE ES FR GB GR IT LI LU NL SE**

(56) References cited:
**EP-A- 0 077 744**
**US-A- 4 136 250**
**US-A- 4 153 641**
**US-A- 4 486 577**

(73) Proprietor: **CIBA-GEIGY AG**
**Klybeckstrasse 141**
**CH-4002 Basel (CH)**

(72) Inventor: **Su, Kai Chiang**
**13090 Hopewell Road**
**Alpharetta Georgia 30201 (US)**
Inventor: **Robertson, J. Richard**
**3415 Aubusson Trace**
**Alpharetta Georgia 30201 (US)**

**EP 0 330 617 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to ophthalmic devices, such as contact lenses and intraocular implants, and particularly contact lenses of a block copolymer containing polysiloxane and polyoxyalkylene oxide units possessing an advantageous blend of desirable properties including a) high oxygen permeability, b) good wettability, c) flexibility and d) optical clarity, in the ocular environment of use as claimed in Claim 1, to a polymer as claimed in Claim 37 and the use of this polymer for the manufacture of an ophthalmic device as claimed in Claim 48.

The use of siloxane containing materials of various types in the fabrication of ophthalmic devices is well known.

Thus, in U.S. 3,996,187 ; 3,996,189 ; 3,341,490 and 3,228,741 there are described contact lenses fabricated from poly (organosiloxanes) containing fillers. While such lenses are generally soft and of high oxygen permeability, the use of fillers such as silica, is indicated in order to increase the otherwise generally poor tear strength and tensile strength. Also, such silicone rubber lenses are characteristically both hydrophobic and lipophilic.

U.S. 3,808,178 discloses hard contact lenses fabricated from copolymers of a polysiloxanylalkyl acrylate or methacrylate ester and an alkyl acrylate or methacrylate ester. The monomers and polymers of the patent are hydrophobic and are incompatible with hydrophilic materials such as hydroxyethyl methacrylate. While the disclosed lenses have increased oxygen permeability, they are rigid.

U.S. 4,136,250 discloses hydrogels of a copolymer of about 20 to about 90% of a hydrophilic (or mixture of hydrophilic and hydrophobic) monomer and about 10 to about 80% of a polyolefinic siloxane macromer which can be used to fabricate a contact lens. Typically, such hydrogels are recited to possess a degree of swelling of about 10 to about 12%. It has been found, however, that the pressure of substantial amounts of water in such hydrogels limits the oxygen permeability of such materials.

U.S. 4,153,641 relates, in relevant part, to contact lenses fabricated from a polymer of a polyorganosiloxane terminated with vinylic groups, or copolymers thereof with other monomers. The exemplified products therein are hydrophobic in nature.

U.S. 4,486,577 relates to copolymers of about 8 to 70% of a polysiloxane macromer containing at least two vinyl groups and 30-92% of a monomer which is at least predominantly water insoluble to make polymers useful, for example, as contact lenses.

Generally, such prior art contact lens compositions are either insufficiently hydrophilic in terms of surface wettability to be acceptable to the contact lens profession, even though they may possess high oxygen permeability, or such contact lenses are of acceptable wettability but the hydrophilicity is coupled with water swellability, which tends to limit optimum oxygen permeability.

It is an object of the present invention to overcome these and other disadvantages of the art by providing ophthalmic devices, such as contact lenses and corneal implants, possessing a high degree of surface wettability and possessing a high degree of oxygen permeability notwithstanding their swellability by employing a crosslinked block polymer containing polysiloxane and polyalkylene oxide units.

A further object of the invention is to provide a method of correcting visual defects in the form of refractive errors by fitting to the patient's eye in need of the same a corrective contact lens of such polymer. These and other objects of the invention are apparent from the following detailed description of the invention.

One embodiment of the present invention relates to an optically clear, hydrolytically stable, biologically inert, wettable, flexible, oxygen permeable ophthalmically acceptable polymer and device, such as a contact lens having at least 10% water content when swollen in its environment of use, which is fabricated from a crosslinked polymer of a reactive monomer having a segment S″ of the formula Ia,

$$-(W-S'-L-D-A-L)_{a}- \qquad (Ia)$$

wherein a is 1 to 10 ;
each D is independently oxygen or $-N(R^{21})-$ ;
each W is a bond, oxygen or $-N(R^{21})-$ ;
each L is independently –BRB′–, –BR–, –RB′– or –R– ;
each S′ is independently a segment of formula II,

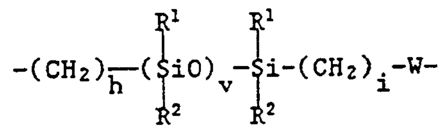

(II)

each A is independently a segment of formula III,

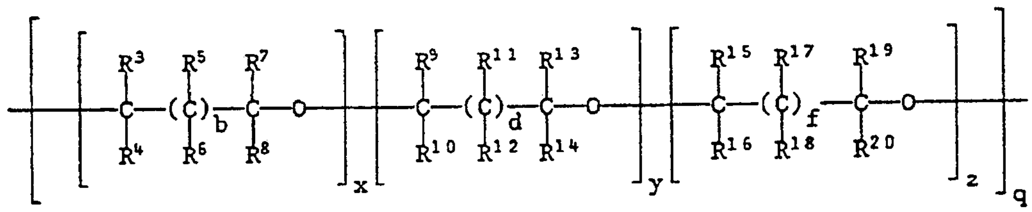

(III)

the terminal oxygen within each unit of formula III being replaceable by $-N(R^{21})-$ ;

wherein each b, d and f is independently 0-4 ; q is a number from 1 to 1000 ; each x, y and z is independently 0 to 200, preferably 0 to 100 provided at least one of x, y and z is at least 1 ; such that (x + y + z) multiplied by q is 4 to 1000 ;

each h and i is an integer from 1 to 6, v is an integer from 2 to 300, preferably 2 to 75, preferably 2 to 50, more preferably 10 to 50, most preferably 15 to 50 ;

$R^1$ and $R^2$ are independently alkyl of up to 18 carbon atoms, or aryl of up to 12 carbon atoms, preferably lower alkyl or phenyl, most preferably methyl ;

each of $R^3$, $R^4$, $R^7$-$R^{10}$, $R^{13}$-$R^{16}$, $R^{19}$ and $R^{20}$ is independently selected from the group consisting of hydrogen, halogen, (preferably fluorine or chlorine, more preferably fluorine), an aliphatic, aromatic or heterocyclic containing radical selected from unsubstituted $C_1$-$C_{16}$ alkyl ; substituted $C_1$-$C_{16}$ alkyl ; unsubstituted $C_2$-$C_{16}$ alkenyl ; and substituted $C_2$-$C_{16}$ alkenyl ; wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_{16}$ alkoxy, $C_1$-$C_{16}$ alkanoyloxy, aryloxy of up to 10 carbon atoms, $C_3$-$C_6$ alkenoyloxy, aroyl of up to 10 carbon atoms, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$ cycloalkoxycarbonyl, oxacycloalkyl of up to 7 carbon atoms, oxacycloalkoxy of up to 7 carbon atoms, oxacycloalkoxy (up to 7 carbon atoms)-carbonyl, oxacycloalkyl (up to 7 carbon atoms)-carbonyloxy, and aryl (of up to 10 carbon atoms)-oxycarbonyl, each of said alkyl and alkenyl substituents being, in turn, optionally substituted by $C_1$-$C_6$ alkyl, fluoro or a $C_1$-$C_6$ alkoxy provided said last mentioned alkoxy is not bound to a carbon atom already singly bound to another oxygen atom ; $R^3$, $R^4$, $R^7$-$R^{10}$, $R^{13}$-$R^{16}$, $R^{19}$ and $R^{20}$ being further independently selected from aryl of up to 10 carbon atoms, $C_3$-$C_8$ cycloalkyl, and oxacycloalkyl of up to 7 carbon atoms, each of which may be unsubstituted or further substituted with a substituent selected from the group of substituents for said $R^3$ alkyl set forth above ;

$R^5$, $R^6$, $R^{11}$, $R^{12}$, $R^{17}$ and $R^{18}$ are selected from the same group set forth above for $R^3$ ; and $R^5$, $R^6$, $R^{11}$, $R^{12}$, $R^{17}$ and $R^{18}$ are further independently selected from $C_1$-$C_{16}$ alkoxycarbonyl, $C_3$-$C_{16}$ alkenoyloxy, $C_2$-$C_{16}$ alkenyloxycarbonyl, and $C_1$-$C_{16}$ alkanoyloxy, each of which may be further substituted by fluoro, aryl of up to 10 carbon atoms, or $C_1$-$C_{16}$ alkoxy, and $R^5$, $R^6$, $R^{11}$, $R^{12}$, $R^{17}$ and $R^{18}$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyl, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyl, oxacycloalkyl (of up to 7 carbon atoms)-carbonyloxy, and aryloxy (of up to 10 carbon atoms)-carbonyl, each of which may be further substituted by fluoro, $C_1$-$C_6$ alkyl or $C_1$-$C_6$ alkoxy, provided that any substituent having a singly bound oxygen atom as its link to the rest of the molecule may not be a substituent on the same carbon atom which is singly bonded to another oxygen atom ; or 2 adjacent groups, selected from $R^3$-$R^{20}$, together with the atoms to which they are attached may form a 5-8 membered cycloalkyl, oxacycloalkyl or bicycloalkyl ring ;

each $R^{21}$ is independently selected from hydrogen, $C_1$-$C_4$ alkyl and phenyl, and is preferably hydrogen ;

each B and B' is selected from

$$-\overset{\overset{O}{\|}}{C}-, \quad -\overset{\overset{O}{\|}}{C}-O-; \text{ and } -\overset{\overset{O}{\|}}{C}NH-$$

with the carbonyl group being bound to A, S′, D or P′ ;

and each R is independently a divalent linking group preferably selected from

a) a divalent aliphatic group preferably alkyl, alkenyl or alkynyl, of up to 25 carbon atoms which may be interrupted by oxy, carbonyloxy, amino, aminocarbonyl, oxycarbonyl, ureido, oxycarbonylamino, or carbonylamino ;

b) a divalent 5-7 membered cycloaliphatic and 5-7 membered cycloaliphatic-$C_1$-$C_{20}$-aliphatic group ;

c) a divalent arylene group having 6-25, preferably 7-15 carbon atoms ; and

d) a divalent aralkyl or alkaryl group having 7 to 25, preferably 8-16 carbon atoms ;

e) a divalent alkylene-aryl-alkylene having 8 to 30 carbon atoms, wherein groups b), d) and e) can be optionally interrupted in their non-cyclic aliphatic and alkyl groups respectively by the same groups as in group a) and wherein the aryl rings in groups c), d) and e) may be further substituted with one or more substituents selected from halogen, preferably fluorine or chlorine, $C_1$-$C_4$ alkyl, preferably methyl, and $C_1$-$C_{12}$ perhalo alkyl, especially $C_1$-$C_{12}$ perfluoro alkyl ; and wherein an interrupting group set forth in group a) may be present between the cyclic and non-cyclic portions of groups b), d) and e).

The monomer preferably has segments of formula Ib,

$$-(D\text{-}A\text{-}L\text{-}S'')_c- \qquad (Ib)$$

or of formula Ic,

$$-(S'')_c\text{-}D\text{-}S'\text{-}La- \qquad (Ic)$$

or of formula Id

$$-(D\text{-}A\text{-}L)\text{-}(S'')_c- \qquad (Id)$$

even more preferably said monomer is of formula I,

$$L'\!-\!\!\left[(D\text{-}A\text{-}L)_e\text{-}S''\right]_c\!\!-L'' \qquad (I)$$

and more preferably said monomer being divinylic ; wherein D, A, L, S′, S″ are as defined hereinbefore ; and wherein c is 1 to 10 ; e is zero or one ; a times c is 1 to 10 ; La is selected from –BRB′– and –BR– ; L′ is hydrogen, P′-R–, P′-BR–, P′-RB′–, or P′-BRB′– ; and L″ is hydrogen, or –P′, or, in case that e is zero, also –D-S′-BR-P′ or –D-S′-P′ and wherein P′ is hydrogen, amino, hydroxy, NCO, NCS, vinyl or a moiety containing a crosslinkable group which may be crosslinked when coreacted with a suitable crosslinking agent or when irradiated by actinic radiation.

In the foregoing, all alkyl groups whether mentioned alone or as part of another group are preferably $C_1$-$C_4$ alkyl, such as methyl, ethyl, propyl and butyl, especially t-butyl, with the exception that adjacent groups on aryl rings cannot each be t-butyl. These alkyl groups may be straight chain or branched chain. When the alkyl is a substituent on a phenyl ring, it is preferably attached at the para position. Preferably alkenyl groups, whether alone or as part of another group, are $C_2$-$C_4$ alkenyl, such as ethenyl, propenyl and butenyl. Preferred aryl groups (whether alone or as part of another group) are phenyl and naphthyl, more preferably phenyl. Preferably

the aryl groups are still further substituted by $C_1$-$C_4$ alkyl, more preferably t-butyl, most preferably in the para position. Halogen may be chloro, bromo, iodo and fluoro.

Preferably b, d and f are independently 0-3, more preferably 0-2, most preferably 0 or 1. While the group identified by formula I may be highly halogenated, it is preferably at least 25% halogen free, more preferably 30%, still more preferably 40%, and most preferably substantially halogen free. Wherever cyclo groups are indicated, whether carbocyclic or heterocyclic they preferably have 5-6 ring members and the heterocyclics preferably have only carbon atoms and an oxygen atom as ring members.

Bicycloalkyl is understood to cover those groups when two adjacent R groups in a segment of formula III together form a ring and one of them already is a cycloalkyl group. In other words a fused ring system made up of two geminal R groups and the carbon atom to which they are attached results. For example if $R^3$ is cyclopropyl and $R^4$ is methyl then $R^3$ and $R^4$ together with the carbon to which it is attached could be (2,1,0) cyclopent-2,2-diyl.

In formula I, when b is greater than one, each of the multiple $R^5$ and $R^6$ groups may be the same or different; however preferably all of the $R^5$ groups are the same and all of the $R^6$ groups are the same. The same is true with respect to d, $R^{11}$, and $R^{12}$ ; and f, $R^{17}$, and $R^{18}$.

Preferably, each of b, d and f is independently an integer of 0 to 2, and most preferably zero or one.

In one aspect of the invention, each of $R^3$-$R^7$, $R^9$-$R^{13}$ and $R^{15}$-$R^{19}$ is hydrogen. Preferably the substituents $R^8$, $R^{14}$ and $R^{20}$ are alkyl of up to 16 carbon atoms ; alkyl of up to 16 carbon atoms substituted by alkoxy of up to 8 carbon atoms, or fluoro ; phenyl which is unsubstituted or substituted by fluoro, alkoxy of up to 6 carbon atoms or alkyl of up to 6 carbon atoms ; benzyl wherein the phenyl ring thereof is unsubstituted or substituted by fluor, alkoxy of up to 6 carbon atoms or alkyl of up to 6 carbon atoms ; cyclohexyl ; or oxacycloalkyl or 4 or 5 ring carbon atoms.

A highly advantageous subembodiment relates to wettable, ophthalmic devices, preferably contact lenses, fabricated from a polymer of formula I wherein A is of the formula IV,

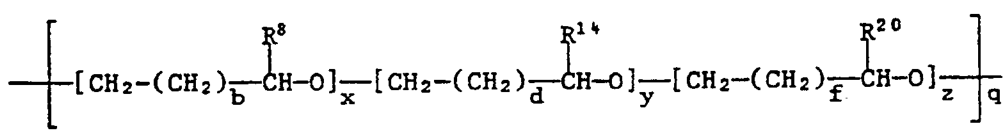

IV

wherein b, d, f, q, x, y, z, $R^8$, $R^{14}$ and $R^{20}$ are as defined above. There are two very highly advantageous embodiments having formula IV which are represented by either formula V

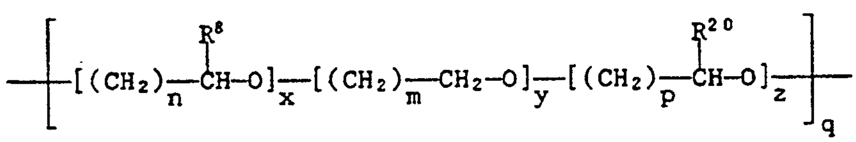

(V)

wherein n is b + 1 ; m is d + 1, p is f + 1 ; n, m and p each independently being preferably 1-3, more preferably 1 or 2, most preferably 1 ; and x, y, z and q are as defined above ; $R^8$ and $R^{20}$ are hydrogen or one is, but preferably both are, an aliphatic, aromatic, or heterocyclic radical, preferably alkyl of up to 6 carbon atoms, alkyl of up to 6 carbon atoms substituted by alkoxy of up to 6 carbon atoms or fluoro ; phenyl which is unsubstituted or substituted by fluoro, alkoxy of up to 6 carbon atoms or alkyl of up to 6 carbon atoms ; benzyl wherein the phenyl ring thereof is unsubstituted or substituted by fluoro, alkoxy of up to 6 carbon atoms or alkyl of up to 6 carbon atoms ; cyclohexyl or oxacycloalkyl of 4 or 5 ring carbon atoms ; or which are represented by formula VI

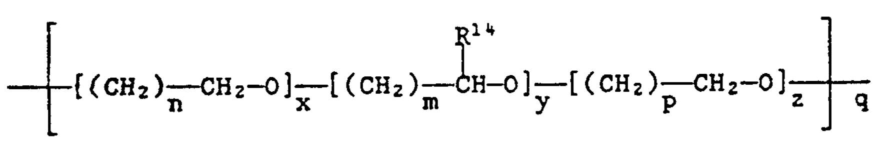

(VI)

wherein n, m, p, x, y, z and q are as defined above for formula V and $R^{14}$ is preferably selected from the same group as $R^8$ in formula V.

In the foregoing it is to be understood that the units of x, y and z may be positioned randomly, in block segments, or alternately.

Another preferred embodiment corresponds to formulae IV, V and VI wherein z is zero.

Desirably, the polymer segments of formula III or IV in the completed polymer are predominantly and preferably substantially devoid of free hydroxyl groups in the interior of the polymer as such groups tend to reduce oxygen permeability.

Free hydroxy groups on the outer surfaces of the formed polymer are acceptable as they increase wettability without drawing water into the polymer matrix. However, it is still preferable to have as few free hydroxy groups in the finished polymer as practical if a contact lens having high oxygen permeability is to be prepared. This is balanced against the desirability of increased water content and therefore, for particular purposes, varying levels of internal hydroxy groups may be acceptable. A suitable means of tying up the excess undesired, free hydroxy groups present would be to interact them with a color group.

Typical color groups useful in these embodiments include, but are not limited to, the hydroxy-reactive dyes known in the art under the tradename Remazol, manufactured by American Hoechst. Examples of the Remazol dyes which are especially useful are :

| Dye | Color Index Code |
|---|---|
| Remazol Brill Blue RW | Reactive Blue 19 |
| Remazol Yellow GR | Reactive Yellow 15 |
| Remazol Black B | Reactive Black 5 |
| Remazol Golden Orange 3GA | Reactive Orange 78 |
| Remazol Turquoise P | Reactive Blue 21 |

all of which have at least one group of the formula

$$-SO_2-CH_2CH_2O-SO_3^{\ominus}$$

which reacts with the polymer or monomer hydroxy group to yield a

$$\text{dye}-SO_2-CH_2-CH_2-O-\text{polymer} \quad \text{or} \quad \text{dye}-SO_2-\underset{}{\overset{CH_3}{\overset{|}{C}}}H-O-\text{polymer}$$

group, preferably the former. In such a manner, both excess free hydroxy groups are disposed of and colored contact lenses can be realized simultaneously. The color group or former can be reacted with monomer before the monomer is incorporated into the structure of formula I or afterwards. Another means of disposing of these excessive hydroxy groups is to utilize their presence to form various degrees and types of crosslinking.

When polymers resulting from monomers of formula I polymerized or copolymerized in the absence of hydrophilic monomer, as defined below, have a water content greater than at least 10% they can be utilized as is. However, such non-hydrophilic modifying monomer containing polymers having a fully swollen water content of less than 10% are not suitable and must be modified by a hydrophilic modifier.

Such compounds of formula I are modified by reacting them with or polymerizing them with a coreactive or copolymerizsable hydrophilic modifier. The hydrophilic modifier may be introduced by being coreactive with a functional group present in one or more of R, $R^3$-$R^{21}$ and/or with a functional group within L′ and/or L″. When the hydrophilic modifier is monofunctionally reactive (other than a vinylic unsaturation), it merely modifies the polymer properties and terminates a chain or sidechain at that point. When the hydrophilic modifier is di- or polyfunctionally reactive, i.e. contains more than one coreactive functional group or at least one coreactive vinylic group, the modifier can also act as a copolymerizable monomer and/or crosslinking agent. However, the hydrophilic modifier need not be the only crosslinking agent, nor need it be the only copolymerizable monomer present. When other such agents are employed any of the conventional crosslinking agents and coreactive

monomers may be used in minor amounts.

In any event, the polymer resulting from the polymerization of the monomer of formula I should not be crosslinked in excess of 25%, preferably not in excess of 20%, more preferably not in excess of 15%, still more preferably not in excess of 10%, even still more preferably not in excess of 5%, and most preferably in the range of 2-3%.

The purpose of the hydrophilic modifier is to maintain the water content of the resulting polymer to at least 10% when swollen in its normal environment of use. For those polymers which absent the hydrophilic modifier already meet this limit, its purpose is to increase the water content of the polymer material over that when the hydrophilic modifier is absent. However, if the polymer, without the hydrophilic modifier, is sufficiently hydrophilic, i.e. the water content is at least 10%, it need not be present, but preferably is. Whether the hydrophilic modifier is needed or not, and the amount which is needed, is dependent upon the polymer water content and other hydrophilic properties desired. Preferably, the hydrophilic modifier is present, in accordance with the above in an amount of from zero to about 50% by weight, preferably about 1% to about 30%, more preferably about 5% to about 25%, still more preferably about 10% to about 15% of the resultant polymer.

In addition to the hydrophilic modifier, other comonomers which may be present in the polymer are monomers coreactive with the monomer of formula I exclusive of monomers which are hydrophilic modifiers. Such additional monomers may be present in a minor amount of up to about 20% by weight of the resultant polymer. When such comonomers are excessively hydrophobic, additional hydrophilic modifier may be incorporated so as to achieve the appropriate water content.

The hydrophilic modifier is a monomer which is coreactive with a monomer of formula I and is typically selected from

aa) polyethylene glycols of the formula

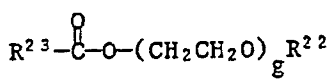 (A)

or ab) pyrrolidones of the formula

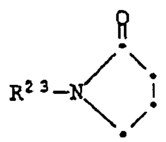 (B)

wherein $R^{22}$ is hydrogen or $C_1$-$C_7$ alkyl, preferably $C_1$-$C_4$ alkyl, g is an integer of from 1-25,

or ac) a compound of the formula

$$(R^{24}\text{-div})_{nz}Hy \quad (C)$$

wherein $R^{23}$ is a polymerizable or reactive moiety selected from i) ethylenically unsaturated radicals, preferably vinyl, 1-methylvinyl, 2-methylvinyl, or allyl, ii) anhydrides, iii) amines, iv) acids, v) esters, vi) amides, vii) ethers, viii) acid halides,

$R^{24}$ is selected from the meanings given for $R^{23}$ and ix) epoxy groups, especially glycidyl, x) isocyanates and isothiocyanates and xi) hydroxy ;

div is selected from

ba) a divalent aliphatic group of up to 25 carbon atoms, preferably alkyl, alkenyl or alkynyl, which may also be interrupted, or terminated, or interrupted and terminated by oxy, carbonyloxy, amino, aminocarbonyl, oxycarbonyl, ureido, oxycarbonylamino, or carbonylamino ;

bb) a divalent 5-7 membered cycloaliphatic and 5-7 membered cycloaliphatic-$C_1$-$C_{20}$-aliphatic group which may also be interrupted, terminated, or interrupted and terminated as in group ba) above except that said interruptions cannot occur within said cycloaliphatic portions ;

bc) a divalent arylene group having 6-25 carbon atoms which is unsubstituted or substituted by at least one substituent selected from halogen, $C_1$-$C_4$ alkyl, and $C_1$-$C_{12}$ perhaloalkyl ;

bd) a divalent aralkyl or alkaryl or alkylene-aryl-alkylene having 7-25 carbon atoms which is uninterrupted or interrupted in the alkyl portion, or terminated, or interrupted in the alkyl portion and terminated with an interrupting or terminating group as mentioned in ba) above, and each of said uninterrupted, interrupted,

and terminated aralkyl and alkaryl groups is further unsubstituted or substituted by a substituent selected from halogen, $C_1$-$C_4$ alkyl, and $C_1$-$C_{12}$ perhaloalkyl ;

be) 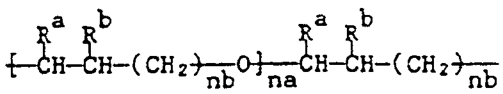 (D)

wherein na is an integer of 8-100 ; and

bea) $R^a$ is hydrogen, $R^b$ is methyl, nb is zero ; or

beb) $R^a$ is methyl, $R^b$ is hydrogen, and nb is zero ; or

bec) $R^a$ and $R^b$ are hydrogen and nb is one ; even more preferably div is selected from

$-(CH_2)_2NHCOO(CH_2)_2-$;

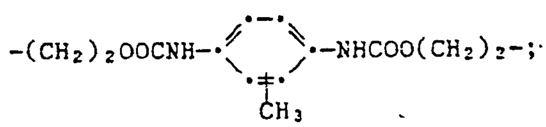

$-(CH_2)_2NHCO-$; and

$-(CH_2)_2NHCO(CH_2)_2-$;

nz is an integer of 1 up to the valence of Hy and where nz is less than the valence of Hy, the remaining valences of Hy are taken up with hydrogens ;
and Hy is a hydrophilic group selected from
ca) morpholino ; cyclic amide radicals of 5-7 ring members ; saturated and unsaturated cyclic N,N-diamide radicals of 5-6 ring members ; groups of the formula

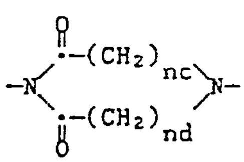 (E) or 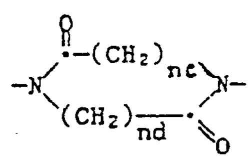 (E')

having 6-7 ring members wherein nc and nd are selected from 0-2 ; and cyclic amines of 5-6 ring members; each unsubstituted or substituted by hydroxy-$C_1$-$C_5$ alkyl, carboxy, or lower alkyl ;
cb) tetrahydrofurfuryl ;
cc) mono-, di-, and polysaccharide radicals, whether straight chain or cyclic, their corresponding sugar alcohol radicals, pentaerythritol radicals, and polyvinyl alcohol radicals ; and
cd) polyhydroxy $C_2$-$C_7$ alkyl radicals ; and said reactive group $R^{23}$ or $R^{24}$ is capable of reacting with one or more sites in said formula I.
Preferably the hydrophilic modifier has $R^{24}$ selected from

ia) 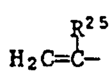

and the terminus of div to which it is bound is $-C(O)R^{26}$, the carbonyl being bound to $R^{24}$, where $R^{25}$ is hydrogen or methyl and $R^{26}$ is –O–, or $-NR^{27}-$ with $R^{27}$ being hydrogen or lower alkyl ;
ib) $H_2C=CH-$ and the terminus of div to which it is bound is

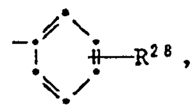

the left hand bond being bound to $R^{24}$, wherein $R^{28}$ is $-O-$, $-NR^{27}-$, $-C(O)-$,

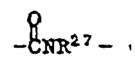

or $-C(O)O-$ ; and

ic) 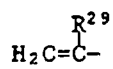

and the terminus of div to which it is bound is $-C(O)R^{30}-$, the carbonyl being bound to $R^{24}$ wherein $R^{30}$ is lower alkylene or $-[CH_2CH(\text{loweralkyl})-]O_{1-5}-$ and $R^{29}$ is hydrogen, lower alkyl, or cyano ;
and has Hy selected from
ce) morpholino which is unsubstituted or mono- up to tetra-substituted by lower alkyl, preferably methyl or ethyl ;

cf) 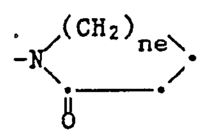

wherein ne is one, two, or three, preferably 1, each of which is unsubstituted or substituted, preferably mono- or disubstituted, by lower alkyl, preferably methyl or ethyl ;

cg) 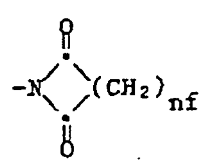

where nf is 2 or 3, preferably 2, each of which is unsubstituted or substituted by lower alkyl, preferably methyl or ethyl ;
ch) a divalent group of the formula

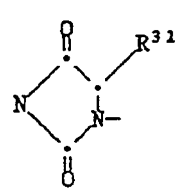 , 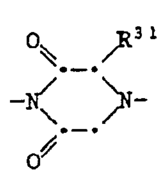 , 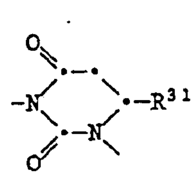

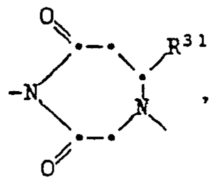,  or  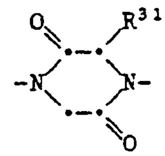

wherein $R^{31}$ is hydrogen or carboxy ;

ci) 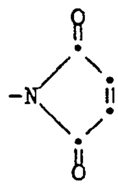 ,

cj) 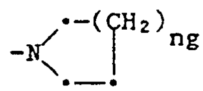

where ng is one or two, each of which is unsubstituted or substituted by lower alkyl, preferably methyl or ethyl ;

ck) 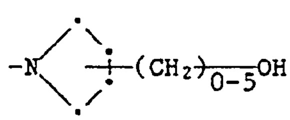 ;

cl) a polyol selected from polyvinyl alcohol radicals,

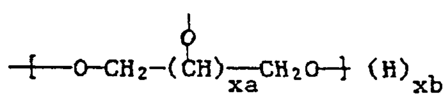

wherein

xa is 2-10, preferably 3-4, and xb is an integer from zero, preferably at least 0.5 times xa up to xa + 1 inclusive, the cyclic saccharide analogs thereof, the di-tetra saccharides thereof, preferably having saccharide-saccharide links between the 1 and 4 carbon positions thereof, preferably β-linkages, $C(CH_2O)_4(H)_{xc}$ wherein

xc is 0-3, and polyhydroxy lower alkylene glycol radicals wherein up to 50%, preferably up to 25%, more preferably up to 10%, of the hydroxy groups are missing their alcoholic hydrogens.

Most preferably the hydrophilic modifier of formula (C) is selected from

aca) 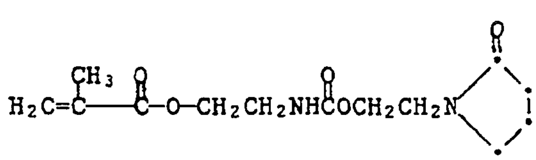 ,

acb)

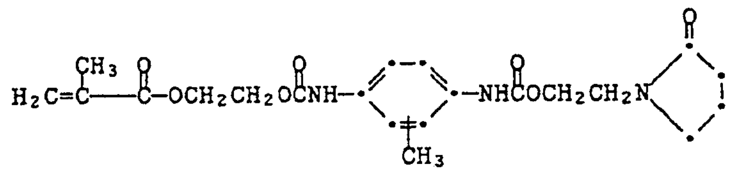 ,

acc) 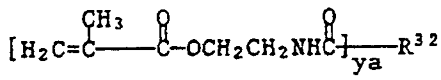

wherein $R^{32}$ is

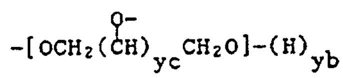

in which yc is 1-6, preferably 3-4 and yb is 0 up to (yc + 1), preferably (yc – 1) to (yc + 1), more preferably yc to (yc + 1), ya is 1 up to (yc + 2 – yb),

acd) 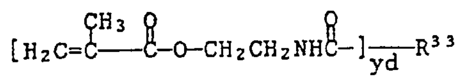

wherein $R^{33}$ is $C(CH_2O)_4(H)_{4-yd}$ and yd is 1-4, preferably 1-2 ;

ace) polyvinyl alcohol having at least one and up to 50% preferably 25%, more preferably 10%, inclusive, of the alcoholic hydrogens thereof absent ;

acf) 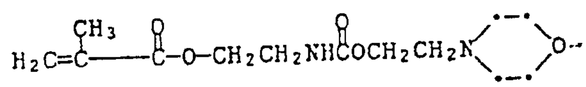 .

Preferably, when P′ is a vinyl containing group or one or more of the aforementioned R groups contain an ethylenically unsaturated group, for example preferably

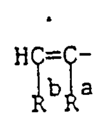

with one of $R^a$ and $R^b$ being methyl or hydrogen and the other being hydrogen, then the monomer of formula I can be crosslinked in the presence of a vinylic group containing hydrophilic modifier and/or vinylic group containing crosslinking agents.

When P′ is

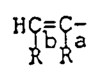

with $R^a$ and $R^b$ as defined above or contains such a group

(i.e. 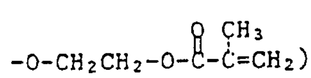),

then the monomer of formula I can be crosslinked in the presence or absence of up to less than about 50%, preferably up to about 30%, most preferably up to about 10% by weight of vinylically unsaturated hydrophilic modifiers and/or other vinylic comonomers.

When P′ does not have a vinylic group, but takes in crosslinking, P′ contains e.g. an active hydrogen. In such cases, P′ preferably terminates in an OH, $NHR^c$ ($R^c$ being hydrogen or lower alkyl), a leaving group bound directly to the B or B′ carbonyl, a conventional acyl leaving group when not so bound, SCN– or OCN–. Crosslinking is then typically carried out by condensation or addition with a di- or polyfunctional coreactive monomer which may or may not be a hydrophilic modifier. For example, when P′ is OH, then the coreactive monomer functional group can be $-NHR^c$, –COOH, OCN–, SCN–, etc. ; when P′ is $NHR^c$, the reactive comonomer functional group can be a conventional acyl, or acyl bound to a conventional leaving group ; and when P′ has OCN– or SCN–, then the reactive comonomer functional group can be OH. Similarly, the other coreactive functional groups mentioned in terms of either P′ or the coreactive monomer can be interchanged (those mentioned as part of P′ being on the coreactive monomer and those mentioned as part of the coreactive monomer being part of P′).

Suitable vinylic comonomers and coreactive monomers for condensation are set forth below. However, the list is not exhaustive and those of ordinary skill will appreciate the modifications, additions, and alternatives which may also be employed.

When either or both L′ or L″ are hydrogen, or terminate in P′ with P′ being hydrogen, at least one additional crosslinkable moiety must be present as one of, or as substituent on one of, the groups $R^3$-$R^{20}$. Such crosslinkable groups may also be present as a substituent on or in place of one or more of $R^3$-$R^{20}$ even when one or both of L′ and L″ have crosslinkable groups therein. However, the degree of crosslinking in the finished crosslinked polymer should not exceed 20%, preferably not more than 10%, more preferably not more than 5% and should be still more preferably in the range of 1-4%, most preferably in the range of 2-3%.

Within the polymer fabricated from monomers of formula I, not more than 20-70%, preferably not more than 50% of the A groups are polyethylene glycol.

The number of A units and the chain length and nature of the substituents on the polyoxyethylene segment is determined by the degree of wettability desired in the polymer of the compound of formula I. In general, the polymer should be sufficiently hydrophilic in its surface properties such that the polymer exhibits a contact angle with distilled water at 20°C of less than 60°, preferably less than 40°, more preferably less than 25°, still more preferably less than 15°, most preferably less than 10°.

The greater the number of siloxane units, the greater the number of oxyalkylene units is generally required to reduce the contact angle to within the above limits.

As water is taken up, the oxygen permeability of the polymers tends to be reduced. However, with the water content and swellability increased due to hydrophilic modifier the drop in Dk over the low water content analogs is surprisingly less drastic than would otherwise be expected. Advantageously, the instant polymers absorb at least 10% by weight water, preferably 15-90% by weight, more preferably 20-85% by weight, still more preferably 25-75% by weigth, most preferably 35-55% by weight water.

Highly preferred are those polymers which exhibit a contact angle of less than 25°, more preferably less than 15° and most preferably less than 10°.

Preferred crosslinked polymers are those consisting essentially of a polymer of a divinylic monomer according to formula I wherein $R^1$ and $R^2$ are methyl, h and i are 2 to 4, v is 2-20 ; b, d and f are zero ; $R^3$, $R^4$ are hydrogen ; $R^8$, $R^{14}$ and $R^{20}$ are independently alkyl of up to 8 carbon atoms, (x + y + z) multiplied by q is 4-40 and P′ is :

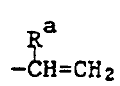

with $R^a$ being hydrogen or methyl.

Very highly advantageous are those polymers of reactive vinylic monomers of the formula VII,

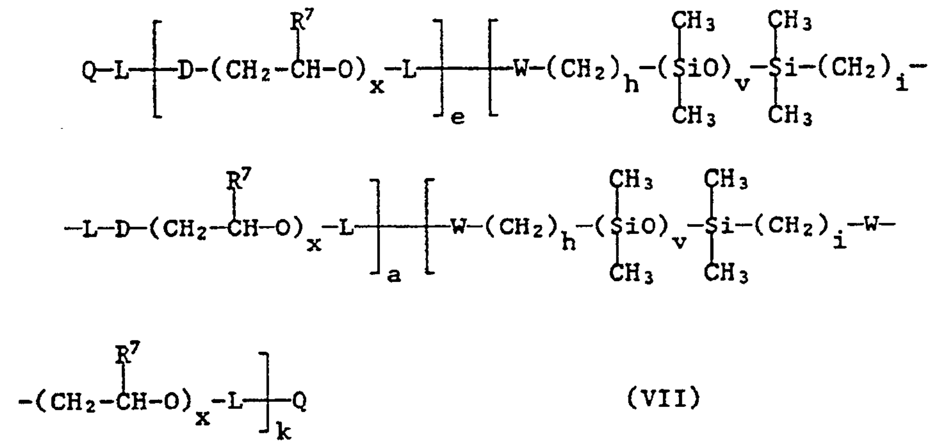

(VII)

where Q is 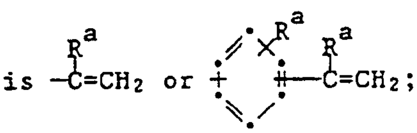 or ;

one of e and k is one and the other zero ; $R^a$ is hydrogen or methyl ;
each R is a divalent arylene group of 6 to 15 carbon atoms, a divalent $C_6$-$C_{10}$-arylene-amino carbonyloxy-$C_2$-$C_6$ alkylene ;
or divalent $C_3$-$C_{15}$ cycloaliphatic ;
L is BRB′, BR or RB′ and
B and B′ are each

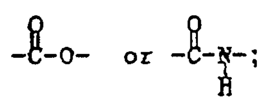

each $R^7$ is alkyl of 1 to 6 carbon atoms, or mixtures thereof with units wherein $R^7$ is hydrogen, preferably with the proviso that $R^7$ can be hydrogen in no more than about 75%, more preferably 50%, still more preferably no more than 30%, of the units ;
each x is 2-200, preferably 4-75, more preferably 6-70, most preferably 8-66 ; v is 2-300, preferably 2-75, more preferably 2-25, still more preferably 2-20, and most preferably at least 6 ; i and h are independently 2, 3 or 4; and a is an integer of 1-10, preferably 1-8, more preferably 1-6, still more preferably 1-4, most preferably 1-2.

Within this very highly advantageous embodiment, $R^a$ is most preferably methyl ; R is most preferably -phenylene-, $-CH_2CH_2OCONH$-phenylene- or $-CH_2CH_2OCONH$-tolylene- ; $R^7$ is methyl, x is most preferably 60 to 66 ; v is most preferably 15 to 20 ; a is most preferably 1 to 3 ; k is most preferably zero ; and e is most preferably one.

Within formula VII preferably k is zero, e is one, a is 1 to 3, Q is $H_2C = C(R^a)$ – wherein $R^a$ is hydrogen or methyl, L is –BR– or –RB′– wherein B and B′ is –CONH– and R is phenylene, D is oxygen, W is a bond, $R^7$ is methyl or hydrogen with the above proviso, x is 2 to 200, h and i are each 2 and v is 2 to 75.

A very highly preferred embodiment are those polymers from monomers of formula VII wherein each

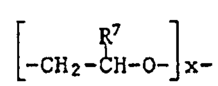

group is of the formula

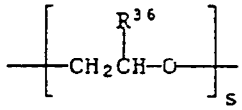

wherein $R^{36}$ is alkyl of 1 to 4 carbon atoms, most preferably methyl, and s is from about 6 to about 200, preferably from about 25 to about 100, and most preferably from about 50 to about 75.

Also highly preferred are those polymers of monomers of formula VII wherein each

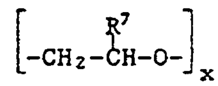

group is of the formula VIII

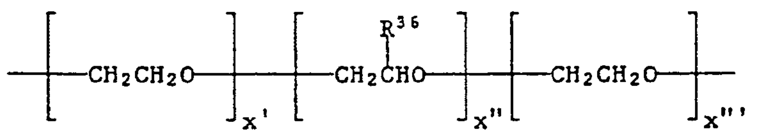

(VIII)

wherein x' is from about 2 to about 20, x" is from about 8 to about 100, and x"' from about 4 to about 80. Another valuable embodiment requires the value of x" to be at least about twice that of x' or x"' and $R^{36}$ to be alkyl of 1 to 4 carbon atoms, preferably methyl.

The reactive vinylic monomers of formula I can characteristically be polymerized to form crosslinked polymers under conventional polymerization conditions.

If desired, the monomer reaction mixture may contain a catalytic amount of a conventional polymerization catalyst, preferably a free radical catalyst. Of particular interest are conventional peroxide and azo catalysts, such as hydrogen peroxide, benzoyl peroxide, tert-butyl peroctoate, benzoyl peroxide or azobis(isobutyronitrile).

The polymerization can generally be carried out at temperatures between about 20° and about 150°C, for a period between about 1 and about 24 hours. It is understood that the time and temperature in such a reaction are inversely related. Thus, temperatures employed in the upper end of the temperature range will generally provide reaction times near the lower end of the time range. Preferably, the polymerization is conducted in the presence of actinic radiation, such as UV light.

Depending upon the nature of the polymer mixture, it may be desirable for the polymers obtained from such polymerizations to be post cured, e.g. at a somewhat elevated temperature such as between about 60°C and about 150°C.

For the preparation of contact lenses, the polymer mixture may be cast directly in the shape of the lens, or the polymerization may be carried out in a mold having a shape convenient for further processing, such as in the shape of small cyclinders or "buttons", which can then be machined.

Minor amounts i.e. less than 50%, preferably up to 30%, and most preferably up to no more than about 10% by weight, of conventional copolymerizable vinyl monomers other than hydrophilic modifiers, can be employed as extenders or the like, in the preparation of the instant polymer, as copolymer constituents. However, if the total hydrophilic modifier content is within the foregoing limits, the hydrophilic modifiers can also be used as such extenders. Suitable vinyl monomers include :

acrylates and methacrylates of the general formula

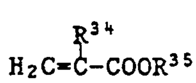

where $R^{34}$ is hydrogen or methyl and $R^{35}$ is a straight chain or branched aliphatic, cycloaliphatic or aromatic group having up to 20 carbon atoms which is unsubstituted or substituted by one or more alkoxy, alkanoyloxy or alkyl of up to 12 carbon atoms, or by halo, especially chloro or preferably fluoro, or $C_3$-$C_5$ polyalkyleneoxy

of 2 to about 100 units ;
acrylamides and methacrylamides of the general formula

$$H_2C{=}C(R^{34}){-}CONHR^{35}$$

where $R^{34}$ and $R^{35}$ are as defined above ;
vinyl ethers of the formula

$$H_2C{=}CH{-}O{-}R^{35}$$

where $R^{35}$ is as defined above ;
vinyl esters of the formula

$$H_2C{=}CH{-}OOC{-}R^{35}$$

where $R^{35}$ is as defined above ;
maleates and fumarates of the formula

$$R^{35}OOC{-}HC{=}CH{-}COOR^{35}$$

where $R^{35}$ is as defined above ;
and vinylic substituted hydrocarbons of the formula

$$R^{34}CH{=}CHR^{35}$$

where $R^{34}$ and $R^{35}$ are as defined above.

Useful monomers include, for example :

methyl-, ethyl-, propyl-, isopropyl-, butyl-, ethoxyethyl-, methoxyethyl-, ethoxypropyl-, phenyl-, benzyl-, cyclohexyl-, hexafluoroisopropyl-, or n-octyl-acrylates and -methacrylates as well as the corresponding acrylamides and methacrylamides :

dimethylfumarate, dimethylmaleate, diethylfumarate, methyl vinyl ether, ethoxyethyl vinyl ether, vinyl acetate, vinyl propionate, vinyl benzoate, acrylonitrile, styrene, alphamethyl styrene, 1-hexene, vinyl chloride, vinyl methyl ketone, vinyl stearate, 2-hexene and 2-ethylhexyl methacrylate.

Most preferably, the instant polymers are free from copolymer units of such conventional vinyl monomers which are not hydrophilic modifiers.

The vinylic monomers of formula I can be prepared by methods known, per se.

For example, the siloxane/polyalkylene oxide containing divinylic monomers of formula I may be prepared by reacting a siloxane diol of the formula HO-(S')-H, wherein –S'– is a group of the formula II as defined hereinbefore with a sufficient amount of a difunctional reactive group containing compound having the group –X– or –X-Y–, wherein the difunctional reactive groups are isocyanate ; activated carboxy, such as an anhydride, an acid halide or a carboxy ester ; or is a leaving group, such as a halide, sulfato or the like, to form the corresponding reactive group containing endcapped derivative.

The resulting endcapped siloxane derivative can then be reacted with a polyoxyalkylene diol of the formula HO-(A)-H, wherein –A– is a group of the formula III above to form the corresponding polyoxyalkylene-siloxane-polyoxyalkylene diol. This diol can then be reacted with a reactive group containing vinylic monomer having the terminal $H_2C{=}C(R^a)$-L-moiety, wherein the reactive group is an isocyanate ; activated carboxy, such as an anhydride, an acid halide or carboxy ester, or is a leaving group such as halo, sulfato or the like to form the corresponding divinyl derivative where a is 1. Alternatively, the aforementioned polyoxyalkylene – siloxane – polyoxyalkylene diols can be further sequentially reacted with a further difunctional reactive group containing compound having the group –BR– or –BRB'-D– to form the corresponding di-functional reactive endcapped derivative which is then reacted with a siloxane diol of the formula HO-(S')-H. One may continue building up alternative polyoxyalkylene/siloxane unit containing diols in this manner, corresponding to the value of either "c(a plus e)" or c(a plus k)". Then this diol may be endcapped with a reactive group containing vinylic monomer having a terminal $H_2C{=}C(R^a)$-L– moiety or the diol reacted with a sufficient amount of difunctional reactive group containing compound to endcap the diol with a reactive group, such as eg. an isocyanate, etc. group which is then reacted with the appropriate vinylic containing compound, such as a vinylic amine or alcohol, or other

copolymerizable monomer having a crosslinkable group to obtain the corresponding product of formula I.

Of course, instead of starting with a siloxane diol of the formula HO-(S')-H and building up the alternating sequence to the desired value of "a", one may instead begin with a polyoxyalkylene diol of the formula HO-(A)-H and, after endcapping the same with difunctional reactive groups, condense the same with the siloxane diol until the desired value of "e" is attained, and terminate the diol with vinylic groups as described above.

The above reactive vinylic monomers are characteristically polymerized under conventional polymerization conditions with a hydrophilic modifier of formula C or a mixture of a hydrophilic modifier of formula C and a copolymerizable monomer. In those vinylic monomers containing but one vinyl group, a minor amount e.g. from about 0.01 to about 5 weight percent, based on the monomer of formula I, of a conventional crosslinking agent, may be employed. Suitable crosslinking agents include diolefinic monomers such as :

Allyl acrylate and methacrylate, alkylene glycol and polyalkylene glycol diacrylates and dimethacrylates, such as ethyleneglycol dimethacrylate, diethylene glycol dimethacrylate, and propylene glycol dimethacrylate; trimethylol propane triacrylate ; pentaerythritol tetraacrylate, divinylbenzene ; divinyl ether ; divinyl sulfone ; bisphenol A diacrylate or dimethacrylate ; methylene bisacrylamide ; diallyl phthalate ; triallyl melamine and hexamethylene diacrylate and dimethacrylate. Also, such minor amounts of a crosslinking agent may be employed, if desired, in the polymerization of the di-vinyl monomer of formula I and VII.

When the monomers of formula I have free hydroxy, isocyanato, carboxylic or amine groups, suitable crosslinking agents contain di- or polyfunctional co-reactive groups to form addition or condensation reactions linking 2 or more chains.

If desired, the monomer reaction mixture may contain a catalytic amount of a conventional catalyst, preferably a free radical catalyst. Of particular interest are conventional peroxide and azo catalysts, such as hydrogen peroxide, benzoyl peroxide, tert-butyl, peroctoate, benzoyl peroxide or azobis (isobutyronitrile).

The aforementioned reactions are generally straight forward additions or condensations and are typically conducted at a reaction temperature between about −10°C and about 100°C, depending upon the relative reactivity of the species involved, in the presence or absence of an inert diluent and in the optional presence of an addition or condensation catalyst if desired or appropriate. For reactions involving an isocyanate or acid halide, with a diol, for example, suitable optional catalysts include pyridine and triethylamine.

In a further subembodiment, the ophthalmic device, preferably contact lens, is fabricated from a polymer consisting essentially of an addition product of a monomer of formula I in which L' and L" are other than ethylenically unsaturated and

a1) a monomer of formula F

$$(E^1)_t\text{-}G^1, \quad (F)$$

wherein t is an integer of 2 to 4 ;

$G^1$ is an aliphatic, aromatic, araliphatic, carbocyclic or heterocyclic residue having a valency corresponding to the value of t and containing up to about 24 carbon atoms, or, where t is 2, may also represent a divalent group of the formula

$$-Y^1-D-(A-L-D)_w-A-Y^1- \quad ;$$

wherein A, L and D are as defined above, w is a number from 0 to 8, $Y^1$ is a divalent aliphatic group of up to 14 carbon atoms which may be interrupted by oxy, carbonyloxy, amino, aminocarbonyl, oxycarbonyl, ureido, oxycarbonylamino or carbonyl ; a divalent aliphatic hydrocarbylcarbonyl or -aminocarbonyl group of up to 14 carbon atoms and wherein the carbonyl group thereof is covalently bonded to the adjacent oxygen or $-N(R^{21})-$ moiety ; a divalent 5 to 7-membered cycloaliphatic group of from 5 to 14 carbon atoms; a divalent arylene group of 6 to 14 carbon atoms ; a divalent aralkyl or alkaryl group of 7 to 14 carbon atoms; a divalent 5 to 7-membered cycloaliphatic-carbonyl or -aminocarbonyl group of from 6 to 15 carbon atoms, wherein the carbonyl group thereof is covalently bonded to the adjacent oxygen or $-N(R^{21})-$ moiety ; or a divalent arylene-, aralkyl- or alkaryl-carbonyl or -aminocarbonyl group wherein the arylene group is of 6 to 14 carbon atoms, the aralkyl or alkaryl group is of 7 to 14 carbon atoms, and the carbonyl group is covalently bonded to the adjacent oxygen or $-N(R^{21})-$ moiety ; or $Y^1$ is a direct bond where $E^1$ is hydrogen ;

$E^1$ is hydrogen, hydroxy, amino, isocyanato or isothiocyanato and $E^1$ is coreactive with L' or L" ; or

a2) a hydrophilic modifier of formula C wherein $R^{24}$ is coreactive with L' or L" ; or

a3) a mixture of a compound of formula F and formula C.

Advantageously, in order to insure adequate crosslinking, in one sub-embodiment there is employed at least a minor amount of those compounds wherein t is 3, for example at about 0.2% by weight based upon the

amount of compound of formula I employed. Generally, a stoichiometrically equivalent amount of the compounds of formula I and F is combined ; however, a slight excess of di- or polyisocyanate or -isothiocyanate may be employed to insure sufficient crosslinking to maintain dimensional stability in the product. As a further alternative, additional conventional crosslinking agents may be employed to insure sufficient crosslinking such that the product maintains dimensional stability. Thus, in addition to the compounds of formula I and F and C, there may also be added to the reaction mixture a minor amount, e.g. up to about 5 weight percent, of a conventional di-isocyanate or tri-isocyanate such as toluene di-isocyanate, isophorone di-isocyanate, 4,4'-methylenebis(phenyl isocyanate), methylenebis(cyclohexyl isocyanate), melamine tri-isocyanate, and the like. Alternatively, where a stoichiometric excess of isocyanate is employed in the reaction of C, I and F, a minor amount, e.g. up to about 5 weight percent, of a di- or polyfunctional amine or hydroxylated crosslinking agent may be employed. Suitably such crosslinking agents include, for example ethylene glycol, glycerin, diethylene glycol, ethylene diamine, ethanolamine, triethanolamine, diethanolamine and the like.

The addition reaction between the compounds of formula C, I and formula F and any additional crosslinker can be conducted under conditions known, per se. Thus, the compounds may be simply admixed, in the presence of an inert diluent if necessary or desired, at a reaction temperature between about 0°C and about 100°C, preferably between about 20°C and 80°C, optionally in the presence of a condensation catalyst, such as triethyl amine or di-n-butyltin diacetate.

In the preparation of opthalmic devices, such as contact lenses, the reaction mixture may be cast directly in the shape of the lens, or the polymerization may be carried out in a mold having a shape convenient for further processing, such as the shape of a small cylinder or "button", which can then be machined.

The compounds of the formula C and F are either known or can be prepared by methods which are known, per se.

The compounds of formula C are more fully described in concurrently filed U.S. patent application entitled HYDROPHILIC MODIFIER MONOMERS, invented by Frank Molock, Richard Robertson and Kai Su.

The siloxane diols of the formula HO-(S')-H are known in the art and many are commercially readily available.

Also, the polyoxyalkylene diols of the formula HO-A-H are known or can be prepared by known methods.

Thus, the polyols of the formula HO-A-H are generally prepared by the addition reaction of xq moles of an epoxide of the formula IX,

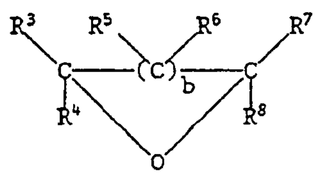

(IX)

where $R^3$-$R^8$, b, x, and q are as defined above, with yq moles of an epoxide of the formula X,

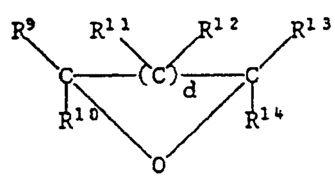

(X)

where $R^9$-$R^{14}$, d, y, and q are as defined above, and zq moles of an epoxide of the formula XI,

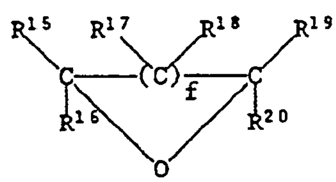

(XI)

wherein $R^{15}$-$R^{20}$, f, z, and q are as defined above, optionally in the presence of a conventional alkylation catalyst,

at atmospheric to elevated pressures of up to about 3000 kPa gauge, at temperatures between 0°C and about 130°C, optionally in the presence of an inert diluent. If desired, one may add to the reaction mixture, prior to the reaction of the epoxides, an aliphatic, aromatic or cycloaliphatic alcohol, acid or amine having up to 14 carbon atoms to prepare the corresponding mono-ols terminating in the group D.

The reaction between the epoxides, when mixtures of different epoxides are employed to obtain the polyol of the formula HO-A-H, can be conducted by admixing the epoxides to obtain random copolymers or terpolymers, etc., or the addition can be conducted sequentially to form block copolymers having terminal hydroxy groups. Suitable catalysts include alkaline earth oxides, alkaline earth carbonates, alkyl zinc compounds, aluminum alkoxides, hydrates of ferric chloride, bromide and acetate, and gamma radiation. The reaction may also be initiated by the presence of a glycol, such as ethylene glycol or propylene glycol or by a polyol of higher functionality such as sucrose, or by an amine, such as ethylene diamine, toluenediamine, and so forth. Generally the length of time of the reaction will depend in part on the alkylene oxide employed, but can generally be from less than one to several score hours. Thus, ethylene oxide generally is about three times as active as propylene oxide, which in turn reacts more rapidly than 1,2-butylene oxide. The preparation of polyoxetanes and polytetrahydrofurans is generally initiated via ring opening oxonium formation using trialkyloxonium salts, carboxonium salts, acylium salts and the like.

Suitable diols of the formula HO-A-H include those prepared from epoxides such as :

1,2-propylene oxide ; 1,2-butylene oxide ; 1,2-epoxydecane ; 1,2-epoxydodecane ; 1,2-epoxyoctane ; 2,3-epoxynorbornane ; 1,2-epoxy-3-ethoxypropane ; 1,2-epoxy-3-phenoxypropane ; 2,3-epoxypropyl 4-methoxyphenyl ether ; tetrahydrofuran ; 1,2-epoxy-3-cyclohexyloxypropane ; oxetane ; 1,2-epoxy-5-hexene ; 1,2-epoxyethylbenzene ; 1,2-epoxy-1-methoxy-2-methylpropane ; perfluorohexylethoxypropylene oxide ; benzyloxypropylene oxide, and the like. Also, the aforementioned epoxides may be employed as mixtures thereof. Further, certain cyclic ethers of formula IX, X or XI where b or d or f, respectively is 3 and the carbocyclic portion of the ring is substituted are resistant to polymerization alone, but copolymerize quite readily with more reactive cyclic ethers. Suitable co-monomers include, for example, 2-methyl-tetrahydrofuran and 3-methyl-tetrahydrofuran. Also, while ethylene oxide may be employed as a co-monomer, ethylene oxide polymers, in the absence of more hydrophobic units, is characteristically too hydrophilic and absorbs too much aqueous fluid to be of use in accordance with the instant invention. However, ethylene oxide/propylene oxide copolymeric diols wherein there is 30-80%, preferably greater than 50%, more preferably greater than 66% propylene oxide, on a mole basis, is sufficiently hydrophobic so as to be substantially non-swellable in aqueous media, and yet sufficiently hydrophilic so as to exhibit a contact angle with water of less than 60° ; preferably less than 40°, more preferably less than 25°, more preferably less than 15°, most preferably less than 10°.

Many polymer diols of the formula HO-A-H are commercially available. Thus, suitable diol products include poloxamers having the general formula

$$HO(CH_2CH_2O)_{a'}\text{-}(CH(CH_3)CH_2O)_{b'}\text{-}(CH_2CH_2O)_{c'}\text{-}H$$

wherein b' has a value between about 16 and 100 and the sum of a' and c' is between about 4 and about 100. Examples of such poloxamers, and their average values of a', b' and c', include poloxamer 101 (a' is 2, b' is 16, c' is 2) ; poloxamer 122 (a' is 5, b' is 21, c' is 5) ; poloxamer 181 (a' is 3, b' is 30, c' is 3) ; poloxamer 212 (a' is 8, b' is 35, c' is 8) ; poloxamer 231 (a' is 6, b' is 39, c' is 6) ; poloxamer 282 (a' is 10, b' is 47, c' is 10) ; poloxamer 333 (a' is 7, b' is 54, c' is 7) ; poloxamer 401 (a' is 6, b' is 67, c' is 6).

Such poloxamers are available, e.g. from BASF Wyandotte under their Pluronic® brand name. Also suitable are the "reverse poloxamers", having polyethylene glycol bounded on each side by polypropylene glycol.

Polypropylene ether glycols include commercially available products having a molecular weight range between about 400 and about 4,000.

As stated above, the polymers for use in the instant invention are those which exhibit a receding contact angle at 20°C of less than 60°, preferably less than 40°, more preferably less than 25°, more preferably less than 15° and most preferably less than 10°. The measurement of such contact angle is conveniently preformed using a modified "Wilhelmy Plate" technique, as described, for example, for J.D. Androde, et al. Surface and Interfacial Aspects of Biomedical Polymers, Vol. 1, Surface Chemistry and Physics, Plenum Press, 1985, wherein a specimen sample in the form of a plate of known dimensions is immersed into the wetting solution, pure water, at a slow controlled rate, e.g. at 2-20 mm per minute.

As mentioned above, the instant polymers for use in the present invention possess a high degree of oxygen permeability. The oxygen permeability, Dk($\times 10^{-10}$), is measured using a modification of ASTM standard D3985-81 in that (a) there is used 21% oxygen, i.e. air, instead of 99-100% oxygen, (b) the surface area of sample employed is 0.50 square meters versus 100 square meters and the humidity is controlled to be at 95-100% relative humidity instead of 0% relative humidity. The unit of Dk is (mm · ml $O_2$/cm$^2$ · sec · mmHg).

Typically, conventional fully swollen polyhydroxyethyl methacrylate lenses which are sparingly crosslinked possess a Dk(× $10^{-10}$), (mm · ml $O_2$/cm$^2$ · sec · mmHg) value of about 5-7.

The instant polymers for use as an opthalmic device, such as a contact lens, possess a Dk(× $10^{-10}$) value generally greater than 7-10, preferably greater than about 15, more preferably greater than about 20 and still more preferably greater than about 40, yet more preferably greater than 80, even more preferably greater than 100, most preferably at least 150.

The following examples are for illustrative purposes and are not to be construed as limiting the invention. All parts are by weight unless otherwise specified.

Examples 1-2 : Hydrophilic Precursor Preparation

Using the following procedure, Examples 1 and 2 are prepared with the components outlined in Table 1. To a 500 ml, 3-necked flask fitted with a constant pressure dropping funnel, condensor and nitrogen inlet and outlet adapters are charged all the styrene isocyanate, catalyst and 80% of methylene chloride. To the dropping funnel is added all the diol and 20 percent of the methylene chloride. The reaction system is sealed under nitrogen atmosphere, stirred magnetically and the contents of the dropping funnel added dropwise. After 18 hours the reaction is monitored via FT-infrared spectroscopy to insure that all the isocyanate band disappeared. Syntheses and analyses data for each example are shown in Tables I and II.

Table I

Synthesis Information for Examples 1 and 2

| Example | Diol (g) | Styrene Isocyanate | Stannous Octoate | Methylene Chloride |
|---|---|---|---|---|
| 1 | Poly(ethylene glycol) 300, 19.52 | 19.28 g | 0.05 g | 50 ml |
| 2 | Poly(propylene glycol) 425, 18.88 | 11.68 g | 0.05 g | 50 ml |

Table II

Analytical Data for Examples 1 and 2

| Example | GPC MWN | GPC MWW | GPC Poly-dispersity | Visual Appearance |
|---|---|---|---|---|
| 1 | 661 | 696 | 1.053 | Clear/faint yellow tint |
| 2 | 887 | 920 | 1.038 | Clear/colorless |

Example 3 : Silicone Block Copolymer Synthesis

To a 250 ml, 3-necked flask equipped with a condensor, constant pressure dropping funnel and nitrogen inlet and outlet adapters are added 50.89 g (0.006 moles) styryl capped poly(propylene glycol) precursor and 0.27 ml Speier's catalyst. The mixture is stirred magnetically, heated to 60°C and 3.52 g (0.003 moles) of alpha,omega-dihydride-polydimethylsiloxane (having an average of about 16 silicon atoms) added dropwise via the dropping funnel under nitrogen atmosphere. After 24 hours, FT-infrared spectroscopy indicates the hydride band has disappeared. The reaction product is diluted with 100 ml methylene chloride, charged with sodium carbonate and carbon black, stirred 2 hours, filtered twice and the solvent removed via rotary evaporation. The product is clear, viscous fluid.

Example 4 :

To 0.45 g of the silicone block copolymer prepared in example 3 is added one drop of 2-hydroxy-2-methyl-1-phenyl-propan-1-one (approximately 0.01 g). The formulation is stirred and protected from light at room temperature until the entrapped bubbles have escaped. The formulation is then transferred to polypropylene molds and UV cured for four hours. A translucent, flexible film is obtained with a water content of six percent.

Examples 5-7 :

Formulations of the silicone block copolymer described in example 3 are prepared with various concentrations of n-vinyl pyrrolidone (NVP). One drop of 2-hydroxy-2-methyl-1-phenyl-propan-1-one, approximately 0.01 g, is added to each formulation as the initiator. The formulations are stirred and protected from light until the bubbles caused by stirring have escaped. The formulations are transferred to polypropylene molds and cured four hours in ultra-violet light. Each formulation composition and the water content of the cured materials are shown in Table III. The cured materials are clear when dry and remain clear when hydrated except example 7 which develops a slight haze in the hydrated state.

Table III

| Example | Material Composition | | Water Content % |
|---|---|---|---|
| | Silicone Block Copolymer | NVP % | |
| 5 | 90 | 10 | 24 |
| 6 | 49 | 51 | 62 |
| 7 | 10 | 90 | 84 |

Examples 8-10 :

Formulations of the silicone block copolymer described in example 3 are prepared with various concentrations of 2-hydroxyethyl methacrylate (HEMA). One drop of 2-hydroxy-2-methyl-1-phenyl-propan-1-one, approximately 0.01 g, is added to each formulation as the initiator. The formulations are stirred and protected from light until the bubbles caused by stirring have escaped. The formulations are transferred to polypropylene molds and cured four hours in ultra-violet light. Each formulation composition and the water content of the cured materials are shown in Table IV. The cured materials are clear in dry state and remain clear when hydrated.

Table IV

| Example | Material Composition | | Water Content % |
|---|---|---|---|
| | Silicone Block Copolymer % | HEMA % | |
| 8 | 88 | 12 | 8 |
| 9 | 50 | 50 | 18 |
| 10 | 10 | 90 | 35 |

Example 11 : Silicone Block Copolymer Synthesis

To a 250 ml, 3-necked flask equipped with a condenser constant pressure dropping funnel and nitrogen inlet and outlet adapters are added 47.58 g of styryl capped poly(propylene glycol) precursor and 75 g methylene chloride. The mixture is stirred magnetically, and 3.68 g (0.013 moles) of alpha, omega-dihydride-polydimethylsiloxane (having an average of about 4 Si atoms) and 0.05 g of Speir's catalyst added dropwise via the dropping funnel under nitrogen atmosphere. After 92 hours FT-infrared spectroscopy indicates the silicone hydride band disappeared. The reaction product is charged with sodium carbonate and carbon black, stirred 2 hours, filtered twice and the solvent removed via rotary evaporation. The product is a clear, viscous fluid.

Examples 12-15 :

Formulations of the silicone block copolymer described in example 11 are prepared with various concentrations of divinylbenzene (DVB) and n-vinyl pyrrolidone (NVP). One drop of 2-hydroxy-2-methyl-1-phenyl-pro-

pan-1-one, approximately 0.01 g, is added to each formulation as the initiator. The formulations are stirred and protected from light until the bubbles caused by stirring have escaped. The formulations are transferred to polypropylene molds and cured two hours in ultra-violet light. Each formulation composition and the water content of the cured materials are shown in Table V. The cured materials are clear in the dry and hydrated states.

Table V

| Example | Material Composition | | | Water Content |
|---|---|---|---|---|
| | Silicone Block Copolymer % | DVB % | NVP % | |
| 12 | 90 | 10 | - | 1 |
| 13 | 88 | 6 | 6 | 1 |
| 14 | 83 | 6 | 12 | 11 |
| 15 | 72 | 6 | 23 | 22 |

Examples 16-18 :

Formulations of the silicone block copolymer described in example 11 are prepared with various concentrations of 2-hydroxyethylmethacrylate (HEMA), ethylene glycol dimethacrylate (EGDMA) and n-vinyl pyrrolidone (NVP). One drop of 2-hydroxy-2-methyl-1-phenyl-propan-1-one, approximately 0.01 g, is added to each formulation as the initiator. The formulations are stirred and protected from light until the bubbles caused by stirring have escaped. The formulations are transferred to polypropylene molds and cured two hours in ultra-violet light. Each formulation composition and the water content of the cured materials are shown in Table VI. The cured materials are clear in dry and hydrated states.

Table VI

| Example | Material Composition | | | | Water Content % |
|---|---|---|---|---|---|
| | Silicone Block Copolymer % | NVP % | HEMA % | EGDMA % | |
| 16 | 86 | 6 | 6 | 2 | 4 |
| 17 | 79 | 13 | 6 | 2 | 13 |
| 18 | 79 | 6 | 13 | 2 | 5 |

Example 19 : Silicone Block Copolymer Synthesis

To a 250 ml 3-necked flask equipped with a condensor, thermometer and nitrogen inlet and outlet adapters are added 150 ml toluene, 37.00 g (0.08 moles) of styryl terminated tripropylene glycol, 21.06 g (0.04 moles) of alpha-omega-dihydride-polydimethylsiloxane (having an average of about 7 silicon atoms) and 0.21 g of Speier's catalyst. The reaction mixture is heated to 50°C. After five days, the reaction is cooled to ambient temperature, neutralized and decolorized with sodium carbonate and carbon black, filtered and the solvent removed via rotary evaporation. The product is a clear, viscous fluid.

Examples 20-28 :

Formulations of the silicone block copolymer described in example 19 are prepared with various concentrations of ethylene glycol dimethylacrylate (EGDMA), 2-hydroxyethyl methacrylate (HEMA) and styryl terminated poly(ethylene glycol 4000) (STPEG). One drop of 2-hydroxy-2-methyl-1-phenyl-propan-1-one, approximately 0.01 g, is added to each formulation as the initiator. The formulations are stirred and protected from light until the bubbles caused by stirring have escaped. The formulations are transferred to polypropylene molds and cured 2 hours in ultra-violet light. Each formulation composition and the water content of the cured materials are shown in Table VII. The cured materials are clear.

Table VII

| Example | Material Composition | | | | % Water Content |
|---|---|---|---|---|---|
| | Silicone Block Copolymer % | HEMA % | STPEG % | EGDMA % | |
| 20 | 94 | - | - | 6 | 1 |
| 21 | 90 | - | - | 10 | 3 |
| 22 | 78 | - | - | 22 | 2 |
| 23 | 88 | 6 | - | 6 | 5 |
| 24 | 84 | 10 | - | 6 | 6 |
| 25 | 75 | 20 | - | 6 | 7 |
| 26 | 87 | - | 8 | 6 | 0 |
| 27 | 83 | - | 12 | 6 | 1 |
| 28 | 73 | - | 21 | 6 | 1 |

## Claims

### Claims for the following Contracting States : AT, BE, CH, DE, FR, GB, GR, IT, LI, LU, NL, SE

1. An optically clear wettable, flexible, oxygen permeable ophthalmic device fabricated from a polymer of a) a crosslinkable monomer having a segment S″ of the formula Ia,

$$-(W-S'-L-D-A-L)_{a}- \qquad \text{(Ia)}$$

wherein a is 1 to 10 ;
each D is independently oxygen or $-N(R^{21})-$ ;
each W is a bond, oxygen or $-N(R^{21})-$ ;
each L is independently –BRB′–, –BR–, –RB′– or –R– ;
each S′ is independently a segment of formula II,

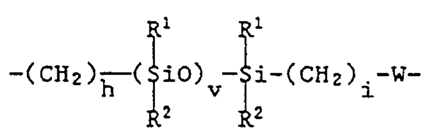

(II)

each A is independently a segment of formula III,

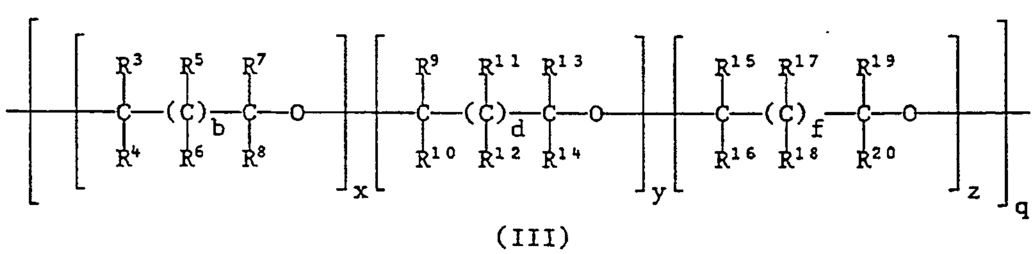

(III)

the terminal oxygen within each unit of formula III being replaceable by $-N(R^{21})-$ ;

wherein each b, d and f is independently 0-4 ; q is a number from 1 to 1000 ; each x, y and z is independently 0 to 200, provided at least one of x, y and z is at least 1 ; such that (x + y + z) multiplied by q is 4 to 1000 ;

each h and i is an integer from 1 to 6, v is an integer from 2 to 300 ;

$R^1$ and $R^2$ are independently alkyl of up to 18 carbon atoms, or aryl of up to 12 carbon atoms ;

each of $R^3$, $R^4$, $R^7$-$R^{10}$, $R^{13}$-$R^{16}$, $R^{19}$ and $R^{20}$ is independently selected from the group consisting of hydrogen, halogen, an aliphatic, aromatic or heterocyclic containing radical selected from unsubstituted $C_1$-$C_{16}$ alkyl; substituted $C_1$-$C_{16}$ alkyl ; unsubstituted $C_2$-$C_{16}$ alkenyl ; and substituted $C_2$-$C_{16}$ alkenyl ; wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_{16}$ alkoxy, $C_1$-$C_{16}$ alkanoyloxy, aryloxy of up to 10 carbon atoms, $C_3$-$C_6$ alkenoyloxy, aroyl of up to 10 carbon atoms, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$ cycloalkoxy-carbonyl, oxacycloalkyl of up to 7 carbon atoms, oxacycloalkoxy of up to 7 carbon atoms, oxacycloalkoxy (up to 7 carbon atoms)-carbony, oxacycloalkyl (up to 7 carbon atoms)-carbonyloxy, and aryl (of up to 10 carbon atoms)-oxycarbonyl, each of said alkyl and alkenyl substituents being, in turn, optionally substituted by $C_1$-$C_6$ alkyl, fluoro or a $C_1$-$C_6$ alkoxy provided said last mentioned alkoxy is not bound to a carbon atom already singly bound to another oxygen atom ; $R^3$, $R^4$, $R^7$-$R^{10}$, $R^{13}$-$R^{16}$, $R^{19}$ and $R^{20}$ being further independently selected from aryl of up to 10 carbon atoms, $C_3$-$C_8$ cycloalkyl, and oxacycloalkyl of up to 7 carbon atoms, each of which may be unsubstituted or further substituted with a substituent selected from the group of substituents for said $R^3$ alkyl set forth above ;

$R^5$, $R^6$, $R^{11}$, $R^{12}$, $R^{17}$ and $R^{18}$ are selected from the same group set forth above for $R^3$ ; and $R^5$, $R^6$, $R^{11}$, $R^{12}$, $R^{17}$ and $R^{18}$ are further independently selected from $C_1$-$C_{16}$ alkoxycarbonyl, $C_3$-$C_{16}$ alkenoyloxy, $C_2$-$C_{16}$ alkenyloxycarbonyl, and $C_1$-$C_{16}$ alkanoyloxy, each of which may be further substituted by fluoro, aryl of up to 10 carbon atoms, or $C_1$-$C_{16}$ alkoxy, and $R^5$, $R^6$, $R^{11}$, $R^{12}$, $R^{17}$ and $R^{18}$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyl, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyl, oxacycloalkyl (of up to 7 carbon atoms)-carbonyloxy, and aryloxy (of up to 10 carbon atoms)-carbonyl, each of which may be further substituted by fluoro, $C_1$-$C_6$ alkyl or $C_1$-$C_6$ alkoxy, provided that any substituent having a singly bound oxygen atom as its link to the rest of the molecule may not be a substituent on the same carbon atom which is singly bonded to another oxygen atom ; or 2 adjacent groups, selected from $R^3$-$R^{20}$, together with the atoms to which they are attached may form a 5-8 membered cycloalkyl, oxacycloalkyl or bicycloalkyl ring.

each $R^{21}$ is independently selected from hydrogen, $C_1$-$C_4$ alkyl and phenyl,

each B and B′ is selected from

$$-\overset{O}{\overset{\|}{C}}-,\quad -\overset{O}{\overset{\|}{C}}-O-;\ \text{and}\ -\overset{O}{\overset{\|}{C}}NH-$$

with the carbonyl group being bound to A, S′, or D ;

and each R is independently a divalent linking group selected from

a) a divalent aliphatic group of up to 25 carbon atoms which may be interrupted by oxy, carbonyloxy, amino, aminocarbonyl, oxycarbonyl, ureido, oxycarbonylamino, or carbonylamino ;

b) a divalent 5-7 membered cycloaliphatic and 5-7 membered cycloaliphatic-$C_1$-$C_{20}$-aliphatic group ;

c) a divalent arylene group having 6-25 atoms ;

d) a divalent aralkyl or alkaryl group having 7 to 25 carbon atoms ; and

e) a divalent alkylene-aryl-alkylene having 8 to 30 carbon atoms, wherein groups b), d) and e) can be optionally interrupted in their non-cyclic aliphatic and alkyl groups respectively by the same groups as in group a) and wherein the aryl rings in groups c), d) and e) may be further substituted with one or more substituents selected from halogen, $C_1$-$C_4$ alkyl, and $C_1$-$C_{12}$ perhalo alkyl, and wherein an interrupting group set forth in group a) may be present between the cyclic and non-cyclic portions of groups b), d) and e) ; and

b) from zero up to a sufficient amount of a hydrophilic modifying monomer to impart to said polymer a water content in its aqueous swollen state of at least 10%, said hydrophilic modifying monomer being selected from

aa) polyethylene glycols of the formula

$$R^{23}-\overset{O}{\overset{\|}{C}}-O-(CH_2CH_2O)_g R^{22} \qquad (A)$$

or ab) pyrrolidones of the formula

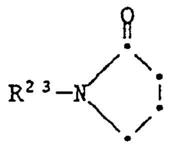 (B)

wherein $R^{22}$ is hydrogen or $C_1$-$C_7$ alkyl, g is an integer of from 1-25,

or ac) a compound of the formula

$$(R^{24}\text{-div})_{nz}Hy \quad (C)$$

wherein $R^{23}$ is a polymerizable or reactive moiety selected from i) ethylenically unsaturated radicals, ii) anhydrides, iii) amines, iv) acids, v) esters, vi) amides, vii) ethers, viii) acid halides,

$R^{24}$ is selected from the meanings given for $R^{23}$ and ix) epoxy groups, x) isocyanates and isothiocyanates and xi) hydroxy ; div is selected from

ba) a divalent aliphatic group of up to 25 carbon atoms, preferably alkyl, alkenyl or alkynyl, which may also be interrupted, or terminated, or interrupted and terminated by oxy, carbonyloxy, amino, aminocarbonyl, oxycarbonyl, ureido, oxycarbonylamino, or carbonylamino ;

bb) a divalent 5-7 membered cycloaliphatic and 5-7 membered cycloaliphatic-$C_1$-$C_{20}$-aliphatic group which may also be interrupted, terminated, or interrupted and terminated as in group ba) above except that said interruptions cannot occur within said cycloaliphatic portions ;

bc) a divalent arylene group having 6-25 carbon atoms which is unsubstituted or substituted by at least one substituent selected from halogen, $C_1$-$C_4$ alkyl, and $C_1$-$C_{12}$ perhaloalkyl ;

bd) a divalent aralkyl or alkaryl or alkylene-aryl-alkylene having 7-25 carbon atoms which is uninterrupted or interrupted in the alkyl portion, or terminated, or interrupted in the alkyl portion and terminated with an interrupting or terminating group as mentioned in ba) above, and each of said uninterrupted, interrupted, and terminated aralkyl and alkaryl groups is further unsubstituted or substituted by a substituent selected from halogen, $C_1$-$C_4$ alkyl, and $C_1$-$C_{12}$ perhaloalkyl ;

be) 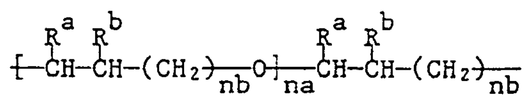 (D)

wherein na is an integer of 8-100 ; and

bea) $R^a$ is hydrogen, $R^b$ is methyl, and nb is zero ; or

beb) $R^a$ is methyl, $R^b$ is hydrogen, and nb is zero ; or

bec) $R^a$ and $R^b$ are hydrogen and nb is one ;

nz is an integer of 1 up to the valence of Hy and where nz is less than the valence of Hy, the remaining valences of Hy are taken up with hydrogens ;

and Hy is a hydrophilic group selected from

ca) morpholino ; cyclic amide radicals of 5-7 ring members ; saturated and unsaturated cyclic N,N-diamide radicals of 5-6 ring members ; groups of the formula

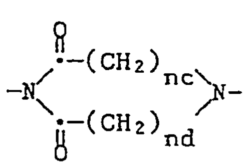 (E) or 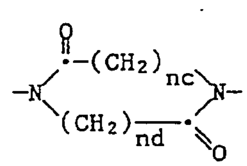 (E')

having 6-7 ring members wherein nc and nd are selected from 0-2 ; and cyclic amines of 5-6 ring members ;

each unsubstituted or substituted by hydroxy-$C_1$-$C_5$ alkyl, carboxy, or lower alkyl ;

cb) tetrahydrofurfuryl ;

cc) mono-, di-, and polysaccharide radicals, whether straight chain or cyclic, their corresponding sugar alcohol radicals, pentaerythritol radicals, and polyvinyl alcohol radicals ; and

cd) polyhydroxy $C_2$-$C_7$ alkyl radicals ; and said device having a receding contact angle of less than 60° ;

and having a Dk ($\times 10^{-10}$ mm · ml $O_2/cm^2$ · sec · mmHg) of at least about 7.

2. The device of claim 1 wherein a is one and each D is oxygen.

3. The device of claim 1 wherein each L is –BRB′–, –BR– or –RB′, each B is –C(O)NH– wherein the nitrogen atom is bound to R, and R is phenylene unsubstituted or substituted by methyl.

4. The device of claim 1 wherein each $R^1$ and $R^2$ is methyl, h is 4 ; i is 4 ; and v is from about 15 to about 50.

5. The device of claim 1 wherein (x + y + z) times q is from about 25 to about 75.

6. The device of claim 1 wherein

a) each b, d, and f is 1 and $R^3$-$R^{20}$ are all hydrogen or

b) each b, d and f is zero, each $R^3$, $R^4$, $R^8$-$R^{10}$, $R^{14}$-$R^{16}$, and $R^{20}$ is hydrogen, and each $R^7$, $R^{13}$, and $R^{19}$ is methyl.

7. The device of claim 6 wherein (x + y + z) times q is about 25 to about 75.

8. The device of claim 1 wherein

a is 1 ;
each D is oxygen ;
each L is –BRB′–, –BR– or –RB′– ;
each B and B′ are –C(O)NH– with the nitrogen atom bound to R ;
each R is phenylenë unsubstituted or substituted by methyl ;
each $R^1$ and $R^2$ is methyl ;
h and i are each 4 ;
v is from about 15 to about 50 ;
(x + y + z) times q is about 25 to about 75 ; and
a) each b, d, and f is 1 and $R^3$-$R^{20}$ are all hydrogen ; or
b) each b, d and f is zero ; each $R^3$, $R^4$, $R^8$-$R^{10}$, $R^{14}$-$R^{16}$ and $R^{20}$ is hydrogen ; and each $R^7$, $R^{13}$, and $R^{19}$ is methyl.

9. The device of claim 8 wherein each W is a bond and each L is –BR– or –RB′–.

10. The wettable, flexible, oxygen permeable, ophthalmic device of claim 1, the crosslinkable monomer a) having segments of formula Ib,

$$-(D-A-L-S'')_c- \qquad (Ib)$$

or of formula Ic,

$$-(S'')_c-D-S'-La- \qquad (Ic)$$

or of formula Id

$$-(D-A-L)-(S'')_c- \qquad (Id)$$

wherein each S″ is independently a segment of formula Ia of claim 1 ;
each D, A and L is independently as defined in claim 1 ;
c is 1-10 ;
and a times c is 1-10 ;
La being selected from –BRB′– and –BR– ; and wherein S′, B, R and B′ are as defined in claim 1.

11. The device of claim 10 wherein a is one and each D is oxygen.

12. The device of claim 10 wherein each L is –BRB′–, –BR– or –RB′–, each B is –C(O)NH– wherein the nitrogen atom is bound to R, and R is phenylene unsubstituted or substituted by methyl.

13. The device of claim 10 wherein each $R^1$ and $R^2$ is methyl ; h is 4 ; i is 4 ; and v is from about 15 to about 50.

14. The device of claim 10 wherein (x + y + z) times q is from about 25 to about 75.

15. The device of claim 10 wherein

a) each b, d, and f is 1 and $R^3$-$R^{20}$ are all hydrogen or

b) each b, d and f is zero, each $R^3$, $R^4$, $R^8$-$R^{10}$, $R^{14}$-$R^{16}$, and $R^{20}$ is hydrogen, and each $R^7$, $R^{13}$, and $R^{19}$ is methyl.

16. The device of claim 15 wherein (x + y + z) times q is about 25 to about 75.

17. The device of claim 10 wherein c is 1.

18. The device of claim 10 wherein

a is 1 ;
each D is oxygen ;
each L is –BRB'–, –BR– or –RB'– ;
each B and B' are –C(O)NH– with the nitrogen atom bound to R ;
each R is phenylene unsubstituted or substituted by methyl ;
each $R^1$ and $R^2$ is methyl ;
h and i are each 4 ;
v is from about 15 to about 50 ;
(x + y + z) times q is about 25 to about 75 ; and
a) each b, d, and f is 1 and $R^3$-$R^{20}$ are all hydrogen ; or
b) each b, d and f is zero ; each $R^3$, $R^4$, $R^8$-$R^{10}$, $R^{14}$-$R^{16}$ and $R^{20}$ is hydrogen ; and each $R^7$, $R^{13}$, and $R^{19}$ is methyl ;
and c is one.

19. The device of claim 18 wherein each W is a bond and each L is –BR– or –RB'–.

20. The wettable, flexible, oxygen permeable ophthalmic device of claim 14 the monomer a having the formula

$$L'-\left[(D-A-L)_e-S''\right]_c-L'' \qquad (I)$$

wherein e is zero or 1 ;
each D, A, L, S", and c is independently as defined in claim 10 ;
L' is hydrogen, P'-R–, P'-BR–, P'-RB'–, or P'-BRB'– ; and L" is hydrogen, or –P', or, in case that e is zero, also –D-S'-BR-P' or –D-S'-BRB'-P' and wherein P' is hydrogen, amino, hydroxy, NCO, NCS, vinyl or a moiety containing a crosslinkable group which may be crosslinked when coreacted with a suitable crosslinking agent or when irradiated by actinic radiation.

21. The device of claim 20 wherein a is one and each D is oxygen.

22. The device of claim 20 wherein each L is –BRB'–, –BR– or –RB'–, each B is –C(O)NH– wherein the nitrogen atom is bound to R, and R is phenylene unsubstituted or substituted by methyl.

23. The device of claim 20 wherein each $R^1$ and $R^2$ is methyl, h is 4 ; i is 4 ; and v is from about 15 to about 50.

24. The device of claim 20 wherein (x + y + z) times q is from about 25 to about 75.

25. The device of claim 20 wherein a) each b, d, and f is 1 and $R^3$-$R^{20}$ are all hydrogen or b) each b, d and f is zero, each $R^3$, $R^4$, $R^8$-$R^{10}$, $R^{14}$-$R^{16}$, and $R^{20}$ is hydrogen, and each $R^7$, $R^{13}$, and $R^{19}$ is methyl.

26. The device of claim 25 wherein (x + y + z) times q is about 25 to about 75.

27. The device of claim 20 wherein c is 1.

28. The device of claim 20 wherein L' is P'-BRB'–.

29. The device of claim 20 wherein each P' is

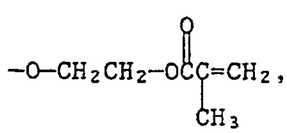, 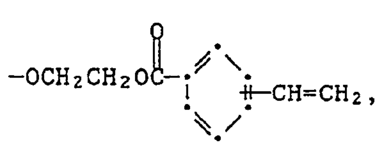, or 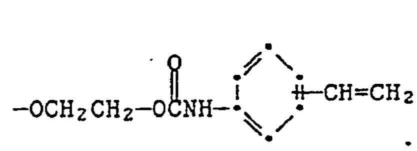.

30. The device of claim 20 wherein

a is 1 ;
each D is oxygen ;
each L is –BRB'–, –BR– or –RB'– ;
each B and B' are –C(O)NH– with the nitrogen atom bound to R ;
each R is phenylene unsubstituted or substituted by methyl ;
each $R^1$ and $R^2$ is methyl ;
h and i are each 4 ;

v is from about 15 to about 50 ;
(x + y + z) times q is about 25 to about 75 ; and
a) each b, d, and f is 1 and $R^3$-$R^{20}$ are all hydrogen ; or
b) each b, d and f is zero ; each $R^3$, $R^4$, $R^8$-$R^{10}$, $R^{14}$-$R^{16}$ and $R^{20}$ is hydrogen ; and each $R^7$, $R^{13}$, and $R^{19}$ is methyl ;
L′ is P′-BRB′ or P′ ;
and P′ is

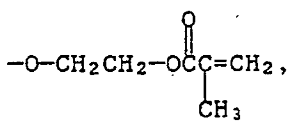, 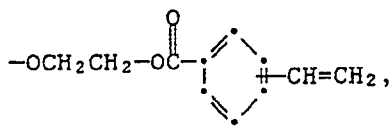, 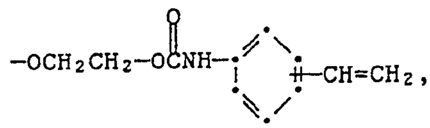,

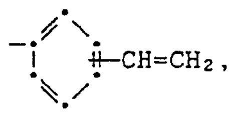 or $-CH=CH_2$.

31. The device of claim 30 wherein each W is a bond, each L is –BR– or –RB′– and L′ and L″ are each $-CH=CH_2$.

32. The device of claim 1 which is a contact lens.

33. The device of claim 1 wherein each A is of the formula

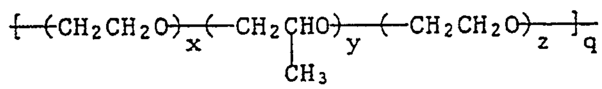 or

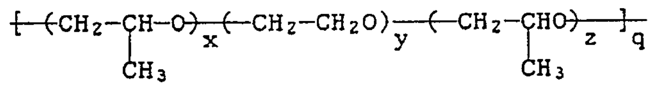.

wherein each of x, y, z, and q are greater than zero.

34. The device of claim 33 wherein q is one.

35. The device of claim 33 wherein x and z within any one A are the same.

36. The device of claim 33 wherein each x and each z has the same value.

37. An optically clear wettable, flexible, oxygen permeable polymer of

a) a crosslinkable monomer having a segment S″ of the formula

$$-(W-S'-L-D-A-L)_a- \qquad (Ia)$$

wherein each of the variables is as defined in claim 1, and

b) a sufficient amount of a hydrophilic modifying monomer to impart to said polymer a water content in its aqueous swollen state of at least 10%, said hydrophilic modifying monomer being selected from the compounds of formula (A), (B) and (C) as defined in claim 1 ; and said polymer having a receding contact angle of less than 60° ; and having a Dk (× $10^{-10}$ mm · ml $O_2$/$cm^2$ · sec · mmHg) of at least about 7.

38. The wettable, flexible, oxygen permeable, polymer of claim 37 the crosslinkable monomer a) having segments of formula Ib,

$$-(D-A-L-S'')_c- \qquad (Ib)$$

or of formula Ic,

$$-(S'')_c-D-S'-La \qquad (Ic)$$

or of formula Id

$$-(D\text{-}A\text{-}L)\text{-}(S'')_c\text{-} \qquad (Id)$$

wherein each S″ is independently a segment of formula Ia of claim 1 ;
each D, A and L is independently as defined in claim 1 ;
c is 1-10 ;
and a times c is 1-10 ;
La being selected from –BRB′– and –BR– ; and wherein S′, B, R and B′ are as defined in claim 1.

39. The wettable, flexible, oxygen permeable, polymer of claim 38 the monomer a) having the formula

$$L'\text{-}[(D\text{-}A\text{-}L)_e\text{-}S'']_c\text{-}L'' \qquad (I)$$

wherein e is zero or 1 ;
each D, A, L, S″, and c is independently as defined in claim 10 ;
L′ is hydrogen, P′-R–, P′-BR–, P′-RB′–, or P′-BRB′– ; and L″ is hydrogen, or –P′, or, in case that e is zero, also –D-S′-BR-P′ or –D-S′-BRB′-P′ and wherein P′ is hydrogen, amino, hydroxy, NCO, NCS, vinyl or a moiety containing a crosslinkable group which may be crosslinked when coreacted with a suitable crosslinking agent or when irradiated by actinic radiation.

40. The device of claim 1 wherein said hydrophilic modifying monomer is selected from the group of the formula

$$(R^{24}\text{-div})_{nz}Hy \quad (C).$$

41. The polymer of claim 37 wherein said hydrophilic modifying monomer is selected from the group of the formula

$$(R^{24}\text{-div})_{nz}Hy \quad (C).$$

42. The polymer of claim 41 wherein $R^{24}$ is an ethylenically unsaturated group.

43. The polymer of claim 42 wherein $R^{24}$ is vinyl, 1-methylvinyl, 2-methylvinyl or allyl ;

ia) 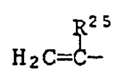

and the terminus of div to which it is bound is $-C(O)R^{26}$, the carbonyl being bound to $R^{24}$, where $R^{25}$ is hydrogen or methyl and $R^{26}$ is –O–, or $-NR^{27}-$ with $R^{27}$ being hydrogen or lower alkyl ;

ib) $H_2C=CH-$ and the terminus of div to which it is bound is

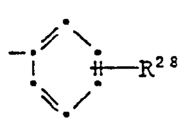

the left hand bond being bound to $R^{24}$, wherein $R^{28}$ is –O–, $-NR^{27}-$, –C(O)–,

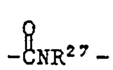

or –C(O)O– ; and

ic) 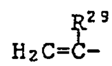

and the terminus of div to which it is bound is $-C(O)R^{30}-$, the carbonyl being bound to $R^{24}$ wherein $R^{30}$ is lower alkylene or $-[CH_2CH(\text{loweralkyl})-O]_{1-5}-$ and $R^{29}$ is hydrogen, lower alkyl, or cyano.

44. The polymer of claim 41 wherein Hy is

ce) morpholino which is unsubstituted or mono- up to tetra-substituted by lower alkyl ;

cf) 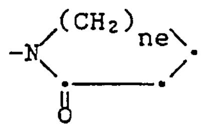

wherein ne is one, two, or three, each of which is unsubstituted or substituted, by lower alkyl ;

cg) 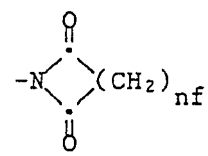

where nf is 2 or 3, each of which is unsubstituted or substituted by lower alkyl ;

ch) a divalent group of the formula

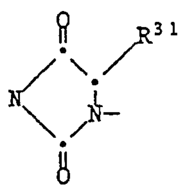 , 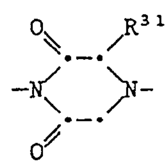 , 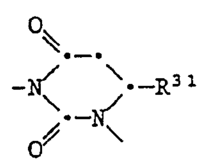

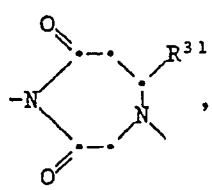 , or 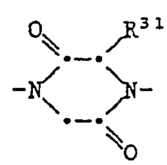

wherein $R^{31}$ is hydrogen or carboxy ;

ci) 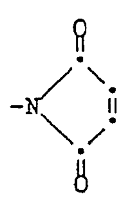 ,

cj) 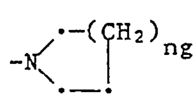

where ng is one or two, each of which is unsubstituted or substituted by lower alkyl ;

ck) 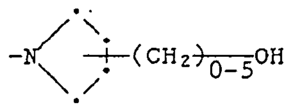 ;

cl) a polyol selected from polyvinyl alcohol radicals,

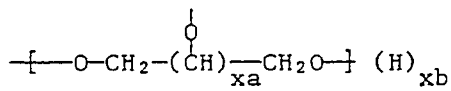

wherein

xa is 2-10 and xb is an integer from zero up to xa + 1 inclusive, the cyclic saccharide analogs thereof, the di-tetra saccharides thereof, $C(CH_2O)_4(H)_{xc}$ wherein

xc is 0-3, and polyhydroxy lower alkylene glycol radicals wherein up to 50%, of the hydroxy groups are missing their alcoholic hydrogens.

45. The polymer of claim 41 wherein div is selected from

$-(CH_2)_2NHCOO(CH_2)_2-$;

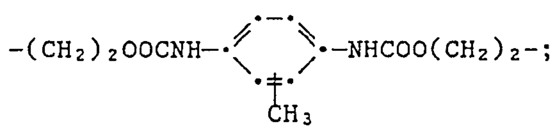

$-(CH_2)_2NHCO-$; and

$-(CH_2)_2NHCO(CH_2)_2-$.

46. The polymer of claim 41 wherein said hydrophilic modifying monomer is selected from

aca) 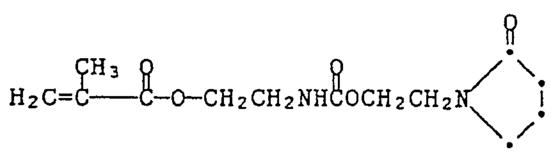 ,

acb) 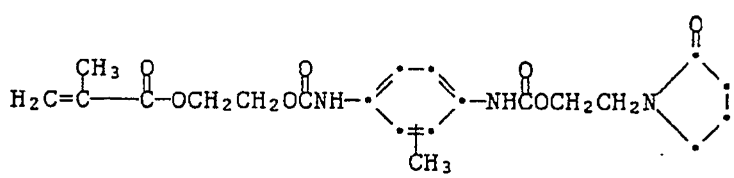 ,

acc) 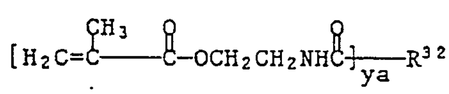

wherein $R^{32}$ is

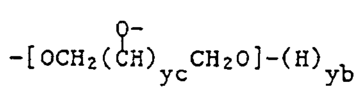

in which yc is 1-6, and yb is 0 up to (yc + 1), and ya is 1 up to (yc + 2 – yb),

acd) 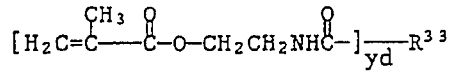

wherein $R^{33}$ is $C(CH_2O)_4(H)_{4-yd}$
and yd is 1-4 ;

ace) polyvinyl alcohol having at least one and up to 50% inclusive, of the alcoholic hydrogens thereof absent ; and

acf) 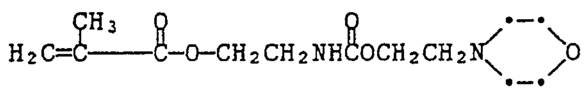 .

47. The polymer of claim 46 wherein said hydrophilic modifying monomer is selected from said groups aca), acb) and acf).

48. Use of a polymer of claim 37 or 39 for the manufacture of an ophthalmic device.

**Claims for the Contracting State : ES**

1. An optically clear wettable, flexible, oxygen permeable ophthalmic device fabricated from a polymer of a) a crosslinkable monomer having a segment S″ of the formula Ia,

$$-(W-S'-L-D-A-L)_a- \qquad (Ia)$$

wherein a is 1 to 10 ;
each D is independently oxygen or $-N(R^{21})-$ ;
each W is a bond, oxygen or $-NR^{21})-$ ;
each L is independently –BRB′–, –BR–, –RB′– or –R– ;
each S′ is independently a segment of formula II,

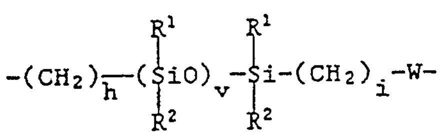

(II)

each A is independently a segment of formula III,

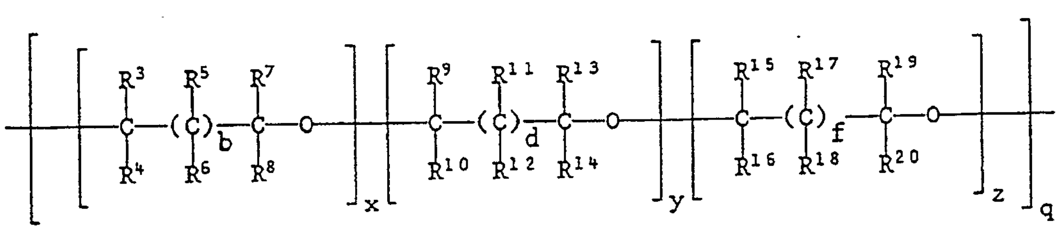

(III)

the terminal oxygen within each unit of formula III being replaceable by $-N(R^{21})-$ ;

wherein each b, d and f is independently 0-4 ; q is a number from 1 to 1000 ; each x, y and z is independently 0 to 200, provided at least one of x, y and z is at least 1 ; such that (x + y + z) multiplied by q is 4 to 1000 ;

each h and i is an integer from 1 to 6, v is an integer from 2 to 300 ;

$R^1$ and $R^2$ are independently alkyl of up to 18 carbon atoms, or aryl of up to 12 carbon atoms ;

each of $R^3$, $R^4$, $R^7$-$R^{10}$, $R^{13}$-$R^{16}$, $R^{19}$ and $R^{20}$ is independently selected from the group consisting of hydrogen, halogen, an aliphatic, aromatic or heterocyclic containing radical selected from unsubstituted $C_1$-$C_{16}$ alkyl; substituted $C_1$-$C_{16}$ alkyl ; unsubstituted $C_2$-$C_{16}$ alkenyl ; and substituted $C_2$-$C_{16}$ alkenyl ; wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_{16}$ alkoxy, $C_1$-$C_{16}$ alkanoyloxy, aryloxy of up to 10 carbon atoms, $C_3$-$C_6$ alkenoyloxy, aroyl of up to 10 carbon atoms, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$cycloalkoxy-carbonyl, oxacycloalkyl of up to 7 carbon atoms, oxacycloalkoxy of up to 7 carbon atoms, oxacycloalkoxy (up to 7 carbon atoms)-carbonyl, oxacycloalkyl (up to carbon atoms)-carbonyloxy, an aryl (of up to 10 carbon atoms)-oxycarbonyl, each of said alkyl and alkenyl substituents being, in turn, optionally substituted by $C_1$-$C_6$ alkyl, fluoro or a $C_1$-$C_6$ alkoxy provided said last mentioned alxoxy is not bound to a carbon atom already singly bound to another oxygen atom ; $R^3$, $R^4$, $R^7$-$R^{10}$, $R^{13}$-$R^{16}$, $R^{19}$ and $R^{20}$ being further independently selected from aryl of up to 10 carbon atoms, $C_3$-$C_8$ cycloalkyl, and oxacycloalkyl of up to 7 carbon atoms, each of which may be unsubstituted or further substituted with a substituent selected from the group of substituents for said $R^3$ alkyl set forth above ;

$R^5$, $R^6$, $R^{11}$, $R^{12}$, $R^{17}$ and $R^{18}$ are selected from the same group set forth above for $R^3$ ; and $R^5$, $R^6$, $R^{11}$, $R^{12}$, $R^{17}$ and $R^{18}$ are further independently selected from $C_1$-$C_{16}$ alkoxycarbonyl, $C_3$-$C_{16}$ alkenoyloxy, $C_2$-$C_{16}$ alkenyloxycarbonyl, and $C_1$-$C_{16}$ alkanoyloxy, each of which may be further substituted by fluoro, aryl of up to 10 carbon atoms, or $C_1$-$C_{16}$ alkoxy, and $R^5$, $R^6$, $R^{11}$, $R^{12}$, $R^{17}$ and $R^{18}$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyl, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyl, oxacycloalkyl (of up to 7 carbon atoms)-carbonyloxy, and aryloxy (of up to 10 carbon atoms)-carbonyl, each of which may be further substituted by fluoro, $C_1$-$C_6$ alkyl or $C_1$-$C_6$ alkoxy, provided that any substituent having a singly bound oxygen atom as its link to the rest of the molecule may not be a substituent on the same carbon atom which is singly bonded to another oxygen atom ; or 2 adjacent groups, selected from $R^3$-$R^{20}$, together with the atoms to which they are attached may form a 5-8 membered cycloalkyl, oxacycloalkyl or bicycloalkyl ring.

each $R^{21}$ is independently selected from hydrogen, $C_1$-$C_4$ alkyl and phenyl,

each B and B′ is selected from

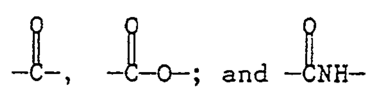

with the carbonyl group being bound to A, S′, or D ;

and each R is independently a divalent linking group selected from

a) a divalent aliphatic group of up to 25 carbon atoms which may be interrupted by oxy, carbonyloxy, amino, aminocarbonyl, oxycarbonyl, ureido, oxycarbonylamino, or carbonylamino ;

b) a divalent 5-7 membered cycloaliphatic and 5-7 membered cycloaliphatic-$C_1$-$C_{20}$-aliphatic group ;

c) a divalent arylene group having 6-25 atoms ;

d) a divalent aralkyl or alkaryl group having 7 to 25 carbon atoms ; and

e) a divalent alkylene-aryl-alkylene having 8 to 30 carbon atoms, wherein groups b), d) and e) can be optionally interrupted in their non-cyclic aliphatic and alkyl groups respectively by the same groups as in group a) and wherein the aryl rings in groups c), d) and e) may be further substituted with one or more substituents selected from halogen, $C_1$-$C_4$ alkyl, and $C_1$-$C_{12}$ perhalo alkyl, and wherein an interrupting group set forth in group a) may be present between the cyclic and non-cyclic portions of groups b), d) and e) ; and

b) from zero up to a sufficient amount of a hydrophilic modifying monomer to impart to said polymer a water content in its aqueous swollen state of at least 10%, said hydrophilic modifying monomer being selected from

aa) polyethylene glycols of the formula

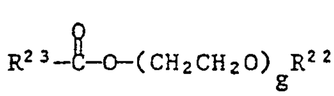

(A)

or ab) pyrrolidones of the formula

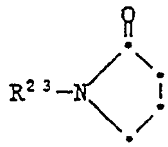 (B)

wherein $R^{22}$ is hydrogen or $C_1$-$C_7$ alkyl, g is an integer of from 1-25,

or ac) a compound of the formula

$$(R^{24}\text{-div})_{nz}Hy \quad (C)$$

wherein $R^{23}$ is a polymerizable or reactive moiety selected from i) ethylenically unsaturated radicals, ii) anhydrides, iii) amines, iv) acids, v) esters, vi) amides, vii) ethers, viii) acid halides,

$R^{24}$ is selected from the meanings given for $R^{23}$ and ix) epoxy groups, x) isocyanates and isothiocyanates and xi) hydroxy ; div is selected from

ba) a divalent aliphatic group of up to 25 carbon atoms, preferably alkyl, alkenyl or alkynyl, which may also be interrupted, or terminated, or interrupted and terminated by oxy, carbonyloxy, amino, aminocarbonyl, oxycarbonyl, ureido, oxycarbonylamino, or carbonylamino ;

bb) a divalent 5-7 membered cycloaliphatic and 5-7 membered cycloaliphatic-$C_1$-$C_{20}$-aliphatic group which may also be interrupted, terminated, or interrupted and terminated as in group ba) above except that said interruptions cannot occur within said cycloaliphatic portions ;

bc) a divalent arylene group having 6-25 carbon atoms which is unsubstituted or substituted by at least one substituent selected from halogen, $C_1$-$C_4$ alkyl, and $C_1$-$C_{12}$ perhaloalkyl ;

bd) a divalent aralkyl or alkaryl or alkylene-aryl-alkylene having 7-25 carbon atoms which is uninterrupted or interrupted in the alkyl portion, or terminated, or interrupted in the alkyl portion and terminated with an interrupting or terminating group as mentioned in ba) above, and each of said uninterrupted, interrupted, and terminated aralkyl and alkaryl groups is further unsubstituted or substituted by a substituent selected from halogen, $C_1$-$C_4$ alkyl, and $C_1$-$C_{12}$ perhaloalkyl ;

be) 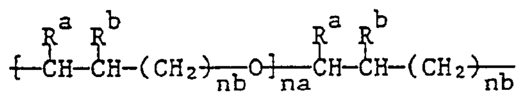 (D)

wherein na is an integer of 8-100 ; and

bea) $R^a$ is hydrogen, $R^b$ is methyl, and nb is zero ; or

beb) $R^a$ is methyl, $R^b$ is hydrogen, and nb is zero ; or

bec) $R^a$ and $R^b$ are hydrogen and nb is one ;

nz is an integer of 1 up to the valence of Hy and where nz is less than the valence of Hy, the remaining valences of Hy are taken up with hydrogens ;

and Hy is a hydrophilic group selected from

ca) morpholino ; cyclyc amide radicals of 5-7 ring members ; saturated and unsaturated cyclic N,N-diamide radicals of 5-6 ring members ; groups of the formula

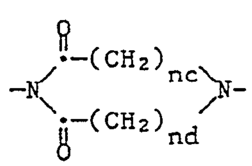 (E) or 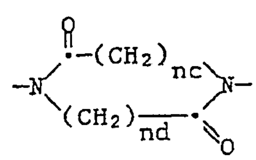 (E')

having 6-7 ring members wherein nc and nd are selected from 0-2 ; and cyclic amines of 5-6 ring members ; each unsubstituted or substituted by hydroxy-$C_1$-$C_5$ alkyl, carboxy, or lower alkyl ;

cb) tetrahydrofurfuryl ;

cc) mono-, di-, and polysaccharide radicals, whether straight chain or cyclic, their corresponding sugar alcohol radicals, pentaerythritol radicals, and polyvinyl alcohol radicals ; and

cd) polyhydroxy $C_2$-$C_7$ alkyl radicals ; and said device having a receding contact angle of less than 60° ; and having a Dk (× $10^{-10}$ mm · ml $O_2$/$cm^2$ · sec · mmHg) of at least about 7.

2. The device of claim 1 wherein a is one and each D is oxygen.

3. The device of claim 1 wherein each L is –BRB′–, –BR– or –RB′, each B is –C(O)NH– wherein the nitrogen atom is bound to R, and R is phenylene unsubstituted or substituted by methyl.

4. The device of claim 1 wherein each $R^1$ and $R^2$ is methyl, h is 4 ; i is 4 ; and v is from about 15 to about 50.

5. The device of claim 1 wherein (x + y + z) times q is from about 25 to about 75.

6. The device of claim 1 wherein

a) each b, d, and f is 1 and $R^3$-$R^{20}$ are all hydrogen or

b) each b, d and f is zero, each $R^3$, $R^4$, $R^8$-$R^{10}$, $R^{14}$-$R^{16}$, and $R^{20}$ is hydrogen, and each $R^7$, $R^{13}$, and $R^{19}$ is methyl.

7. The device of claim 6 wherein (x + y + z) times q is about 25 to about 75.

8. The device of claim 1 wherein

a is 1 ;
each D is oxygen ;
each L is –BRB′–, –BR– or –RB′– ;
each B and B′ are –C(O)NH– with the nitrogen atom bound to R ;
each R is phenylene unsubstituted or substituted by methyl ;
each $R^1$ and $R^2$ is methyl ;
h and i are each 4 ;
v is from about 15 to about 50 ;
(x + y + z) times q is about 25 to about 75 ; and
a) each b, d, and f is 1 and $R^3$-$R^{20}$ are all hydrogen ; or
b) each b, d and f is zero ; each $R^3$, $R^4$, $R^8$-$R^{10}$, $R^{14}$-$R^{16}$ and $R^{20}$ is hydrogen ; and each $R^7$, $R^{13}$, and $R^{19}$ is methyl.

9. The device of claim 8 wherein each W is a bond and each L is –BR– or –RB′–.

10. The wettable, flexible, oxygen permeable, ophthalmic device of claim 1, the crosslinkable monomer a) having segments of formula Ib,

$$-(D\text{-}A\text{-}L\text{-}S'')_c- \qquad (Ib)$$

or of formula Ic,

$$-(S'')_c\text{-}D\text{-}S'\text{-}La- \qquad (Ic)$$

or of formula Id

$$-(D\text{-}A\text{-}L)\text{-}(S'')_c- \qquad (Id)$$

wherein each S″ is independently a segment of formula Ia of claim 1 ;
each D, A and L is independently as defined in claim 1 ;
c is 1-10 ;
and a times c is 1-10 ;
La being selected from –BRB′– and –BR– ; and wherein S′, B, R and B′ are as defined in claim 1.

11. The device of claim 10 wherein a is one and each D is oxygen.

12. The device of claim 10 wherein each L is –BRB′–, –BR– or –RB′–, each B is –C(O)NH– wherein the nitrogen atom is bound to R, and R is phenylene unsubstituted or substituted by methyl.

13. The device of claim 10 wherein each $R^1$ and $R^2$ is methyl ; h is 4 ; i is 4 ; and v is from about 15 to about 50.

14. The device of claim 10 wherein (x + y + z) times q is from about 25 to about 75.

15. The device of claim 10 wherein

a) each b, d, and f is 1 and $R^3$-$R^{20}$ are all hydrogen or

b) each b, d and f is zero, each $R^3$, $R^4$, $R^8$-$R^{10}$, $R^{14}$-$R^{16}$, and $R^{20}$ is hydrogen, and each $R^7$, $R^{13}$, and $R^{19}$ is

methyl.

16. The device of claim 15 wherein (x + y + z) times q is about 25 to about 75.

17. The device of claim 10 wherein c is 1.

18. The device of claim 10 wherein

a is 1 ;
each D is oxygen ;
each L is –BRB′–, –BR– or –RB′– ;
each B and B′ are –C(O)NH– with the nitrogen atom bound to R ;
each R is phenylene unsubstituted or substituted by methyl ; each $R^1$ and $R^2$ is methyl ;
h and i are each 4 ;
v is from about 15 to about 50 ;
(x + y + z) times q is about 25 to about 75 ; and
a) each b, d, and f is 1 and $R^3$-$R^{20}$ are all hydrogen ; or
b) each b, d and f is zero ; each $R^3$, $R^4$, $R^8$-$R^{10}$, $R^{14}$-$R^{16}$ and $R^{20}$ is hydrogen ; and each $R^7$, $R^{13}$, and $R^{19}$ is methyl ;
and c is one.

19. The device of claim 18 wherein each W is a bond and each L is –BR– or –RB′–.

20. The wettable, flexible, oxygen permeable ophthalmic device of claim 14 the monomer a) having the formula

$$L'\!-\!\left[-(D\text{-}A\text{-}L)_e\text{-}S''-\right]_c\!-\!L'' \qquad (I)$$

wherein e is zero or 1 ;
each D, A, L, S″, and c is independently as defined in claim 10 ;
L′ is hydrogen, P′-R–, P′-BR–, P′-RB′–, or P′-BRB′– ; and L″ is hydrogen, or –P′, or, in case that e is zero, also –D-S′-BR-P′ or –D-S′-BRB′-P′ and wherein P′ is hydrogen, amino, hydroxy, NCO, NCS, vinyl or a moiety containing a crosslinkable group which may be crosslinked when coreacted with a suitable crosslinking agent or when irradiated by actinic radiation.

21. The device of claim 20 wherein a is one and each D is oxygen.

22. The device of claim 20 wherein each L is –BRB′–, –BR– or –RB′–, each B is –C(O)NH– wherein the nitrogen atom is bound to R, and R is phenylene unsubstituted or substituted by methyl.

23. The device of claim 20 wherein each $R^1$ and $R^2$ is methyl, h is 4 ; i is 4 ; and v is from about 15 to about 50.

24. The device of claim 20 wherein (x + y + z) times q is from about 25 to about 75.

25. The device of claim 20 wherein a) each b, d, and f is 1 and $R^3$-$R^{20}$ are all hydrogen or b) each b, d and f is zero, each $R^3$, $R^4$, $R^8$-$R^{10}$, $R^{14}$-$R^{16}$, and $R^{20}$ is hydrogen, and each $R^7$, $R^{13}$, and $R^{19}$ is methyl.

26. The device of claim 25 wherein (x + y + z) times q is about 25 to about 75.

27. The device of claim 20 wherein c is 1.

28. The device of claim 20 wherein L′ is P′-BRB′–.

29. The device of claim 20 wherein each P′ is

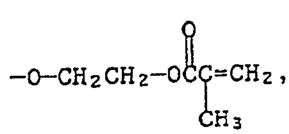 , 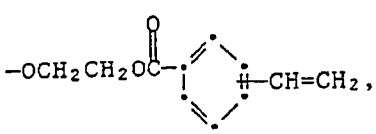 , or 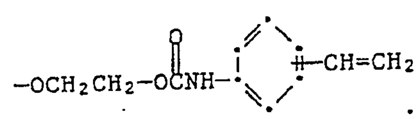 .

30. The device of claim 20 wherein

a is 1 ;
each D is oxygen ;
each L is –BRB′–, –BR– or –RB′– ;
each B and B′ are –C(O)NH– with the nitrogen atom bound to R ;
each R is phenylene unsubstituted or substituted by methyl ;
each $R^1$ and $R^2$ is methyl ;
h and i are each 4 ;
v is from about 15 to about 50 ;
(x + y + z) times q is about 25 to about 75 ; and

a) each b, d, and f is 1 and $R^3$-$R^{20}$ are all hydrogen ; or

b) each b, d and f is zero ; each $R^3$, $R^4$, $R^8$-$R^{10}$, $R^{14}$-$R^{16}$ and $R^{20}$ is hydrogen ; and each $R^7$, $R^{13}$, and $R^{19}$ is methyl ;

L′ is P′-BRB′ or P′ ;

and P′ is

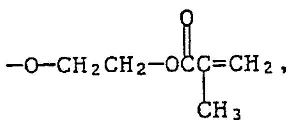, 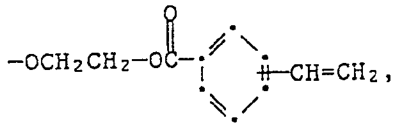, 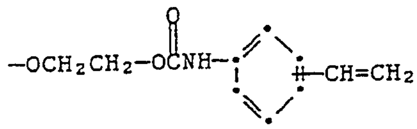,

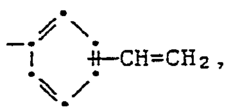, or $-CH=CH_2$.

31. The device of claim 30 wherein each W is a bond, each L is –BR– or –RB′–, and L′ and L″ are each $-CH=CH_2$.

32. The device of claim 1 which is a contact lens.

33. The device of claim 1 wherein each A is of the formula

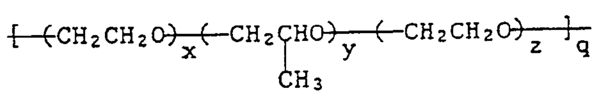 or

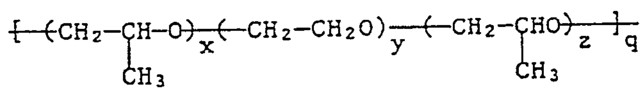

wherein each of x, y, z, and q are greater than zero.

34. The device of claim 33 wherein q is one.

35. The device of claim 33 wherein x and z within any one A are the same.

36. The device of claim 33 wherein each x and each z has the same value.

37. A process for the manufacture of an optically clear wettable, flexible, oxygen permeable polymer of

a) a crosslinkable monomer having a segment S″ of the formula

$$-(W-S'-L-D-A-L)_a- \qquad (Ia)$$

wherein each of the variables is as defined in claim 1, and

b) a sufficient amount of a hydrophilic modifying monomer to impart to said polymer a water content in its aqueous swollen state of at least 10%, said hydrophilic modifying monomer being selected from the compounds of formula (A), (B) and (C) as defined in claim 1 ; and said polymer having a receding contact angle of less than 60° ; and having a Dk (× $10^{-10}$ mm · ml $O_2/cm^2$ · sec · mmHg) of at least about 7, by reacting the required intermediates in a manner known per se.

38. The process of claim 37 for the manufacture of a wettable, flexible, oxygen permeable, polymer wherein the crosslinkable monomer a) has segments of formula Ib,

$$-(D-A-L-S'')_c- \qquad (Ib)$$

or of formula Ic,

$$-(S'')_c-D-S'-La \qquad (Ic)$$

or of formula Id

$$-(D-A-L)-(S'')_c- \qquad (Id)$$

wherein each S″ is independently a segment of formula Ia of claim 1 ;
each D, A and L is independently as defined in claim 1 ;
c is 1-10 ;
and a times c is 1-10 ;
La being selected from –BRB′– and –BR– ; and wherein S′, B, R and B′ are as defined in claim 1.

39. The process of claim 38 for the manufacture of a wettable, flexible, oxygen permeable, polymer wherein the monomer a) has the formula

$$L'-[-(D-A-L)_e-S''-]_c-L'' \qquad (I)$$

wherein e is zero or 1 ;
each D, A, L, S″, and c is independently as defined in claim 10 ;
L′ is hydrogen, P′-R–, P′-BR–, P′-RB′–, or P′-BRB′– ; and L″ is hydrogen, or –P′, or, in case that e is zero, also –D-S′-BR-P′ or –D-S′-BRB′-P′ and wherein P′ is hydrogen, amino, hydroxy, NCO, NCS, vinyl or a moiety containing a crosslinkable group which may be crosslinked when coreacted with a suitable crosslinking agent or when irradiated by actinic radiation.

40. The device of claim 1 wherein said hydrophilic modifying monomer is selected from the group of the formula

$$(R^{24}\text{-div})_{nz}Hy \quad (C).$$

41. The process of claim 37 wherein said hydrophilic modifying monomer is selected from the group of the formula

$$(R^{24}\text{-div})_{nz}Hy \quad (C).$$

42. The process of claim 41 wherein $R^{24}$ is an ethylenically unsaturated group.

43. The process of claim 42 wherein $R^{24}$ is vinyl, 1-methylvinyl, 2-methylvinyl or allyl ;

ia) 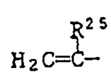

and the terminus of div to which it is bound is $-C(O)R^{26}$, the carbonyl being bound to $R^{24}$, where $R^{25}$ is hydrogen or methyl and $R^{26}$ is –O–, or $-NR^{27}-$ with $R^{27}$ being hydrogen or lower alkyl ;

ib) $H_2C=CH-$ and the terminus of div to which it is bound is

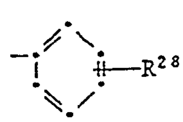 ,

the left hand bond being bound to $R^{24}$, wherein $R^{28}$ is –O–, $-NR^{27}-$, –C(O)–,

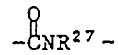

or –C(O)O– ; and

ic) 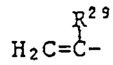

and the terminus of div to which it is bound is $-C(O)R^{30}-$, the carbonyl being bound to $R^{24}$ wherein $R^{30}$ is lower alkylene or $-[CH_2CH(\text{loweralkyl})-O]_{1-5}-$ and $R^{29}$ is hydrogen, lower alkyl, or cyano.

44. The process of claim 41 wherein Hy is

ce) morpholino which is unsubstituted or mono- up to tetra-substituted by lower alkyl ;

cf) 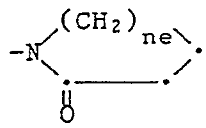

wherein ne is one, two, or three, each of which is unsubstituted or substituted, by lower alkyl ;

cg) 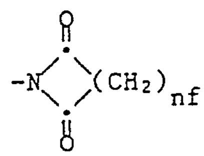

where nf is 2 or 3, each of which is unsubstituted or substituted by lower alkyl ;

ch) a divalent group of the formula

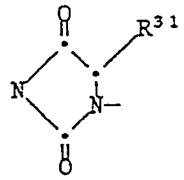 , 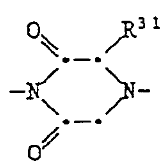 , 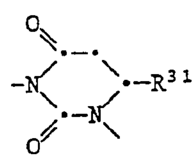

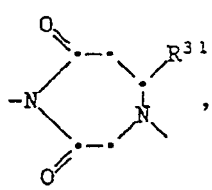 , or 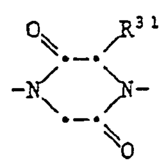

wherein $R^{31}$ is hydrogen or carboxy ;

ci) 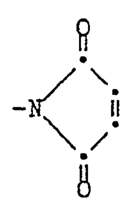 ,

cj) 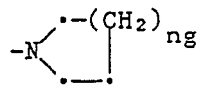

where ng is one or two, each of which is unsubstituted or substituted by lower alkyl ;

ck) 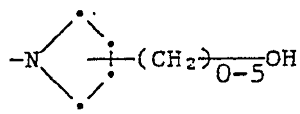 ;

cl) a polyol selected from polyvinyl alcohol radicals,

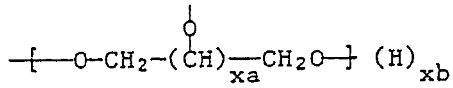

wherein

xa is 2-10 and xb is an integer from zero up to xa + 1 inclusive, the cyclic saccharide analogs thereof, the di-tetra saccharides thereof, $C(CH_2O)_4(H)_{xc}$ wherein

xc is 0-3, and polyhydroxy lower alkylene glycol radicals wherein up to 50%, of the hydroxy groups are missing their alcoholic hydrogens.

45. The process of claim 41 wherein div is selected from

$-(CH_2)_2NHCOO(CH_2)_2-$;

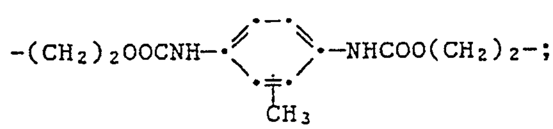

$-(CH_2)_2NHCO-$; and

$-(CH_2)_2NHCO(CH_2)_2-$.

46. The process of claim 41 wherein said hydrophilic modifying monomer is selected from

aca)

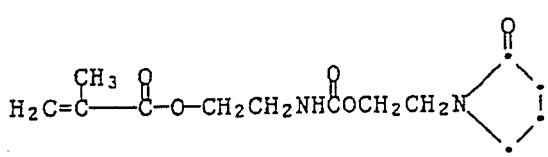 ,

acb)

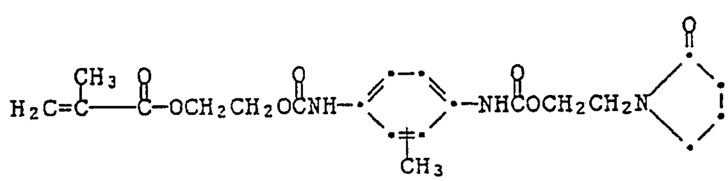 ,

acc) 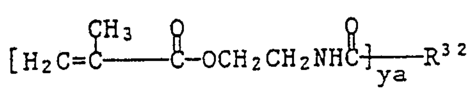

wherein $R^{32}$ is

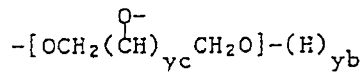

in which yc is 1-6, and yb is 0 up to (yc + 1), and ya is 1 up to (yc + 2 – yb),

acd) 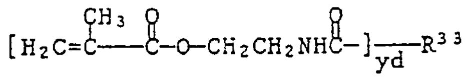

wherein $R^{33}$ is $C(CH_2O)_4(H)_{4-yd}$
and yd is 1-4 ;

ace) polyvinyl alcohol having at least one and up to 50% inclusive, of the alcoholic hydrogens thereof absent ; and

acf) 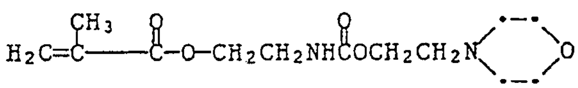 .

47. The process of claim 46 wherein said hydrophilic modifying monomer is selected from said groups aca), acb) and acf).

48. Use of a polymer of claim 37 or 39 for the manufacture of an ophthalmic device.

## Ansprüche

### Patentansprüche für folgenden Vertragsstaat : AT, BE, CH, DE, FR, GB, GR, IT, LI, LU, NL, SE

1. Optisch klares, benetzbares, flexibles, sauerstoffdurchlässiges ophthalmisches Mittel, hergestellt aus einem Polymer aus

a) einem vernetzbaren Monomer mit einem Segment S" der Formel Ia

$$-(W\text{-}S'\text{-}L\text{-}D\text{-}A\text{-}L)\text{-}_a \quad (Ia),$$

worin a 1 bis 10 ist ;
jedes D unabhängig Sauerstoff oder $-N(R^{21})-$ ist ;
jedes W eine Bindung, Sauerstoff oder $-N(R^{21})-$ ist ;
jedes L unabhängig –BRB'–, –BR–, –RB'– oder –R– ist ;
jedes S' unabhängig ein Segment mit der Formel II ist,

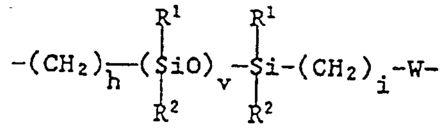 (II)

jedes A unabhängig ein Segment der Formel III ist,

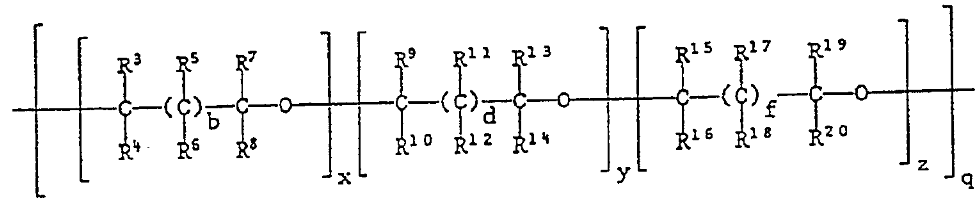 (III)

wobei der endständige Sauerstoff innerhalb jeder Einheit der Formel III durch $-N(R^{21})-$ ersetzbar ist;

worin jedes b, d und f unabhängig 0-4 ist; q eine Zahl von 1-1000 ist; jedes x, y und z unabhängig 0 bis 200 ist, vorausgesetzt, daß wenigstens eines von x, y und z wenigstens 1 ist; so daß (x + y + z) multipliziert mit q 4 bis 1000 ist;

jedes h und i eine ganze Zahl von 1 bis 6 ist, v eine ganze Zahl von 2 bis 300 ist; $R^1$ und $R^2$ unabhängig Alkyl mit bis zu 18 Kohlenstoffatomen sind, oder Aryl mit bis zu 12 Kohlenstoffatomen;

jedes von $R^3$, $R^4$, $R^7$-$R^{10}$, $R^{13}$-$R^{16}$, $R^{19}$ und $R^{20}$ unabhängig ausgewählt wird aus der Gruppe bestehend aus Wasserstoff, Halogen, einem eine aliphatische, aromatische oder heterocyclische Gruppe enthaltenden Rest, ausgewählt aus unsubstituiertem $C_1$-$C_{16}$-Alkyl; substituiertem $C_1$-$C_{16}$-Alkyl; unsubstituiertem $C_2$-$C_{16}$-Alkenyl; und substituiertem $C_2$-$C_{16}$-Alkenyl; worin die Alkyl- und Alkenylsubstituenten unabhängig ausgewählt werden aus $C_1$-$C_{16}$-Alkoxycarbonyl, $C_2$-$C_{16}$-Alkenyloxycarbonyl, Fluor, Aryl mit bis zu 10 Kohlenstoffatomen, $C_1$-$C_{16}$-Alkoxy, $C_1$-$C_{16}$-Alkanoyloxy, Aryloxy mit bis zu 10 Kohlenstoffatomen, $C_3$-$C_6$-Alkenoyloxy, Aroyl mit bis zu 10 Kohlenstoffatomen, Aroyloxy mit bis zu 11 Kohlenstoffatomen, $C_3$-$C_8$-Cycloalkyl, $C_3$-$C_8$-Cycloalkoxy, $C_3$-$C_8$-Cycloalkyl-carbonyloxy, $C_3$-$C_8$-Cycloalkoxy-carbonyl, Oxacycloalkyl mit bis zu 7 Kohlenstoffatomen, Oxacycloalkoxy mit bis zu 7 Kohlenstoffatomen, Oxacycloalkoxy (mit bis zu 7 Kohlenstoffatomen)-carbonyl, Oxacycloalkyl (bis zu 7 Kohlenstoffatome)-carbonyloxy, und Aryl (bis zu 10 Kohlenstoffatome)-oxycarbonyl, wobei jeder der genannten Alkyl- und Alkenylsubstituenten seinerseits wahlweise substituiert ist durch $C_1$-$C_6$-Alkyl, Fluor oder $C_1$-$C_6$-Alkoxy, vorausgesetzt, daß das zuletzt genannte Alkoxy nicht an ein Kohlenstoffatom gebunden ist, das schon einfach an ein anderes Sauerstoffatom gebunden ist; $R^3$, $R^4$, $R^7$-$R^{10}$, $R^{13}$-$R^{16}$, $R^{19}$ und $R^{20}$ weiters unabhängig ausgewählt werden aus Aryl mit bis zu 10 Kohlenstoffatomen, $C_3$-$C_8$-Cycloalkyl und Oxacyclolalkyl mit bis zu 7 Kohlenstoffatomen, von denen jedes unsubstituiert sein kann oder weiter substituiert durch einen Substituenten ausgewählt aus der Gruppe der Substituenten für genanntes $R^3$-Alkyl, wie oben dargelegt;

$R^5$, $R^6$, $R^{11}$, $R^{12}$, $R^{17}$ und $R^{18}$ aus denselben Gruppen ausgewählt werden, wie oben für $R^3$ dargelegt; und $R^5$, $R^6$, $R^{11}$, $R^{12}$, $R^{17}$ und $R^{18}$ weiters unabhängig ausgewählt werden aus $C_1$-$C_{16}$-Alkoxycarbonyl, $C_3$-$C_{16}$-Alkenoyloxy, $C_2$-$C_{16}$-Alkenyloxycarbonyl und $C_1$-$C_{16}$-Alkanoyloxy, von denen jedes weiter substituiert sein kann durch Fluor, Aryl mit bis zu 10 Kohlenstoffatomen oder $C_1$-$C_{16}$-Alkoxy, und $R^5$, $R^6$, $R^{11}$, $R^{12}$, $R^{17}$ und $R^{18}$ weiters unabhängig ausgewählt werden aus Aryloxy mit bis zu 10 Kohlenstoffatomen, Cycloalkoxy mit bis zu 8 Kohlenstoffatomen, Cycloalkyl (mit bis zu 8 Kohlenstoffatomen)-carbonyloxy, Cycloalkoxy (bis zu 8 Kohlenstoffatome)-carbonyl, Aroyloxymit bis zu 11 Kohlenstoffatomen, Oxacycloalkoxy mit bis zu 7 Kohlenstoffatomen, Oxacycloalkenyloxy mit bis zu 7 Kohlenstoffatomen, Oxacycloalkoxy (bis zu 7 Kohlenstoffatome)-carbonyl, Oxacycloalkyl (mit bis zu 7 Kohlenstoffatomen)-carbonyloxy, und Aryloxy (mit bis zu 10 Kohlenstoffatomen)-carbonyl, von denen jedes weiter substituiert sein kann durch Fluor, $C_1$-$C_6$-Alkyl oder $C_1$-$C_6$-Alkoxy, vorausgesetzt, daß jedweder Substituent mit einem einfach gebundenen Sauerstoffatom an der Verknüpfung zum Rest des Moleküls nicht ein Substituent an demselben Kohlenstoffatom sein kann, das einfach an ein anderes Sauerstoffatom gebunden ist; oder zwei benachbarte Gruppen, ausgewählt aus $R^3$-$R^{20}$, zusammen mit den Atomen, an die sie gebunden sind, einen 5-8gliedrigen Cycloalkyl-, Oxacycloalkyl- oder Bicycloalkylring bilden können;

jedes $R^{21}$ unabhängig ausgewählt wird aus Wasserstoff, $C_1$-$C_4$-Alkyl und Phenyl, jedes B und B' ausgewählt wird aus

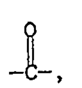, 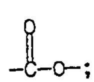; und 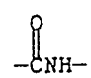

wobei die Carbonylgruppe an A, S' oder D gebunden ist; und jedes R unabhängig eine divalente Verknüpfungsgruppe ist, die ausgewählt wird aus

a) einer divalenten aliphatischen Gruppe mit bis zu 25 Kohlenstoffatomen, die durch Oxy, Carbonyloxy, Amino, Aminocarbonyl, Oxycarbonyl, Ureido, Oxycarbonylamino oder Carbonylamino unterbrochen sein kann;

b) einer divalenten 5-7gliedrigen cycloaliphatischen und 5-7gliedrigen cycloaliphatischen-$C_1$-$C_{20}$-aliphatischen Gruppe ;

c) einer divalenten Arylengruppe mit 6-25 Atomen ;

d) einer divalenten Aralkyl- oder Alkarylgruppe mit 7 bis 25 Kohlenstoffatomen ; und

e) einem divalenten Alkylen-Aryl-Alkylen mit 8 bis 30 Kohlenstoffatomen, worin die Gruppen b), d) und e) wahlweise in ihren nicht-cyclischen aliphatischen bzw. Alkylgruppen unterbrochen sein können durch die gleichen Gruppen wie in Gruppe a), und worin die Arylringe in den Gruppen c), d) und e) weiters substituiert sein können mit einem oder mehreren Substituenten, die ausgewählt werden aus Halogen, $C_1$-$C_4$-Alkyl und $C_1$-$C_{12}$-Perhaloalkyl, und worin eine in Gruppe a) dargelegte unterbrechende Gruppe zwischen den cyclischen und nicht-cyclischen Teilen der Gruppen b), d) und e) anwesend sein kann ; und

b) von Null bis zu einer ausreichenden Menge eines hydrophilen modifizierenden Monomers, um dem Polymer einen Wassergehalt im wäßrigen gequollenen Zustand von wenigstens 10% zu verleihen, wobei besagtes hydrophiles modifizierendes Monomer ausgewählt wird aus

aa) Polyethylenglycolen der Formel

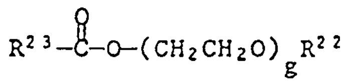 (A)

oder ab) Pyrrolidonen der Formel

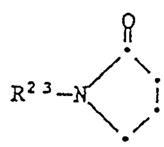 (B)

worin $R^{22}$ Wasserstoff oder $C_1$-$C_7$-Alkyl ist, g eine ganze Zahl von 1-25 ist,

oder ac) einer Verbindung der Formel

$$(R^{24}\text{-div})_{nz}Hy \quad (C)$$

worin $R^{23}$ eine polymerisierbare oder reaktive Einheit ist, die ausgewählt wird aus i) ethylenisch ungesättigten Resten, ii) Anhydriden, iii) Aminen, iv) Säuren, v) Estern, vi) Amiden, vii) Ethern, viii) Säurehalogeniden,

$R^{24}$ ausgewählt wird aus den Bedeutungen für $R^{23}$ und ix) Epoxygruppen, x) Isocyanaten und Isothiocyanaten und xi) Hydroxy ; div ausgewählt wird aus

ba) einer divalenten aliphatischen Gruppe mit bis zu 25 Kohlenstoffatomen, vorzugsweise Alkyl, Alkenyl oder Alkinyl, die auch durch Oxy, Carbonyloxy, Amino, Aminocarbonyl, Oxycarbonyl, Ureido, Oxycarbonylamino oder Carbonylamino unterbrochen oder abgeschlossen oder unterbrochen und abgeschlossen sein kann ;

bb) einer divalenten 5-7gliedrigen cycloaliphatischen und 5-7gliedrigen cycloaliphatischen-$C_1$-$C_{20}$-aliphatischen Gruppe, die auch wie oben in der Gruppe ba) unterbrochen, abgeschlossen oder unterbrochen und abgeschlossen sein kann, außer daß diese Unterbrechungen nicht innerhalb der cycloaliphatischen Teile auftreten können ;

bc) einer divalenten Arylengruppe mit 6-25 Kohlenstoffatomen, die unsubstituiert ist oder substituiert durch wenigstens einen Substituenten, der ausgewählt wird aus Halogen, $C_1$-$C_4$-Alkyl und $C_1$-$C_{12}$-Perhaloalkyl ;

bd) einem divalenten Aralkyl oder Alkaryl oder Alkylen-aryl-alkylen mit 7-25 Kohlenstoffatomen, das im Alkylteil unterbrochen oder nicht unterbrochen ist, oder abgeschlossen, oder unterbrochen im Alkylteil und abgeschlossen mit einer unterbrechenden oder abschließenden Gruppe wie unter ba) erwähnt, und jede dieser nicht unterbrochenen, unterbrochenen und abgeschlossenen Aralkyl- und Alkarylgruppen ist weiters unsubstituiert oder substituiert durch einen unter Halogen, $C_1$-$C_4$-Alkyl und $C_1$-$C_{12}$-Perhaloalkyl gewählten Substituenten ;

be)

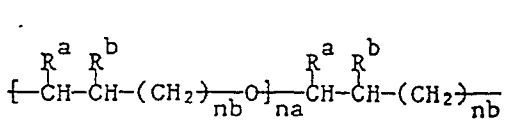 (D)

worin na eine ganze Zahl von 8-100 ist; und

bea) $R^a$ Wasserstoff, $R^b$ Methyl und nb Null ist; oder

beb) $R^a$ Methyl, $R^b$ Wasserstoff und nb Null ist; oder

bec) $R^a$ und $R^b$ Wasserstoff sind und nb 1 ist;

nz eine ganze Zahl von 1 bis zur Valenz von Hy ist, und wo nz weniger als die Valenz von Hy ist, die verbleibenden Valenzen von Hy von Wasserstoffatomen besetzt werden;

und Hy eine hydrophile Gruppe ist, die ausgewählt wird aus

ca) Morpholino; cyclischen Amidresten mit 5-7 Ringgliedern; gesättigten und ungesättigten cyclischen N,N-Diamidresten mit 5-6 Ringgliedern; Gruppen der Formel

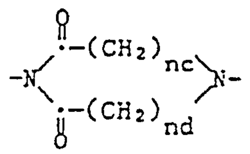 (E) oder 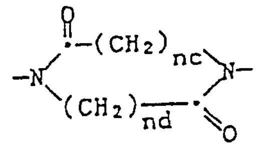 (E')

mit 6-7 Ringgliedern, worin nc und nd ausgewählt werden aus 0-2; und cyclischen Aminen mit 5-6 Ringgliedern; jedes unsubstituiert oder substituiert durch Hydroxy-$C_1$-$C_5$-alkyl, Carboxy oder niederes Alkyl;

cb) Tetrahydrofurfuryl;

cc) Mono-, Di- und Polysaccharidresten, geradkettig oder cyclisch, ihren entsprechenden Zuckeralkoholresten, Pentaerythritresten und Polyvinylalkoholresten;

cd) Polyhydroxy-$C_2$-$C_7$-alkylresten; wobei besagtes Mittel einen anwachsenden Kontaktwinkel von weniger als 60° hat; und ein Dk (× $10^{-10}$ mm · ml $O_2$/$cm^2$ · s · mmHg) von wenigstens etwa 7.

2. Mittel nach Anspruch 1, worin a 1 und jedes D Sauerstoff ist.

3. Mittel nach Anspruch 1, worin jedes L für –BRB′, –BR– oder –RB′– steht, jedes B für –C(O)NH–, worin das Stickstoffatom an R gebunden ist, und R unsubstituiertes oder durch Methyl substituiertes Phenylen ist.

4. Mittel nach Anspruch 1, worin jedes $R^1$ und $R^2$ Methyl, h 4, i 4 und v von etwa 15 bis etwa 50 ist.

5. Mittel nach Anspruch 1, worin (x + y + z) mal q etwa 25 bis etwa 75 beträgt.

6. Mittel nach Anspruch 1, worin

a) jedes b, d und f 1 ist und $R^3$-$R^{20}$ alle Wasserstoff sind, oder

b) jedes b, d und f Null ist, jedes $R^3$, $R^4$, $R^8$-$R^{10}$, $R^{14}$-$R^{16}$ und $R^{20}$ Wasserstoff und jedes $R^7$, $R^{13}$ und $R^{19}$ Methyl ist.

7. Mittel nach Anspruch 6, worin (x + y + z) mal q etwa 25 bis etwa 75 beträgt.

8. Mittel nach, Anspruch 1, worin

a 1 ist;

jedes D Sauerstoff ist;

jedes L für –BRB′–, –BR– oder –RB′– steht;

jedes B und B′ für –C(O)NH– steht, wobei das Stickstoffatom an R gebunden ist;

jedes R unsubstituiertes oder durch Methyl substituiertes Phenylen ist;

jedes $R^1$ und $R^2$ Methyl ist;

h und i jeweils 4 sind;

v von etwa 15 bis etwa 50 beträgt;

(x + y + z) mal q etwa 25 bis etwa 75 beträgt; und

a) jedes b, d und f 1 und $R^3$-$R^{20}$ alle Wasserstoff sind; oder

b) jedes b, d und f Null ist; jedes $R^3$, $R^4$, $R^8$-$R^{10}$, $R^{14}$-$R^{16}$ und $R^{20}$ Wasserstoff ist und jedes $R^7$, $R^{13}$ und $R^{19}$ Methyl ist.

9. Mittel nach Anspruch 8, worin jedes W eine Bindung ist und jedes L für –BR– oder –RB′– steht.

10. Benetzbares, flexibles, sauerstoffdurchlässiges ophthalmisches Mittel nach Anspruch 1, wobei das vernetzbare Monomer Segmente der Formel Ib

$$-(D-A-L-S'')-_c \qquad (Ib)$$

hat, oder der Formel Ic

$$-(S'')_c-D-S'-La- \qquad (Ic)$$

oder der Formel Id

$$-(D-A-L)-(S'')_c- \qquad (Id)$$

worin jedes S" unabhängig ein Segment der Formel Ia von Anspruch 1 ist;
jedes D, A und L unabhängig wie im Anspruch 1 definiert ist;
c 1-10 ist;
und a mal c 1-10 ist;
wobei La ausgewählt wird aus –BRB′– und –BR–; und worin S′, B, R und B′ wie im Anspruch 1 definiert sind.

11. Mittel nach Anspruch 10, worin a 1 und jedes D Sauerstoff ist.

12. Mittel nach Anspruch 10, worin jedes L für –BRB′–, –BR– oder –RB′– steht, jedes B für –C(O)NH–, worin das Stickstoffatom an das R gebunden ist, und R unsubstituiertes oder durch Methyl substituiertes Phenylen ist.

13. Mittel nach Anspruch 10, worin jedes $R^1$ und $R^2$ Methyl ist; h 4, i 4 und v von etwa 15 bis etwa 50 ist.

14. Mittel nach Anspruch 10, worin (x + y + z) mal q etwa 25 bis etwa 75 beträgt.

15. Mittel nach Anspruch 10, worin
a) jedes b, d und f 1 ist und $R^3$-$R^{20}$ alle Wasserstoff sind oder
b) jedes b, d und f 0 ist, jedes $R^3$, $R^4$, $R^8$-$R^{10}$, $R^{14}$-$R^{16}$ und $R^{20}$ Wasserstoff ist und jedes $R^7$, $R^{13}$ und $R^{19}$ Methyl.

16. Mittel nach Anspruch 15, worin (x + y + z) mal q etwa 25 bis etwa 75 beträgt.

17. Mittel nach Anspruch 10, worin c 1 ist.

18. Mittel nach Anspruch 10, worin
a 1 ist;
jedes D Sauerstoff ist,
jedes L für –BRB′–, –BR– oder –RB′– steht;
jedes B und B′ für –C(O)NH–, wobei das Stickstoffatom an R gebundenist;
jedes R unsubstituiertes oder durch Methyl substituiertes Phenylen ist;
jedes $R^1$ und $R^2$ Methyl ist;
h und i jeweils 4 sind;
v etwa 15 bis etwa 50 beträgt;
(x + y + z) mal q etwa 25 bis etwa 75 beträgt; und
a) jedes b, d und f 1 und $R^3$-$R^{20}$ alle Wasserstoff sind, oder
b) jedes b, d und f Null ist und $R^3$, $R^4$, $R^8$-$R^{10}$, $R^{14}$-$R^{16}$ und $R^{20}$ Wasserstoff ist und jedes $R^7$, $R^{13}$ und $R^{19}$ Methyl ist;
und c 1 ist.

19. Mittel nach Anspruch 18, worin jedes W eine Bindung ist und jedes L für –BR– oder –RB′– steht.

20. Benetzbares, flexibles, sauerstoffdurchlässiges ophthalmisches Mittel nach Anspruch 14, wobei das Monomer a) die Formel

$$L'\!-\!\!\left[(D\text{-}A\text{-}L\text{-})_e\text{-}S''\right]_c\!L'' \qquad (I)$$

hat, worin e Null oder 1 ist; jedes D, A, L, S″ und c unabhängig wie im Anspruch10 definiert ist; L′ Wasserstoff, P′-R–, P′-BR–, P′-RB′– oder P′-BRB′– ist; und L″ Wasserstoff ist oder –P′ oder, im Falle daß e 0 ist, auch –D-S′-BR-P′ oder –D-S′-BRB′-P′ und worin P′ Wasserstoff,Amino, Hydroxy, NCO, NCS, Vinyl oder eine Einheit ist, die eine vernetzbare Gruppe enthält, die vernetzt werden kann, wenn mit einem geeigneten Vernetzungsmittel coreagiert oder mit wirksamer Strahlung bestrahlt wird.

21. Mittel nach Anspruch 20, worin a 1 und jedes D Sauerstoff ist.

22. Mittel nach Anspruch 20, worin jedes L für –BRB′, –BR– oder –RB′– steht, jedes B für –C(O)NH–, worin das Stickstoffatom an R gebunden ist, und R unsubstituiertes oder durch Methyl substituiertes Phenylen ist.

23. Mittel nach Anspruch 20, worin jedes $R^1$und $R^2$ Methyl, h 4, i 4 und v von etwa 50 ist.

24. Mittel nach Anspruch 20, worin (x + y + z) mal q etwa 25 75 beträgt.

25. Mittel nach Anspruch 20, worin a) jedes b, d und f 1 ist und $R^3$-$R^{20}$ alle Wasserstoff sind, oder b) jedes b, d und f Null ist, jedes $R^3$, $R^4$, $R^8$-$R^{10}$, $R^{14}$-$R^{16}$ und $R^{20}$ Wasserstoff und jedes $R^7$, $R^{13}$ und $R^{19}$ Methyl ist.

26. Mittel nach Anspruch 25, worin (x + y + z) mal q etwa 25 bis etwa 75 beträgt.

27. Mittel nach Anspruch 20, worin c 1 ist.

28. Mittel nach Anspruch 20, worin L′ für P′-BRB′– steht.

29. Mittel nach Anspruch 20, worin jedes P'

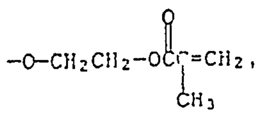, 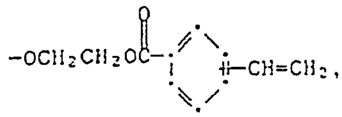, oder 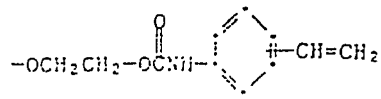

ist.

30. Mittel nach Anspruch 20, worin
a 1 ist;
jedes D Sauerstoff ist;
jedes L für –BRB'–, –BR– oder –RB'– steht;
jedes B und B' für –C(O)NH– steht, wobei das Stickstoffatom an R gebunden ist;
jedes R unsubstituiertes oder durch Methyl substitutiertes Phenylen ist;
jedes $R^1$ und $R^2$ Methyl ist;
h und i jeweils 4 sind;
v von etwa 15 bis etwa 50 beträgt;
(x + y + z) mal q etwa 25 bis etwa 75 beträgt; und
a) jedes b, d und f 1 und $R^3$-$R^{20}$ alle Wasserstoff sind; oder
b) jedes b, d und f Null ist; jedes $R^3$, $R^4$, $R^8$-$R^{10}$, $R^{14}$-$R^{16}$ und $R^{20}$ Wasserstoff ist und jedes $R^7$, $R^{13}$ und $R^{19}$ Methyl ist;
L für P'-BRB' oder P' steht;
und P'

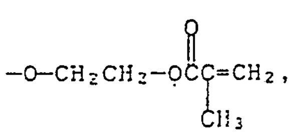, 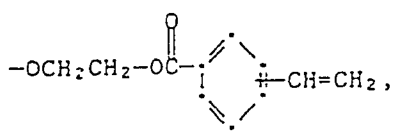, 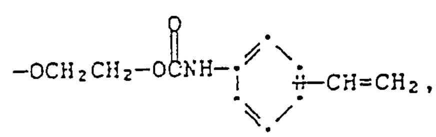,

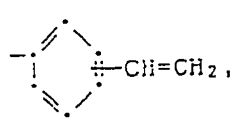, oder $-CH=CH_2$.

ist.

31. Mittel nach Anspruch 30, worin jedes W eine Bindung, jedes L gleich –BR– oder –RB'– und L und L" jedes $-CH=CH_2$ sind.

32. Mittel nach Anspruch 1, das eine kontaktlinse ist.

33. Mittel nach Anspruch 1, worin jedes A die Formel

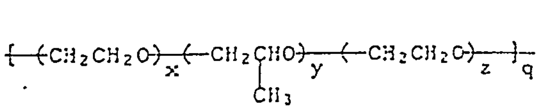 oder 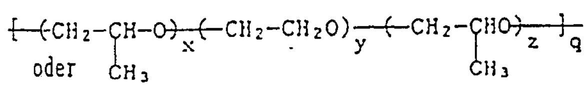

hat, worin jedes x, y, z und q größer als 0 ist.

34. Mittel nach Anspruch 33, worin q 1 ist.

35. Mittel nach Anspruch 33, worin x und z innerhalb irgendeines A gleich sind.

36. Mittel nach Anspruch 33, worin jedes x und jedes z den gleichen Wert hat.

37. Optisch klares benetzbares, flexibles, sauerstoffdurchlässiges Polymer, umfassend
a) ein vernetzbares Monomer mit einem Segment S" der Formel

$$-(W\text{-}S'\text{-}L\text{-}D\text{-}A\text{-}L)_a \quad (Ia)$$

worin jede der Variablen wie im Anspruch 1 definiert ist ; und

b) einer ausreichenden Menge eines hydrophilen modifizierenden Monomers, um dem Polymer einen Wassergehalt im wäßrigen gequollenen Zustand von wenigstens 10% zu verleihen, wobei dieses hydrophile modifizierende Monomer aus den Verbindungen der Formeln (A), (B) und (C),wie im Anspruch 1 definiert, ausgewählt wird ; und das Polymer einen anwachsenden Kontaktwinkel von weniger als 60° hat und ein Dk ($\times 10^{-10}$ mm · ml $O_2/cm^2$ · s · mmHg) von wenigstens etwa 7.

38. Benetzbares, flexibles, sauerstoffdurchlässiges Polymer nach Anspruch 37,, worin das vernetzbare Monomer a) Segmente der Formel Ib

$-(D\text{-}A\text{-}L\text{-}S'')_c-$ (Ib)

oder der Formel Ic $-(S'')_c\text{-}D\text{-}S'\text{-}La$ (Ic)

oder der Formel Id $-(D\text{-}A\text{-}L)\text{-}(S'')_c-$ (Id)

hat, worin jedes S″ unabhängig ein Segment der Formel Ia von Anspruch 1 ist ;
jedes D, A und L unabhängig wie im Anspruch 1 definiert ist ;
c 1-10 ist ;
a mal c 1-10 ist ;
La ausgewählt wird aus –BRB′– und –BR– ; und worin S′, B, R und B′ wie im Anspruch 1 definiert sind.

39. Benetzbares, flexibles, sauerstoffdurchlässiges Polymer nach Anspruch 38, wobei das Monomer

a) die Formel $L'\text{—}[(D\text{-}A\text{-}L)_e\text{-}S''\text{—}]_c L''$ (I)

hat, worin e 0 oder 1 ist ;
jedes D, A, L, S″ und c unabhängig wie im Anspruch 10 definiert ist ;
L′ Wasserstoff, P′-R–, P′-BR–, P′-RB′– oder P-′BRB′– ist ; und L″ Wasserstoff oder P′ ist, oder, im Fall daß e 0 ist, auch –D-S′-BRB′-P′ oder –D-S′-BRB′-P′ und worin P′ Wasserstoff, Amino, Hydroxy, NCO, NCS, Vinyl oder eine Einheit ist, die eine vernetzbare Gruppe enthält, die vernetzt werden kann, wenn sie mit einem geeigneten Vernetzungsmittel coreagiert oder mit wirksamer Strahlung bestrahlt wird.

40. Mittel nach Anspruch 1, worin das hydrophile modifizierende Monomer ausgewählt wird aus der Gruppe der Formel

$$(R^{24}\text{-div})_{nz}Hy \quad (C).$$

41. Mittel nach Anspruch 37, worin dieses hydrophile modifizierende Monomer aus der Gruppe der Formel

$$(R^{24}\text{-div})_{nz}Hy \quad (C)$$

ausgewählt wird.

42. Mittel nach Anspruch 41, worin $R^{24}$ eine ethylenisch ungesättigte Gruppe ist.

43. Polymer nach Anspruch 42, worin $R^{24}$ Vinyl, 1-Methylvinyl, 2-Methylvinyl oder Allyl ist ;

ia) 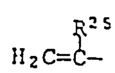

und das Ende von div, an das es gebunden ist, ist –C(O)$R^{26}$, wobei das Carbonyl an $R^{24}$ gebunden ist, wo $R^{25}$ Wasserstoff oder Methyl ist und $R^{26}$ für –O– oder –$NR^{27}$– steht, wobei $R^{27}$ Wasserstoff oder niederes Alkyl ist

ib) $H_2C=CH–$ und das Ende von div, an das es gebunden ist,

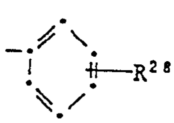 ,

ist, wobei die Bindung links an $R^{24}$ gebunden ist, worin $R^{28}$ für –O–, –$NR^{27}$–, –C(O)–,

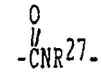

oder –C(O)O– steht ; und

ic) 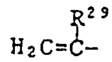

und das Ende von div, an das es gebunden ist, $-C(O)R^{30}-$ ist, wobei das Carbonyl an $R^{24}$ gebunden ist, worin $R^{30}$ niederes Alkylen oder $-[CH_2CH(\text{niederes Alkyl})\text{-}O]_{1-5}-$ ist und $R^{29}$ Wasserstoff, niederes Alkyl oder Cyano.

44. Polymyer nach Anspruch 41, worin Hy ausgewählt wird aus

ce) Morpholino, das unsubstituiert ist oder mono- bis hin zu tetrasubstituiert durch niederes Alkyl ;

cf) 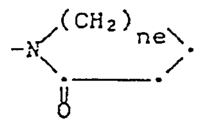

worin ne 1, 2 oder 3 ist, wovon jedes unsubstituiert ist oder durch niederes Alkyl substituiert ;

cg) 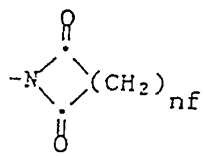

worin nf 2 oder 3 ist, wovon jedes unsubstituiert ist oder substituiert durch niederes Alkyl ;

ch) einer divalenten Gruppe der Formel

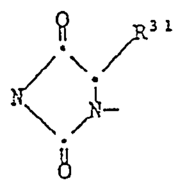 , 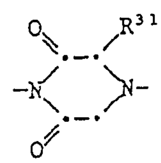 , 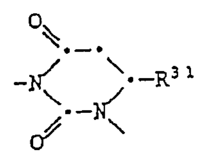

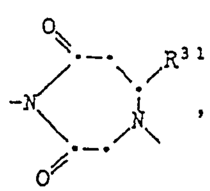 , oder 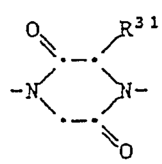

worin $R^{31}$ Wasserstoff oder Carboxy ist ;

ci) 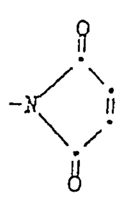

cj) 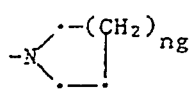

worin ng 1 oder 2 ist, wovon jedes unsubstituiert oder durch niederes Alkyl substituiert ist;

ck) 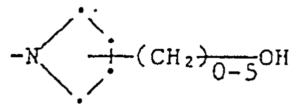 ;

cl) einem Polyol, das ausgewählt wird aus Polyvinylalkohol-Resten

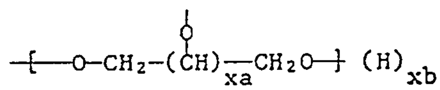

worin

xa 2-10 ist und xb eine ganze Zahl von 0 bis zu inklusive xa + 1 ist, den cyclischen Saccharid-Analoga davon, den Di-Tetra-Sacchariden davon, $C(CH_2O)_4(H)_{xc}$, worin

xc 0 bis 3 ist, und Polyhydroxy-niederes Alkylen-Glycol-Resten, worin bis zu 50% der Hydroxygruppen ihre alkoholischen Wasserstoffe fehlen.

45. Polymer nach Anspruch 41, worin div ausgewählt wird aus

$$-(CH_2)_2NHCOO(CH_2)_2- ;$$

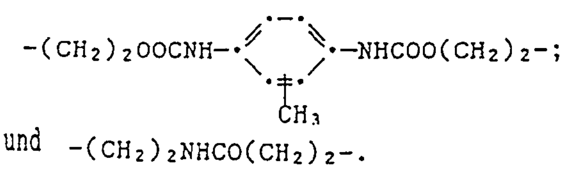

$-(CH_2)_2NHCO-$; und $-(CH_2)_2NHCO(CH_2)_2-$.

46. Verfahren nach Anspruch 41, worin dieses hydrophile modifizierende Monomer ausgewählt wird aus

aca) 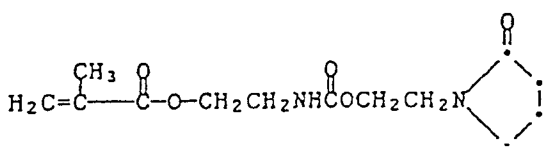

acb) 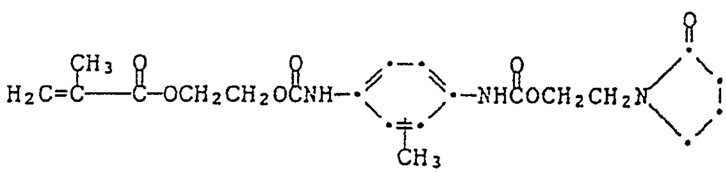 ,

acc) 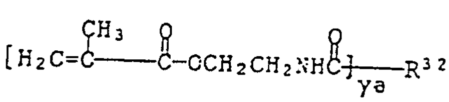

worin $R^{32}$ für

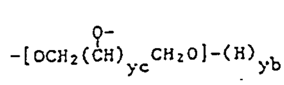

steht, worin yc 1-6 ist und yb 0 bis (yc + 1) ist, und ya 1 bis zu (yc + 2 – yb) ist,

acd) 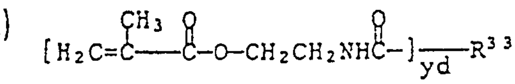

worin $R^{33}$ für $C(CH_2O)_4(H)_{4-yd}$ steht und yd gleich 1-4 ist ;

ace) Polyvinylalkohol wo wenigstens 1 und bis zu inklusive 50% der alkoholischen Wasserstoffe abwesend sind ; und

acf) 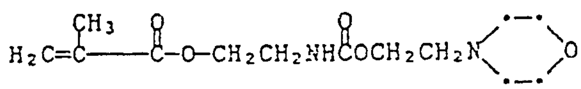 .

47. Polymer nach Anspruch 46, worin dieses hydrophile modifizierende Monomer aus den genannten Gruppen aca), acb) und acf) ausgewählt wird.

48. Verwendung eines Polymers nach Anspruch 37 oder 39 zur Herstellung eines ophthalmischen Mittels.

**Patentansprüche für Vertragsstaat : ES**

1. Optisch klares, benetzbares, flexibles, sauerstoffdurchlässiges ophthalmisches Mittel, hergestellt aus einem Polymer aus

a) einem vernetzbaren Monomer mit einem Segment S″ der Formel Ia

$$-(W\text{-}S'\text{-}L\text{-}D\text{-}A\text{-}L)\text{-}_a \quad (Ia),$$

worin a 1 bis 10 ist ;
jedes D unabhängig Sauerstoff oder $-N(R^{21})-$ ist ;
jedes W eine Bindung, Sauerstoff oder $-N(R^{21})-$ ist ;
jedes L unabhängig –BRB′–, –BR–, –RB′– oder –R– ist ;
jedes S′ unabhängig ein Segment mit der Formel II ist,

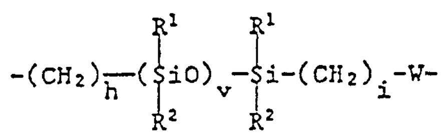 (II)

jedes A unabhängig ein Segment der Formel III ist,

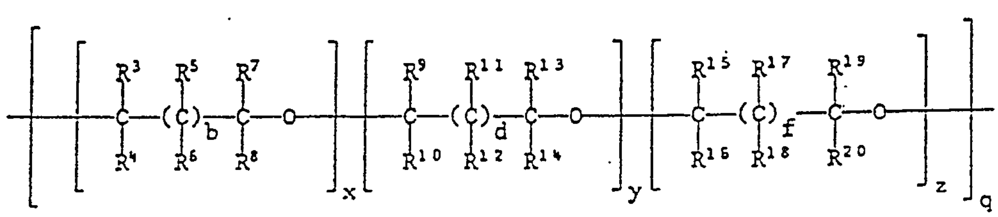 (III)

wobei der endständige Sauerstoff innerhalb jeder Einheit der Formel III durch $-N(R^{21})-$ ersetzbar ist ;

worin jedes b, d und f unabhängig 0-4 ist ; q eine Zahl von 1-1000 ist ; jedes x, y und z unabhängig 0 bis 200 ist, vorausgesetzt, daß wenigstens eines von x, y und z wenigstens 1 ist ; so daß (x + y + z) multipliziert mit q 4 bis 1000 ist ;

jedes h und i eine ganze Zahl von 1 bis 6 ist, v eine ganze Zahl von 2 bis 300 ist ;

$R^1$ und $R^2$ unabhängig Alkyl mit bis zu 18 Kohlenstoffatomen sind, oder Aryl mit bis zu 12 Kohlenstoffatomen ;

jedes von $R^3$, $R^4$, $R^7$-$R^{10}$, $R^{13}$-$R^{16}$, $R^{19}$ und $R^{20}$ unabhängig ausgewählt wird ausder Gruppe bestehend aus Wasserstoff, Halogen, einem eine aliphatische, aromatische oder heterocyclische Gruppe enthaltenden Rest, ausgewählt aus unsubstituiertem $C_1$-$C_{16}$-Alkyl ; substituiertem $C_1$-$C_{16}$-Alkyl ; unsubstituiertem $C_2$-$C_{16}$-Alkenyl; und substituiertem $C_2$-$C_{16}$-Alkenyl ; worin die Alkyl- und Alkenylsubstituenten unabhängig ausgewählt werden aus $C_1$-$C_{16}$-Alkoxycarbonyl, $C_2$-$C_{16}$-Alkenyloxycarbonyl, Fluor, Aryl mit bis zu 10 Kohlenstoffatomen, $C_1$-$C_{16}$-Alkoxy, $C_1$-$C_{16}$-Alkanoyloxy, Aryloxy mit bis zu 10 Kohlenstoffatomen, $C_3$-$C_6$-Alkenoyloxy, Aroyl mit bis zu 10 Kohlenstoffatomen, Aroyloxy mit bis zu 11 Kohlenstoffatomen, $C_3$-$C_8$-Cycloalkyl, $C_3$-$C_8$-Cycloalkoxy, $C_3$-$C_8$-Cycloalkyl-carbonyloxy, $C_3$-$C_8$-Cycloalkoxy-carbonyl, Oxacycloalkyl mit bis zu 7 Kohlenstoffatomen, Oxacycloalkoxy mit bis zu 7 Kohlenstoffatomen, Oxacycloalkoxy (mit bis zu 7 Kohlenstoffatomen)-carbonyl, Oxacycloalkyl (bis zu 7 Kohlenstoffatome)-carbonyloxy, und Aryl (bis zu 10 Kohlenstoffatome)-oxycarbonyl, wobei jeder der genannten Alkyl- und Alkenylsubstituenten seinerseits wahlweise substituiert ist durch $C_1$-$C_6$-Alkyl, Fluor oder $C_1$-$C_6$-Alkoxy, vorausgesetzt, daß das zuletzt genannte Alkoxy nicht an ein Kohlenstoffatom gebunden ist, das schon einfach an ein anderes Sauerstoffatom gebunden ist ; $R^3$, $R^4$, $R^7$-$R^{10}$, $R^{13}$-$R^{16}$, $R^{19}$ und $R^{20}$ weiters unabhängig ausgewählt werden aus Aryl mit bis zu 10 Kohlenstoffatomen, $C_3$-$C_8$-Cycloalkyl und Oxacyclolalkyl mit bis zu 7 Kohlenstoffatomen, von denen jedes unsubstituiert sein kann oder weiter substituiert durch einen Substituenten ausgewählt aus der Gruppe der Substituenten für genanntes $R^3$-Alkyl, wie oben dargelegt ;

$R^5$, $R^6$, $R^{11}$, $R^{12}$, $R^{17}$ und $R^{18}$ aus denselben Gruppen ausgewählt werden, wie oben für $R^3$ dargelegt ; und $R^5$, $R^6$, $R^{11}$, $R^{12}$, $R^{17}$ und $R^{18}$ weiters unabhängig ausgewählt werden aus $C_1$-$C_{16}$-Alkoxycarbonyl, $C_3$-$C_{16}$-Alkenoyloxy, $C_2$-$C_{16}$-Alkenyloxycarbonyl und $C_1$-$C_{16}$-Alkanoyloxy, von denen jedes weiter substituiert sein kann durch Fluor, Aryl mit bis zu 10 Kohlenstoffatomen oder $C_1$-$C_{16}$-Alkoxy, und $R^5$, $R^6$, $R^{11}$, $R^{12}$, $R^{17}$ und $R^{18}$ weiters unabhängig ausgewählt werden aus Aryloxy mit bis zu 10 Kohlenstoffatomen, Cycloalkoxy mit bis zu 8 Kohlenstoffatomen, Cycloalkyl (mit bis zu 8 Kohlenstoffatomen)-carbonyloxy, Cycloalkoxy (bis zu 8 Kohlenstoffatome)-carbonyl, Aroyloxy mit bis zu 11 Kohlenstoffatomen, Oxacycloalkoxy mit bis zu 7 Kohlenstoffatomen, Oxacycloalkenyloxy mit bis zu 7 Kohlenstoffatomen, Oxacycloalkoxy (bis zu 7 Kohlenstoffatome)-carbonyl, Oxacycloalkyl (mit bis zu 7 Kohlenstoffatomen)-carbonyloxy, und Aryloxy (mit bis zu 10 Kohlenstoffatomen)-carbonyl, von denen jedes weiter substituiert sein kann durch Fluor, $C_1$-$C_6$-Alkyl oder $C_1$-$C_6$-Alkoxy, vorausgesetzt, daß jedweder Substituent mit einem einfach gebundenen Sauerstoffatom an der Verknüpfung zum Rest des Moleküls nicht ein Substituent an demselben Kohlenstoffatom sein kann, das einfach an ein anderes Sauerstoffatom gebunden ist ; oder zwei benachbarte Gruppen, ausgewählt aus $R^3$-$R^{20}$, zusammen mit den Atomen, an die sie gebunden sind, einen 5-8 gliedrigen Cycloalkyl-, Oxacycloalkyl- oder Bicycloalkylring bilden können;

jedes $R^{21}$ unabhängig ausgewählt wird aus Wasserstoff, $C_1$-$C_4$-Alkyl und Phenyl, jedes B und B' ausgewählt wird aus

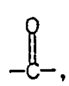, 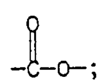; und 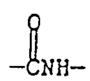

wobei die Carbonylgruppe an A, S' oder D gebunden ist ; und jedes R unabhängig eine divalente Verknüpfungsgruppe ist, die ausgewählt wird aus

a) einer divalenten aliphatischen Gruppe mit bis zu 25 Kohlenstoffatomen, die durch Oxy, Carbonyloxy, Amino, Aminocarbonyl, Oxycarbonyl, Ureido, Oxycarbonylamino oder Carbonylamino unterbrochen sein kann ;

b) einer divalenten 5-7gliedrigen cycloaliphatischen und 5-7gliedrigen cycloaliphatischen-$C_1$-$C_{20}$-aliphatischen Gruppe ;

c) einer divalenten Arylengruppe mit 6-25 Atomen ;

d) einer divalenten Aralkyl- oder Alkarylgruppe mit 7 bis 25 Kohlenstoffatomen ; und

e) einem divalenten Alkylen-Aryl-Alkylen mit 8 bis 30 Kohlenstoffatomen, worin die Gruppen b), d) und e) wahlweise in ihren nicht-cyclischen aliphatischen bzw. Alkylgruppen unterbrochen sein können durch die gleichen Gruppen wie in Gruppe a), und worin die Arylringe in den Gruppen c), d) und e) weiters substituiert sein können mit einem oder mehreren Substituenten, die ausgewählt werden aus Halogen, $C_1$-$C_4$-Alkyl und $C_1$-$C_{12}$-Perhaloalkyl, und worin eine in Gruppe a) dargelegte unterbrechende Gruppe zwischen den cyclischen und nicht-cyclischen Teilen der Gruppen b), d) und e) anwesend sein kann ; und

b) von Null bis zu einer ausreichenden Menge eines hydrophilen modifizierenden Monomers, um dem Polymer einen Wassergehalt im wäßrigen gequollenen Zustand von wenigstens 10% zuverleihen, wobei besagtes hydrophiles modifizierendes Monomer ausgewählt wird aus

aa) Polyethylenglycolen der Formel

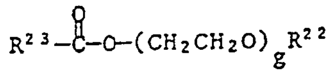 (A)

oder ab) Pyrrolidonen der Formel

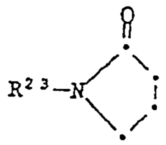 (B)

worin $R^{22}$ Wasserstoff oder $C_1$-$C_7$-Alkyl ist, g eine ganze Zahl von 1-25 ist,

oder ac) einer Verbindung der Formel

$$(R^{24}\text{-div})_{nz}Hy \quad (C)$$

worin $R^{23}$ eine polymerisierbare oder reaktive Einheit ist, die ausgewählt wird aus i) ethylenisch ungesättigten Resten, ii) Anhydriden, iii) Aminen, iv) Säuren, v) Estern, vi) Amiden, vii) Ethern, viii) Säurehalogeniden,

$R^{24}$ ausgewählt wird aus den Bedeutungen für $R^{23}$ und ix) Epoxygruppen, x) Isocyanaten und Isothiocyanaten und xi) Hydroxy ; div ausgewählt wird aus

ba) einer divalenten aliphatischen Gruppe mit bis zu 25 Kohlenstoffatomen, vorzugsweise Alkyl, Alkenyl oder Alkinyl, die auch durch Oxy, Carbonyloxy, Amino, Aminocarbonyl, Oxycerbonyl, Ureido, Oxycarbonylamino oder Carbonylamino unterbrochen oder abgeschlossen oder unterbrochen und angeschlossen sein kann ;

bb) einer divalenten 5-7gliedrigen cycloaliphatischen und 5-7gliedrigen cycloaliphatischen-$C_1$-$C_{20}$-aliphatischen Gruppe, die auch wie oben in der Gruppe ba) unterbrochen, abgeschlossen oder unterbrochen und abgeschlossen sein kann, außer daß diese Unterbrechungen nicht innerhalb der cycloaliphatischen Teile auftreten können ;

bc) einer divalenten Arylengruppe mit 6-25 Kohlenstoffatomen, die unsubstituiert ist oder substituiert durch wenigstens einen Substituenten, der ausgewählt wird aus Halogen, $C_1$-$C_4$-Alkyl und $C_1$-$C_{12}$-Perhaloalkyl ;

bd) einem divalenten Aralkyl oder Alkaryl oder Alkylen-aryl-alkylen mit 7-25 Kohlenstoffatomen, das im Alkylteil unterbrochen oder nicht unterbrochen ist, oder abgeschlossen, oder unterbrochen im Alkylteil und abgeschlossen mit einer unterbrechenden oder abschließenden Gruppe wie unter ba) erwähnt, und jede dieser nicht unterbrochenen, unterbrochenen und abgeschlossenen Aralkyl- und Alkarylgruppen ist weiters unsubstituiert oder substituiert durch einen unter Halogen, $C_1$-$C_4$-Alkyl und $C_1$-$C_{12}$-Perhaloalkyl gewählten Substituenten ;

be)

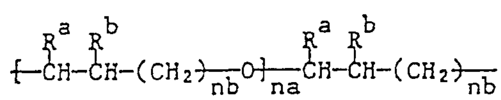 (D)

worin na eine ganze Zahl von 8-100 ist ; und

bea) $R^a$ Wasserstoff, $R^b$ Methyl und nb Null ist ; oder

beb) $R^a$ Methyl, $R^b$ Wasserstoff und nb Null ist ; oder

bec) $R^a$ und $R^b$ Wiasserstoff sind und nb 1 ist ;

nz eine ganze Zahl von 1 bis zur Valenz von Hy ist, und wo nz weniger als die Valenz von Hy ist, die verbleibenden Valenzen von Hy von Wasserstoffatomen besetzt werden ;

und Hy eine hydrophile Gruppe ist, die ausgewählt wird aus

ca) Morpholino ; cyclischen Amidresten mit 5-7 Ringgliedern ; gesättigten und ungesättigten cyclischen N,N-Diamidresten mit 5-6 Ringgliedern ; Gruppen der Formel

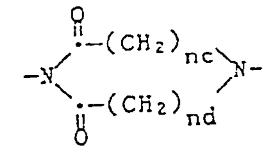 (E) oder 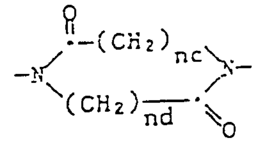 (E')

mit 6-7 Ringgliedern, worin nc und nd ausgewählt werden unter 0-2 ; und cyclischen Aminen mit 5-6 Ringgliedern ; jedes unsubstituiert oder substituiert durch Hydroxy-$C_1$-$C_5$-alkyl, Carboxy oder niederes Alkyl ;

cb) Tetrahydrofurfuryl ;

cc) Mono-, Di- und Polysaccharidresten, geradkettig oder cyclisch, ihren entsprechenden Zuckeralkoholresten, Pentaerythritresten und Polyvinylalkoholresten ;

cd) Polyhydroxy-$C_2$-$C_7$-alkylresten ; wobei besagtes Mittel einen anwachsenden Kontaktwinel von weniger als 60° hat ; und ein Dk ($\times 10^{-10}$ mm · ml $O_2$/cm$^2$ · s · mmHg) von wenigstens etwa 7.

2. Mittel nach Anspruch 1, worin a 1 und jedes D Sauerstoff ist.

3. Mittel nach Anspruch 1, worin jedes L für –BRB′, –BR– oder –RB′– steht, jedes B für –C(O)NH–, wobei das Stickstoffatom an R gebunden ist, und R unsubstituiertes oder durch Methyl substituiertes Phenylen ist.

4. Mittel nach Anspruch 1, worin jedes $R^1$ und $R^2$ Methyl, h 4, i 4 und v von etwa 15 bis etwa 50 ist.

5. Mittel nach Anspruch 1, worin (x + y + z) mal g etwa 25 bis etwa 75 beträgt.

6. Mittel nach Anspruch 1, worin

a) jedes b, d und f 1 ist und $R^3$-$R^{20}$ alle Wasserstoft sind, oder

b) jedes b, d und f Null ist, jedes $R^3$, $R^4$, $R^8$-$R^{10}$, $R^{14}$-$R^{16}$ und $R^{20}$ Wasserstoff und jedes $R^7$, $R^{13}$ und $R^{19}$ Methyl ist.

7. Mittel nach Anspruch 6, worin (x + y + z) mal q etwa 25 bis etwa 75 beträgt.

8. Mittel nach Anspruch 1, worin

a 1 ist ;

jedes D Sauerstoff ist ;

jedes L für –BRB′–, –BR– oder –RB′– steht ;

jedes B und B′ für –C(O)NH– steht, wobei das Stickstoffatom an R gebunden ist ;

jedes R unsubstituiertes oder durch Methyl substituiertes Phenylen ist ;

jedes $R^1$ und $R^2$ Methyl ist ;

h und i jeweils 4 sind ;

v von etwa 15 bis etwa 50 beträgt ;

(x + y + z) mal q etwa 25 bis etwa 75 beträgt ; und

a) jedes b, d und f 1 und $R^3$-$R^{20}$ alle Wasserstoff sind ; oder

b) jedes b, d und f Null ist ; jedes $R^3$, $R^4$, $R^8$-$R^{10}$, $R^{14}$-$R^{16}$ und $R^{20}$ Wasserstoff ist und jedes $R^7$, $R^{13}$ und $R^{19}$ Methyl ist.

9. Mittel nach Anspruch 8, worin jedes W eine Bindung ist und jedes L für –BR– oder –RB′– steht.

10. Benetzbares, flexibles, sauerstoffdurchlässiges ophthalmisches Mittel nach Anspruch 1, wobei das vernetzbare Monomer Segmente der Formel Ib

$$-(D\text{-}A\text{-}L\text{-}S'')\text{-}_c \qquad \text{(Ib)}$$

hat, oder der Formel Ic

$$-(S'')_c\text{-}D\text{-}S'\text{-}La\text{-} \qquad \text{(Ic)}$$

oder der Formel Id

$$-(D\text{-}A\text{-}L)\text{-}(S'')_c\text{-} \qquad \text{(Id)}$$

worin jedes S″ unabhängig ein Segment der Formel Ia von Anspruch 1 ist ;

jedes D, A und L unabhängig wie im Anspruch 1 definiert ist ;

c 1-10 ist ;

und a mal c 1-10 ist ;

wobei La ausgewählt wird aus –BRB'– und –BR– ; und worin S', B, R und B' wie im Anspruch 1 definiert sind.

11. Mittel nach Anspruch 10, worin a 1 und jedes D Sauerstoff ist.

12. Mittel nach Anspruch 10, worin jedes L für –BRB'–, –BR– oder –RB'– steht, jedes B für –C(O)NH–, worin das Stickstoffatom an das R gebunden ist, und R unsubstituiertes oder durch Methyl substituiertes Phenylen ist.

13. Mittel nach Anspruch 10, worin jedes $R^1$ und $R^2$ Methyl ist ; h 4, i 4 und v von etwa 15 bis etwa 50 ist.

14. Mittel nach Anspruch 10, worin (x + y + z) mal q etwa 25 bis etwa 75 beträgt.

15. Mittel nach Anspruch 10, worin

a) jedes b, d und f 1 ist und $R^3$-$R^{20}$ alle Wasserstoff sind oder

b) jedes b, d und f 0 ist, jedes $R^3$, $R^4$, $R^8$-$R^{10}$, $R^{14}$-$R^{16}$ und $R^{20}$ Wasserstoff ist und jedes $R^7$, $R^{13}$ und $R^{19}$ Methyl.

16. Mittel nach Anspruch 15, worin (x + y + z) mal q etwa 25 bis etwa 75 beträgt.

17. Mittel nach Anspruch 10, worin c 1 ist.

18. Mittel nach Anspruch 10, worin

a 1 ist ;

jedes D Sauerstoff ist,

jedes L für –BRB'–, –BR– oder –RB'– steht ;

jedes B und B' für –C(O)NH–, wobei das Stickstoffatom an R gebunden ist ;

jedes R unsubstituiertes oder durch Methyl substituiertes Phenylen ist ;

jedes $R^1$ und $R^2$ Methyl ist ;

h und i jeweils 4 sind ;

v etwa 15 bis etwa 50 beträgt ;

(x + y + z) mal q etwa 25 bis etwa 75 beträgt ; und

a) jedes b, d und f 1 und $R^3$-$R^{20}$ alle Wasserstoff sind, oder

b) jedes b, d und f Null ist und $R^3$, $R^4$, $R^8$-$R^{10}$, $R^{14}$-$R^{16}$ und $R^{20}$ Wasserstoff ist und jedes $R^7$, $R^{13}$ und $R^{19}$ Methyl ist ; und c 1 ist.

19. Mittel nach Anspruch 18, worin jedes W eine Bindung ist und jedes L für –BR– oder –RB'– steht.

20. Benetzbares, flexibles, sauerstoffdurchlässiges ophthalmisches Mittel nach Anspruch 14, wobei das Monomer a) die Formel

$$L'\!-\!\!\left[ (D\text{-}A\text{-}L\text{-})_e\text{-}S'' \right]_c\! L'' \qquad (I)$$

hat, worin e Null oder 1 ist ;

jedes D, A, L, S'' und c unabhängig wie im Anspruch 10 definiert ist ;

L' Wasserstoff, P'-R–, P'-BR–, P'-RB'– oder P'-BRB'– ist ; und L'' Wasserstoff ist oder –P' oder, im Falle daß e 0 ist, auch –D-S'-BR-P' oder –D-S'-BR'-P' und worin P' Wasserstoff, Amino, Hydroxy, NCO, NCS, Vinyl oder eine Einheit ist, die eine vernetzbare Gruppe enthält, die vernetzt werden kann, wenn mit einem geeigneten Vernetzungsmittel coreagiert oder mit wirksamer Strahlung bestrahlt wird.

21. Mittel nach Anspruch 20, worin a 1 und jedes D Sauerstoff ist.

22. Mittel nach Anspruch 20, worin jedes L für –BRB'–, –BR– oder –RB'– steht, jedes B für –C(O)NH–, worin das Stickstoffatom an R gebunden ist, und R unsubstituiertes oder durch Methyl substituiertes Phenylen ist.

23. Mittel nach Anspruch 20, worin jedes $R^1$ und $R^2$ Methyl, h 4, i 4 und v von etwa 15 bis etwa 50 ist.

24. Mittel nach Anspruch 20, worin (x + y + z) mal q etwa 25 bis etwa 75 beträgt.

25. Mittel nach Anspruch 20, worin a) jedes b, d und f 1 ist und $R^3$-$R^{20}$ alle Wasserstoff sind, oder b) jedes b, d und f Null ist, jedes $R^3$, $R^4$, $R^8$-$R^{10}$, $R^{14}$-$R^{16}$ und $R^{20}$ Wasserstoff und jedes $R^7$, $R^{13}$ und $R^{19}$ Methyl ist.

26. Mittel nach Anspruch 25, worin (x + y + z) mal q etwa 25 bis etwa 75 beträgt.

27. Mittel nach Anspruch 20, worin c 1 ist.

28. Mittel nach Anspruch 20, worin L' für P'-BRB'– steht.

29. Mittel nach Anspruch 20, worin jedes P'

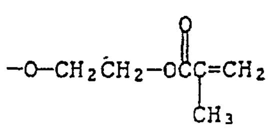 , 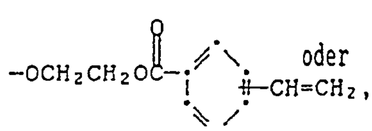 oder 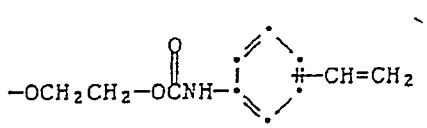

ist.

30. Mittel nach Anspruch 20, worin
a 1 ist;
jedes D Sauerstoff ist;
jedes L für –BRB′–, –BR– oder –RB′– steht;
jedes B und B′ für –C(O)NH– steht, wobei das Stickstoffatom an R gebunden ist;
jedes R unsubstituiertes oder durch Methyl substituiertes Phenylen ist;
jedes $R^1$ und $R^2$ Methyl ist;
h und i jeweils 4 sind;
v von etwa 15 bis etwa 50 beträgt;
(x + y + z) mal q etwa 25 bis etwa 75 beträgt; und
a) jedes b, d und f 1 und, $R^3$-$R^{20}$ alle Wasserstoff sind; oder
b) jedes b, d und f Null ist; jedes $R^3$, $R^4$, $R^8$-$R^{10}$, $R^{14}$-$R^{16}$ und $R^{20}$ Wasserstoff ist und jedes $R^7$, $R^{13}$ und $R^{19}$ Methyl ist; L für P′-BRB′ oder P′ steht; und P′

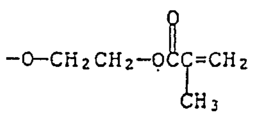, 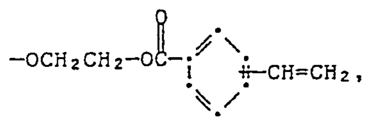, 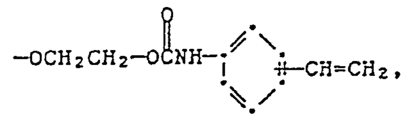,

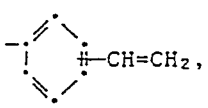, oder $-CH=CH_2$.

ist.

31. Mittel nach Anspruch 30, worin jedes W eine Bindung, jedes L gleich –BR– oder –RB′– und L und L″ jedes $-CH=CH_2$ sind.

32. Mittel nach Anspruch 1, das eine Kontaktlinse ist.

33. Mittel nach Anspruch 1, worin jedes A die Formel

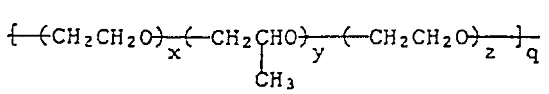 oder 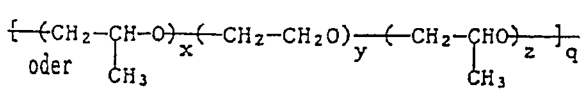

hat, worin jedes x, y, z und q größer als 0 ist.

34. Mittel nach Anspruch 33, worin q 1 ist.

35. Mittel nach Anspruch 33, worin x und z innerhalb irgendeines A gleich sind.

36. Mittel nach Anspruch 33, worin jedes x und jedes z den gleichen Wert hat.

37. Verfahren zur Herstellung eines optisch klaren benetzbaren, flexiblen, sauerstoffdurchlässigen Polymers aus

a) einem vernetsbaren Monomer mit einem Segment S″ der Formel

$$-(W\text{-}S'\text{-}L\text{-}D\text{-}A\text{-}L)_a \quad (Ia)$$

worin jede der Variablen wie im Anspruch 1 definiert ist; und

b) einer ausreichenden Menge eines hydrophilen modifizierenden Monomers, um dem Polymer einen Wassergehalt im wäßrigen gequollenen Zustand von wenigstens 10% zu verleihen, wobei dieses hydrophile modifizierende Monomer aus den Verbindungen der Formeln (A), (B), und (C), wie im Anspruch 1 definiert, ausgewählt wird; und das Polymer einen anwachsenden Kontakwinkel von weniger als 60° hat und ein Dk (× $10^{-10}$ mm · ml $O_2/cm^2$ · s · mmHg) von wenigstens etwa 7, durch Umsetzung der erforderlichen Zwischenprodukte auf an sich bekannte Art.

38. Verfahren nach Anspruch 37 zur Herstellung eines benetzbaren, flexiblen, sauerstoffdurchlässigen Polymers, worin das vernetzbare Monomer a) Segmente der Formel Ib

$-(D\text{-}A\text{-}L\text{-}S'')_c-$ (Ib)

oder der Formel Ic $-(S'')_c\text{-}D\text{-}S'\text{-}La$ (Ic)

oder der Formel Id $-(D\text{-}A\text{-}L)\text{-}(S'')_c-$ (Id)

hat, worin jedes S" unabhängig eine Segment der Formel Ia von Anspruch 1 ist;
jedes D, A und L unabhängig wie im Anspruch 1 definiert ist;
c 1-10 ist;
a mal c 1-10 ist;
La ausgewählt wird aus –BRB'– und –BR–; und worin S', B, R und B' wie im Anspruch 1 definiert sind.

39. Verfahren nach Anspruch 38 zur Herstellung eines benetzbarten, flexiblen, sauerstoffdurchlässigen Polymers, worin das Monomer a) die Formel

$$L'\text{—}[(D\text{-}A\text{-}L)_e\text{-}S''\text{—}]_c L'' \quad (I)$$

hat, worin e 0 oder 1 ist;
jedes D, A, L S" und c unabhängig wie im Anspruch 10 definiert ist;
L' Wasserstoff, P'-R–, P'-BR, P'-RB'– oder P-'BRB'– ist; und L" Wasserstoff oder P' ist, oder, im Fall daß e 0 ist, auch –D-S'BR-P' und worin P' Wasserstoff, Amino, Hydroxy, NCO, NCS, Vinyl oder eine Einheit ist, die eine vernetzbare Gruppe enthält, die vernetzt werden kann, wenn sie mit einem geeigneten Vernetzungsmittel coreagiert oder mit wirksamer Strahlung bestrahlt wird.

40. Mittel nach Anspruch 1, worin das hydrophile modifizierende Monomer ausgewählt wird aus der Gruppe der Formel

$$(R^{24}\text{-div})_{nz}Hy \quad (C).$$

41. Verfahren nach Anspruch 37, worin dieses hydrophile modifizierende Monomer aus der Gruppe der Formel

$$(R^{24}\text{-div})_{nz}Hy \quad (C)$$

ausgewählt wird.

42. Verfahren nach Anspruch 41, worin $R^{24}$ eine ethylenisch ungesättigte Gruppe ist.

43. Verfahren nach Anspruch 42, worin $R^{24}$ Vinyl, 1-Methylvinyl, 2-Methylvinyl, oder Allyl ist;

ia) 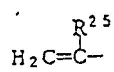

und das Ende von div, an das es gebunden ist, ist $-C(O)R^{26}$, wobei das Carbonyl an $R^{24}$ gebunden ist, wo $R^{25}$ Wasserstoff oder Methyl ist und $R^{26}$ für –O– oder $-NR^{27}-$ steht, wobei 1

ib) $H_2C=CH-$ und das Ende von div, an das es gebunden ist,

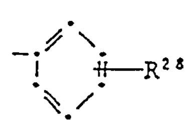

ist, wobei die Bindung links an $R^{24}$ gebunden ist, worin $R^{28}$ für –O–, $-NR^{27}-$, –C(O)–,

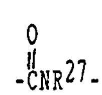

oder –C(O)O– steht ; und

ic) 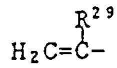

und das Ende von div, an das es gebunden ist, $-C(O)R^{30}-$ ist, wobei das Carbonyl and $R^{24}$ gebunden ist, worin $R^{30}$ niederes Alkylen oder $-[CH_2CH(\text{niederes Alkyl})-O]_{1-5}-$ ist und $R^{29}$ Wasserstoff, niederes Alkyl oder Cyano.

44. Verfahren nach Anspruch 41, worin Hy ausgewählt wird aus

ce) Morpholino, das unsubstituiert ist oder mono- bis hin zu tetrasubstituiert durch niederes Alkyl ;

cf) 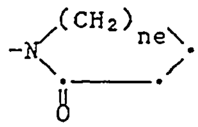

worin ne 1, 2 oder 3 ist, wovon jedes unsubstituiert ist oder durch niederes Alkyl substituiert ;

cg) 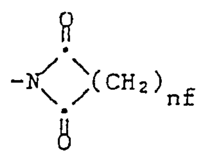

worin nf 2 oder 3 ist, wovon jedes unsubstituiert ist oder substituiert durch niederes Alkyl ;

ch) einer divalenten Gruppe der Formel

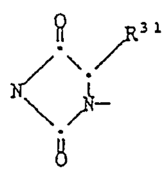 , 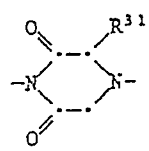 , 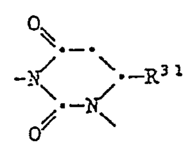

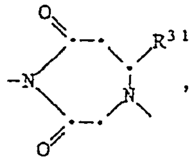 , oder 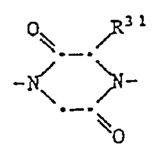

worin $R^{31}$ Wasserstoff oder Carboxy ist ;

ci) 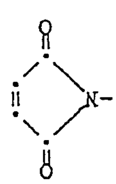

cj) 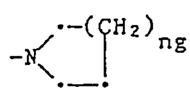

worin ng 1 oder 2 ist, wovon jedes unsubstituiert oder durch niederes Alkyl substituiert ist ;

ck) 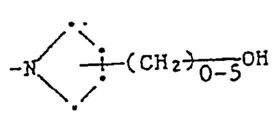

cl) einem Polyol, das ausgewählt wird aus Polybinylalkohol-Resten

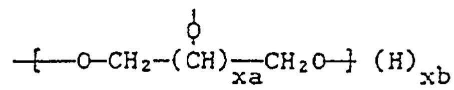

worin

xa 2-10 ist und xb eine ganze Zahl von 0 bis zu inklusive xa + 1 ist, den cyclischen Saccharid-Analoga davon, den Di-Tetra-Sacchariden davon, $C(CH_2O)_4(H)_{xc}$, worin

xc 0 bis 3 ist, und Polyhydroxy-niederes Alkylen-Glycol-Resten, worin bis zu 50% der Hydroxygruppen ihre alkoholischen Wasserstoffe fehlen.

45. Verfahren nach Anspruch 41, worin div ausgewählt wird aus

$$-(CH_2)_2NHCOO(CH_2)_2-;$$

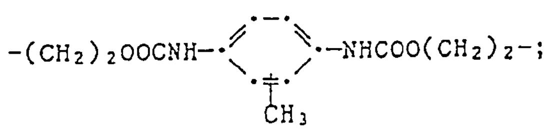

$-(CH_2)_2NHCO-;$ und $-(CH_2)_2NHCO(CH_2)_2-.$

46. Verfahren nach Anspruch 41, worin dieses hydrophile modifizierende Monomer ausgewählt wird aus

aca) 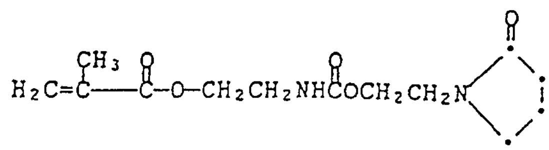

acb) 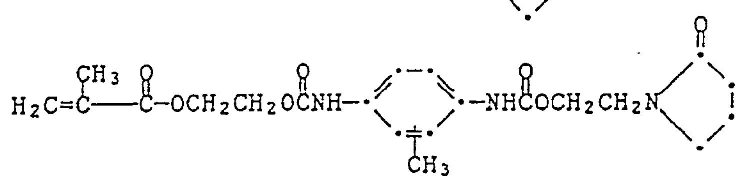

acc) 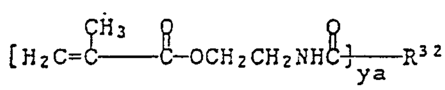

worin $R^{32}$ für

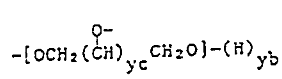

steht, worin yc 1-6 ist und yb 0 bis (yc + 1) ist, und ya 1 bis zu (yc + 2 – yb) ist,

acd) 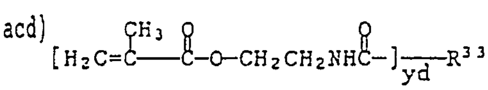

worin $R^{33}$ für $C(CH_2O)_4(H)_{4\text{-}yd}$ steht und yd gleich 1-4 ist ;

ace) Polyvinylalkohol wo wenigstens 1 und bis zu inklusive 50% der alkoholischen Wasserstoffe abwesend sind ; und

acf) 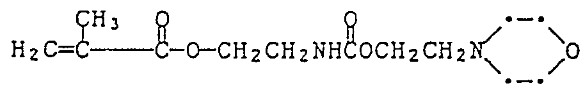

47. Verfahren nach Anspruch 46, worin dieses hydrophile modifizierende Monomer aus den genannten Gruppen aca), acb) und acf) ausgewählt wird.

48. Verwendung eines Polymers nach Anspruch 37 oder 39 zur Herstellung eines ophthalmischen Mittels.

## Revendications

### Revendications pour les Etats Contractants : AT, BE, CH, DE, FR, GB, GR, IT, LI, LU, NL, SE

1. Dispositif ophtalmique perméable à l'oxygène, flexible, mouillable, optiquement clair, fabriqué à partir d'un polymère

a) un monomère réticulable ayant un segment S" de formule Ia

$$-(W\text{-}S'\text{-}L\text{-}D\text{-}A\text{-}L)_{a}- \qquad (Ia)$$

où a vaut de 1 à 10 ;
chaque D représente indépendamment un oxygène ou $-N(R^{21})-$ ;
chaque W représente une liaison, un oxygène ou $-N(R^{21})-$ ;
chaque L représente indépendamment $-BRB'$, $-BR-$, $-RB'-$ ou $-R-$ ;
chaque S représente indépendamment un segment de formule II,

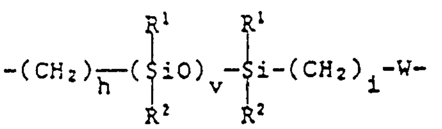 (II

chaque A représente indépendamment un segment de formule III

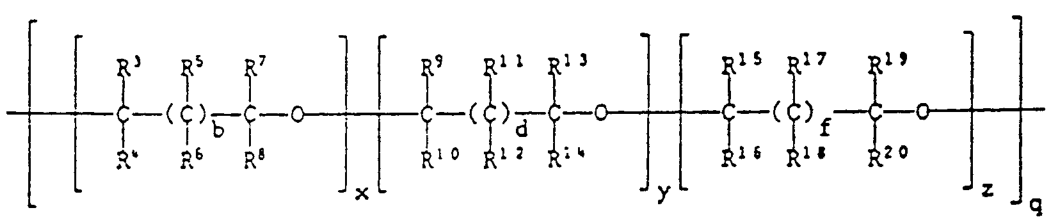

(III)

l'oxygène terminal dans chaque unité de formule III étant remplaçable par $-N(R^{21})-$ ;
où chaque b, d et f vaut indépendamment 0-4 ; q est un nombre allant de 1 à 1000 ;

chaque x, y et z vaut indépendamment 0 à 200, à condition qu'au moins un des symboles x, y et z vale au moins 1 ; de manière que (x + y + z) multiplié par q vaille de 4 à 1000 ; chaque h et est un nombre entier allant de 1 à 6, v est un nombre entier allant de 2 à 300 ;

$R^1$ et $R^2$ représentent indépendamment un alcoyle ayant jusqu'à 18 atomes de carbone, ou un aryle ayant jusqu'à 12 atomes de carbone ;

chacun des radicaux $R^3$, $R^4$, $R^7$-$R^{10}$, $R^{13}$-$R^{16}$ et $R^{20}$ est indépendamment choisi dans le groupe constitué par hydrogène, halogène un radical aliphatique, aromatique ou hétérocyclique choisi parmi : alcoyle en $C_{1-16}$ non-substitué ; alcoyle en $C_{1-16}$ substitué ; alcényle en $C_{2-16}$ non substitué ; et alcényle en $C_{2-16}$ substitué où les substituants alcoyle et alcényle sont choisis indépendamment parmi un alcoxy en $C_{1-16}$-carbonyle, alcényloxy en $C_{2-16}$-carbonyle, fluoro, aryle ayant jusqu'à 10 atomes de carbone, alcoxy en $C_{1-16}$, de préférence en $C_{1-8}$, alcanoyloxy en $C_{1-16}$, aryloxy ayant jusqu'à 10 atomes de carbone, alcénoyloxy en $C_{3-8}$, aroyle ayant jusqu'à 10 atomes de carbone, aroyloxy ayant jusqu'à 11 atomes de carbone, cycloalcoyle en $C_{3-8}$, cycloalcoxy

en $C_{3-8}$, cycloalcoyle en $C_{3-8}$-carbonyloxy, cycloalcoxy en $C_{3-8}$-carbonyle, oxacycloalcoyle ayant jusqu'à 7 atomes de carbone, oxacycloalcoxy ayant jusqu'à 7 atomes de carbone, oxacycloalcoxy (jusqu'à 7 atomes de carbone)-carbonyle, oxacycloalcoyle (jusqu'à 7 atomes de carbone)-carbonyloxy et aryl (jusqu'à 10 atomes de carbone)oxy-carbonyle, chacun desdits substituants alcoyle et alcényle étant à son tour éventuellement substitué par un alcoyle en $C_{1-6}$ , un fluoro ou un alcoxy en $C_{1-6}$ à condition que ledit alcoxy mentionné en dernier ne soit pas lié à un atome de carbone déjà lié par une liaison simple à un autre atome d'oxygène ; $R^3$ $R^4$ $R^{7-10}$, $R^{13-16}$, $R^{19}$ et $R^{20}$ étant en outre indépendamment choisis parmi aryle ayant jusqu'à 10 atomes de carbone, cycloalcoyle en $C_{3-8}$, et oxacycloalcoyle ayant jusqu'à 7 atomes de carbone, dont chacun peut être non substitué ou encore substitué par un substituant choisi dans le groupe des substituants pour ledit $R^3$ alcoyle exposé ci-dessus ;

$R^5$, $R^6$, $R^{11}$, $R^{12}$, $R^{17}$ et $R^{18}$ sont choisis dans le même groupe que celui présenté ci-dessus pour $R^3$ ; et $R^5$, $R^6$, $R^{11}$, $R^{12}$, $R^{17}$ et $R^{18}$ sont en outre indépendamment choisis parmi alcoxy en $C_{1-16}$-carbonyle, alcénoyloxy en $C_{3-16}$, alcényloxy en $C_{2-16}$-carbonyle, et alcanoyloxy en $C_{1-16}$ et chacun d'entre eux peut être en outre substitué par un fluoro, un aryle allant jusqu'à 10 atomes de carbone, un alcoxy en $C_{1-16}$ et $R^5$, $R^6$, $R^{11}$, $R^{12}$, $R^{17}$ et $R^{18}$ sont encore en outre indépendamment choisis parmi aryloxy allant jusqu'à 10 atomes de carbone, cycloalcoxy allant jusqu'à 8 atomes de carbone, cycloalcoyle (allant jusqu'à 8 atomes de carbone)-carbonyloxy, cycloalcoxy (allant jusqu'à 8 atomes de carbone)-carbonyle, aroyloxy allant jusau'à 11 atomes de carbone, oxacycloalcoxy allant jusqu'à 7 atomes de carbone, oxacycloalcényloxy allant jusqu'à 7 atomes de carbone, oxacycloalcoxy (allant jusqu'à 7 atomes de carbone)-carbonyle, oxycycloalcoyle (allant jusqu'à 7 atomes de carbone)carbonyloxy, et aryloxy (allant jusqu'à 10 atomes de carbone)-carbonyle, dont chacun peut être en outre substitué par un fluoro, alcoyle en $C_{1-6}$ ou alcoxy en $C_{1-6}$, à condition que tout substituant ayant un atome d'oxygène comme liaison au reste de la molécule ne peut pas être un substituant sur le même atome de carbone qui est lié par une liaison simple à un autre atome d'oxygène ; en outre, deux groupes adjacents, choisis parmi $R^3$ à $R^{20}$ ensemble avec les atomes auxquels ils sont attachés, peuvent former un noyau cycloalcoyle, oxacycloalcoyle, ou bicycloalcoyle à 5 à 8 chaînons ;

et chaque $R^{21}$est indépendamment choisi parmi hydrogène, alcoyle en $C_{1-4}$ et phényle

chaque B et B′ est choisi parmi

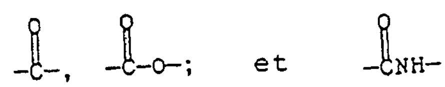

le groupe carbonyle étant lié à A, S′ ou D ; et chaque R est indépendamment un groupe de liaison bivalent choisi parmi

a) un groupe aliphatique bivalent allant jusqu'à 25 atomes de carbone, qui peut être interrompu par un oxy, carbonyloxy, amino, aminocarbonyle, oxycarbonyle, uréido, oxycarbonylamino- ou carbonylamino ;

b) un groupe cycloaliphatique bivalent à 5 à 7 chaînons et un groupe cycloaliphatique à 5 à 7 chaînons aliphatique en $C_{1-20}$ ;

c) un groupe arylène bivalent ayant de 6 à 25 atomes ;

d) un groupe aralcoyle ou alcaryle bivalent ayant de 7 à 25 atomes de carbone ; et

e) un alcoylène-aryl-alcoylène bivalent ayant de 8 à 30 atomes de carbone, où les groupes b), d) et e) peuvent être éventuellement interrompus dans leurs groupes aliphatiques et alcoyles non-cyliques respectivement par le même groupe que dans les groupes a) et où les noyaux aryle dans les groupes c), d) et e) peuvent être encore substitués par un ou plusieurs substituants choisis parmi halogène, alcoyle en $C_{1-4}$ et perhaloalcoyle en $C_{1-12}$, et où un groupe interrompant présenté dans le groupe a) peut être présent entre les parties cycliques et non cycliques des groupes b), d) et e) ; et

b) de 0 à une quantité suffisante d'un monomère modifiant hydrophile pour conférer audit polymère une teneur en eau dans son état gonflé aqueux d'au moins 10%, ledit monomère modifiant hydrophile étant choisi parmi

aa) les polyéthylène glycols de formule

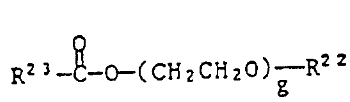

(A)

ou

ab) les pyrrolidones de formule

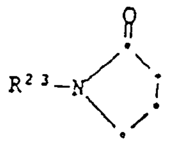

(B)

où $R^{22}$ est un hydrogène ou un alcoyle en $C_{1-7}$, g est un nombre entier allant de 1 à 25, ou

ac) un composé de formule

$$(R^{24}\text{-div})_{nz}Hy \quad (C)$$

où $R^{23}$ est une fraction polymérisable ou réactive choisie parmi i) les radicaux éthyléniquement insaturés, ii) les anhydrides, iii) les amines, iv) les acides, v) les esters, vi) les amides, vii) les éthers, viii) les halogénures d'acides,

$R^{24}$ est choisi parmi les significations données pour $R^{23}$ et ix) les groupes époxy, x) les isocyanates et isothiocyanates et xi) hydroxy ; div est choisi parmi

ba) un groupe aliphatique bivalent ayant jusqu'à 25 atomes de carbone, de préférence alcoyle, alcényle, ou alcynyle, qui peut également être interrompu, ou terminé ou interrompu et terminé par un oxy, carbonyloxy, amino, aminocarbonyle, oxycarbonyle, uréido, oxycarbonylamino, ou carbonylamino ;

bb) un groupe cycloaliphatique à 5 à 7 chaînons bivalent et un groupe cycloaliphatique-aliphatique en $C_{1-20}$ à 5 à 7 chaînons qui peut également être interrompu, terminé, ou interrompu et terminé comme dans le groupe ba) ci-dessus, sauf que lesdites interruptions ne peuvent se produire dans lesdites parties cycloaliphatiques ;

bc) un groupe arylène bivalent ayant de 6 à 25 atomes de carbone, qui est non substitué ou substitué par au moins un substituant choisi parmi halogène, alcoyle en $C_{1-4}$ et perhaloalcoyle en $C_{1-12}$ ;

bd) un aralcoyle ou alkaryle ou alcoylèn-aryl-alcoylène bivalent ayant de 7 à 25 atomes de carbone, qui est non interrompu ou interrompu par la partie alcoyle, ou interrompu dans la partie alcoyle, ou terminé, ou interrompu dans la partie alcoyle et terminé avec un groupe interrupteur ou terminant tel que mentionné en ba) ci-dessus, et chacun desdits groupes aralcoyle et alkaryle non interrompus, interrompus et terminés est en outre non substitué ou substitué par un substituant choisi parmi halogène, alcoyle en $C_{1-4}$ et perhaloalcoyleen $C_{1-12}$ ;

be)

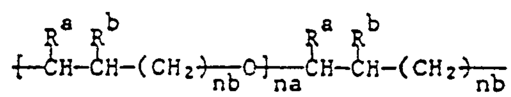

(D)

où na est un nombre entier valant de 8 à 100 ; et

bea) $R^a$ est un hydrogène, $R^b$ est un methyle, et nb vaut zero ; ou

beb) $R^a$ est un méthyle, $R^b$ est un hydrogène et nb vaut zéro ; ou

bec) $R^a$ et $R^b$ représentent un hydrogène, et nb vaut 1 ;

nz est un nombre entier valant de 1 jusqu'à la valence de Hy et où nz est inférieur à la valence de Hy, les valences restantes de Hy étant prises par des hydrogènes ;

et Hy est un groupe hydrophile choisi parmi

ca) morpholino ; des radicaux amide cycliques à 5 a 7 chaînons ; des radicaux N,N-diamide cycliques saturés et non saturés à 5 à 6 chaînons ; des groupes de formule

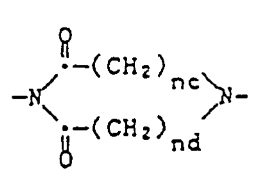

(E) ou

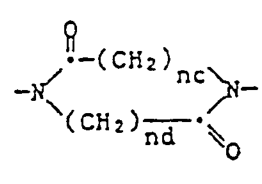

(E')

ayant de 6 a 7 chaînons où nc et nd sont choisis parmi 0-2 ; et les amines cycliques de 5 à 6 chaînons ; chacun étant non substitué ou substitué par un hydroxy-alcoyle en $C_{1-5}$, carboxy ou alcoyle inférieur ;

cb) tétrahydrofurfuryle ;

cc) des radicaux mono-, di-, et polysaccharide, qu'ils soient à chaîne droite ou cycliques, leurs radicaux alcool sucre correspondants, les radicaux pentaérythritol, et les radicaux alcool polyvinylique ;

cd) les radicaux polyhydroxy-alcoyle en $C_{2-7}$ ledit dispositif ayant un angle de contact aigü inférieur à 60°; et ayant un Dk ($\times 10^{-10}$ mm · ml $O_2/cm^2$ · sec · mmHg) d'au moins environ 7.

2. Dispositif de la revendication 1, où a vaut 1 et chaque D est un oxygène.

3. Dispositif de la revendication 1, où chaque L représente –BRB′–, –BR–, ou –RB′, chaque B représente –C(O)NH– où l'atome d'azote est lié à R et R est un phénylène non substitué ou substitué par un méthyle.

4. Dispositif de la revendication 1 où chaque $R^1$ et $R^2$ est un méthyle, h vaut 4 ; i vaut 4 ; et v vaut d'environ 15 à environ 50.

5. Dispositif de la revendication 1 où (x + y + z) multiplié par q vaut d'environ 25 à environ 75.

6. Dispositif de la revendication 1 où

a) chaque b, d et f vaut 1 et $R^3$-$R^{20}$ représentent tous des hydrogènes, ou

b) chaque b, d, et f vaut 0 ; chaque $R^3$, $R^4$, $R^8$-$R^{10}$, $R^{14}$-$R^{16}$, et $R^{20}$ est un hydrogène, et chaque $R^7$, $R^{13}$ et $R^{19}$ est un méthyle.

7. Dispositif de la revendication 6, où (x + y + z) multiplié par q vaut d'environ 25 à environ 75.

8. Dispositif de la revendication 1, où a vaut 1 ;

chaque D est un oxygène ;

chaque L représente –BRB′–, –BR– ou –RB′– ;

chaque B et B′ représentent –C(O)NH– avec l'atome d'azote lié à R ;

chaque R est un phénylène non substitué ou substitué par un méthyle ;

chaque $R^1$ et $R^2$ représente un méthyle ;

h et i valent chacun 4 ;

v vaut d'environ 15 à environ 50 ;

(x + y + z) multiplié par q vaut environ 25 à environ 75 ; et

a) chaque b, d, et f vaut 1 et $R^3$-$R^{20}$ sont tous des hydrogènes ; ou

b) chaque b, d et f vaut 0 ; chaque $R^3$, $R^4$, $R^8$-$R^{10}$, $R^{14}$-$R^{16}$ et $R^{20}$ est un hydrogène ; et chaque $R^7$, $R^{13}$ et $R^{19}$ est un méthyle.

9. Dispositif de la revendication 8, où chaque W est une liaison et chaque L représente –BR– ou –RB′–.

10. Dispositif ophtalmique perméable à l'oxygène, flexible, mouillable, de la revendication 1, comprenant un monomère réticulable ayant les segments de formule Ib,

$$-(D-A-L-S'')_{c}- \qquad (Ib)$$

ou de formule Ic,

$$-(S'')_{c}-D-S'-La- \qquad (Ic)$$

ou de formule Id

$$-(D-A-L)-(S'')_{c}- \qquad (Id)$$

où chaque S″ est indépendamment un segment de formule Ia de la revendication 1 ; chaque D, A et L est indépendamment tel que défini dans la revendication 1 ;

c vaut 1-10 ;

et multiplié par c vaut 1-10 ;

La étant choisi parmi –BrB′– et –BR– ; et où S′, B, R et B′ sont tels que définis dans la revendication 1.

11. Dispositif de la revendication 10, où a vaut 1 et chaque D est un oxygène.

12. Dispositif de la revendication 10, où chaque L représente –BRB′–, –BR– ou –RB′–, chaque B représente –C(O)NH– où l'atome d'azote est lié à R, et R est un phénylène non substitué ou substitué par un méthyle.

13. Dispositif de la revendication 10 où chaque $R^1$ et chaque $R^2$ est un méthyle ; h vaut 4 ; i vaut 4 ; et v vaut d'environ 15 à environ 50.

14. Dispositif de la revendication 10, où (x + y + z) multiplié par q vaut d'environ 25 à environ 75.

15. Dispositif de la revendication 10, où

a) chaque b, d, et f vaut 1 et $R^3$-$R^{20}$ sont tous des hydrogène et ou

b) chaque b, d et f vaut 0, chaque $R^3$, $R^4$, $R^8$-$R^{10}$, $R^{14}$-$R^{16}$, et $R^{20}$ est un hydrogène, et chaque $R^7$, $R^{13}$ et $R^{19}$ est un méthyle.

16. Dispositif de la revendication 15, où (x + y + z) multiplié par q vaut d'environ 25 à environ 75.

17. Dispositif de la revendication 10 où c vaut 1.

18. Dispositif de la revendication 10 où

a vaut 1 ;
chaque D est un oxygène ;
chaque L représente –BRB'–, –BR–, ou –RB'– ;
chaque B et B représente –C(O)NH– avec l'atome d'azote lié à R ;
chaque R est un phénylène non substitué ou substitué par un méthyle ;
chaque $R^1$ et $R^2$ est un méthyle ;
h et i valent chacun 4 ;
v vaut d'environ 15 à environ 50 ;
(x + y + z) multiplié par q vaut d'environ 25 à environ 75 ; et
a) chaque b, d, et f vaut 1 et $R^3$-$R^{20}$ sont tous des hydrogènes ; ou
b) chaque b, d et f vaut 0 ; chaque $R^3$, $R^4$, $R^8$-$R^{10}$, $R^{14}$-$R^{16}$ et $R^{20}$ est un hydrogène ; et chaque $R^7$, $R^{13}$ et $R^{19}$ est un méthyle ;
et c vaut 1.

19. Dispositif de la revendication 18, où chaque W est une liaison et chaque L représente –BR– ou –RB'–.

20. Dispositif ophtalmique perméable à l'oxygène, flexible, mouillable, de la revendication 14, le monomère étant de formule

a)

$$L'-\left[-(D-A-L)_e-S''-\right]_c-L'' \qquad (I)$$

où e vaut 0 ou 1 ;
chaque D, A, L, S'' et c est indépendamment tel que défini dans la revendication 10 ;
L' est un hydrogène, P'-R–, P'-BR–, P'-RB'–, ou P'-BRB'– ; et L'' est un hydrogène ou –P', ou, dans le cas où e vaut 0, également –D-S'-Br-P (ou -D-S'-BRB'-P' et où P' est un hydrogène, amino, hydroxy, NCO, NCS, vinyle ou une fraction contenant un groupe réticulable qui peut être réticulé lorsqu'on le fait coagir avec un agent réticulant approprié ou lorsqu'on l'irradie par un rayonnement actinique.

21. Dispositif de la revendication 20, où a vaut 1 et chaque D est un oxygène.

22. Dispositif de la revendication 20, où chaque L représente (–BRB'–, –BR– ou –RB'–, chaque B représente –C(O)NH– où l'atome d'azote est lié à R, et R est un phénylène non substitué ou substitué par un méthyle.

23. Dispositif de la revendication 20, où chaque $R^1$ et $R^2$ est un méthyle, h vaut 4 ; i vaut 4 ; et v vaut d'environ 15 à environ 50.

24. Dispositif de la revendication 20 où (x + y + z) multiplié par q est d'environ 25 à environ 75.

25. Dispositif de la revendication 20, où a) chaque b, d, et f vaut 1 et $R^3$-$R^{20}$ sont tous des hydrogènes ou b) chaque b, d et f vaut 0, chaque $R^3$, $R^4$, $R^8$-$R^{10}$, $R^{14}$-$R^{16}$ et $R^{20}$ sont des hydrogènes, et chaque $R^7$, $R^{13}$ et $R^{19}$ sont un méthyle.

26. Dispositif de la revendication 25 où (x + y + z) multiplié par q donne environ 25 à environ 75.

27. Dispositif de la revendication 20, où c vaut 1.

28. Dispositif de la revendication 20, où L' est un P'-BRB'–.

29. Dispositif de la revendication 20, où chaque P' représente

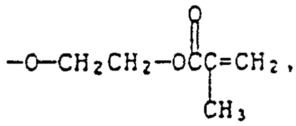, 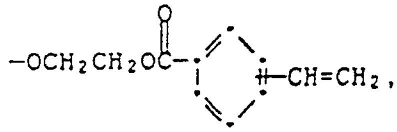,

ou

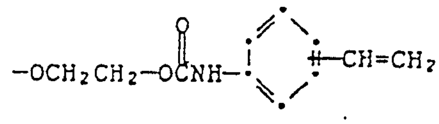

30. Dispositif de la revendication 20 où
a vaut 1 ;
chaque D est un oxygène ;
chaque L représente –BRB′–, –BR– ou –RB′– ;
chaque B et B représentent –C(O)NH– avec l'atome d'azote lié à R ;
chaque R est un phénylène non substitué ou substitué par un méthyle ;
chaque $R^1$ et $R^2$ est un méthyle ;
h et i valent chacun 4 ;
v vaut d'environ 15 à environ 50 ;
(x + y + z) multiplié par q vaut d'environ 25 à environ 75 ; et
a) chaque b, d et f vaut 0 ; et chaque $R^3$-$R^{20}$ sont tous des hydrogènes ; ou
b) chaque b, d et f vaut 0 ; chaque $R^3$, $R^4$, $R^8$-$R^{10}$, $R^{14}$-$R^{16}$ et $R^{20}$ est un hydrogène ; et chaque $R^7$, $R^{13}$ et $R^{19}$ est un méthyle ;
L′ représente P′-BRB′ ou P′ ;
et P′ représente

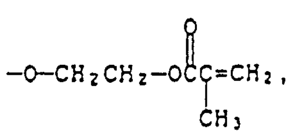, 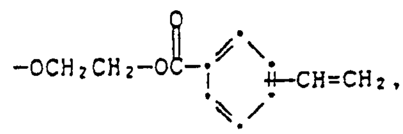, 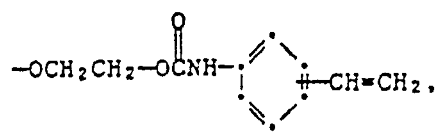,

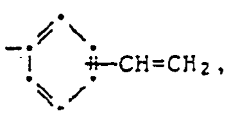, ou $-CH=CH_2$.

31. Dispositif de la revendication 30 où chaque W représente une liaison, chaque L représente –BR– ou –RB′–, et L′ et L″ représentent chacun $-CH=CH_2$

32. Dispositif de la revendication 1, qui est une lentille de contact.

33. Dispositif de la revendication 1, où chaque A est de formule

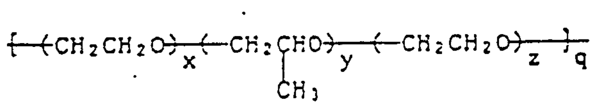 ou

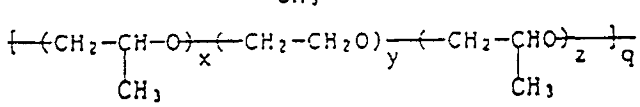

où chacun des symboles x, y, z et q est supérieur à 0.

34. Dispositif de la revendication 33 où q vaut 1.

35. Dispositif de la revendication 33, où x et z dans un A quelconque sont identiques.

36. Dispositif de la revendication 33, où chaque x et chaque z a la même valeur.

37. Procédé de préparation d'un polymère perméable à l'oxygène, flexible, mouillable, optiquement clair

de

a) un monomère réticulable ayant un segment S″ de formule

$$-(W-S'-L-D-A-L)_{a}- \quad (Ia)$$

où chacune des variables est telle que définie dans la revendication 1, et

b) une quantité suffisante d'un monomère modifiant hydrophile pour conférer audit polymère une teneur en eau à son état gonflé aqueux d'au moins 10%, ledit monomère modifiant hydrophile étant choisi parmi les composés de formule (A), (B) et –C) comme définis dans la revendication 1 ; et ledit polymère ayant un angle de contact aigü inférieur à 60° ; et ayant un Dk (× $10^{-10}$ mm · ml $O_2$ /$cm^2$ · sec · mmHg) d'au moins environ 7, par réaction des intermédiaires requis de façon connue.

38. Procédé de la revendication 37, de préparation d'un polymère perméable à l'oxygène, flexible, mouillable, où le monomère réticulable a) a des segments de formule Ib

$$-(D-A-L-S'')_{c}- \quad (Ib)$$

ou de formule Ic

$$-(S'')_{c}-D-S'-La \quad (Ic)$$

ou de formule Id

$$-(D-A-L)-(S'')_{c}- \quad (Id)$$

où S″ est indépendamment un segment de formule la de la revendication 1 ;
chaque D, A et L est indépendamment tel que défini dans la revendication 1 ;
c vaut 1-10 ;
et a multiplié par c vaut 1-10 ;
La étant choisi parmi –BRB′– et –BR– ; et où S′, B, R et B′ sont tels que définis dans la revendication 1.

39. Procédé de la revendication 38, de préparation d'un polymère perméable à l'oxygène, flexible, mouillable, où le monomère a) est de formule

$$L'-[(D-A-L)_{e}-S'']_{c}-L'' \quad (I)$$

où e vaut 0 ou 1 ;
chaque D, A, L, S″, et c est indépendamment tel que défini dans la revendication 10 ;
L′ est un hydrogène, P′-R–, P′-BR–, P′-RB′–, ou P′-BRB′– ; et L″ est un hydrogène ou –P′, ou dans le cas où e vaut 0, également –D-S′-BR-P′ ou –D-S′-BRB′-P′ et où P′ est un hydrogène, amino, hydroxy, NCO, NCS, vinyle ou une fraction contenant un groupe réticulable qui peut être réticulé lorsqu'on a fait coréagir avec un agent réticulant approprié ou lorsqu'on l'irradie par un rayonnement actinique.

40. Dispositif de la revendication 1, où ledit monomère modifiant hydrophile est choisi dans le groupe de formule

$$(R^{24}\text{-div})_{nz}Hy \quad (C).$$

41. Procédé de la revendication 37 où ledit monomère modifiant hydrophile est choisi dans le groupe de formule

$$(R^{24}\text{-div})_{nz}Hy \quad (C).$$

42. Procédé de la revendication 41 où $R^{24}$ est un groupe éthylèniquement insaturé.

43. Procédé de la revendication 42 où $R^{24}$ est un vinyle, 1-méthylvinyle ; 2-méthylvinyle, ou allyle ;

ia) 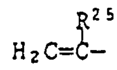

et l'extrémité de div à laquelle il est lié représente $-C(O)R^{26}$, le carbonyle étant lié à $R^{24}$, où $R^{25}$ est un hydrogène ou un méthyle et $R^{26}$ représente –O–, ou $-NR^{27}-$ $R^{27}$ étant un hydrogène ou un alcoyle inférieur ;

ib) $H_2C=CH-$ et l'extrémité de div à laquelle il est lié est

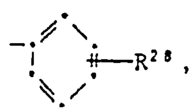

la liaison à gauche étant liée à $R^{24}$, où $R^{28}$ représente –O–, $-NR^{27}-$, –C(O)–, ou –C(O)O– ; et

ic) et l'extrémité de div à laquelle il est lié représente $-C(O)R^{30}-$, le carbonyle étant lié à $R^{24}$ où $R^{30}$ est un alcoylène inférieur ou $-[CH_2CH(\text{alcoyle inférieur})-O]_{1-5}-$ et $R^{29}$ est un hydrogène, alcoyle inférieur ou cyano.

44. Polymère de la revendication 41 où Hy est choisi parmi

ce) un morpholino qui est non substitué ou mono- à tétra-sunstitué par un alcoyle inférieur, de préférence méthyle ou éthyle ;

cf) 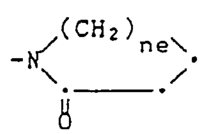

où ne vaut 1, 2 ou 3, de préférence 1, chacun étant non substitué ou substitué, de préférence mono- ou disubstitué par un alcoyle inférieur, de préférence méthyle ou éthyle ;

cg) 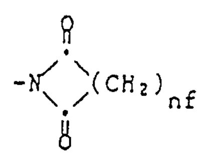

où nf vaut 2 ou 3, de préférence 2,

chacun étant non substitué ou substitué par un alcoyle inférieur, de préférence méthyle ou éthyle ;

ch) un groupe bivalent de formule

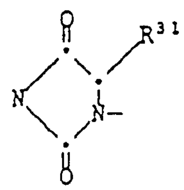 , 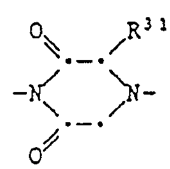 , 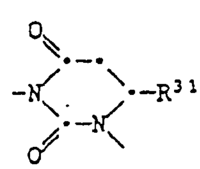

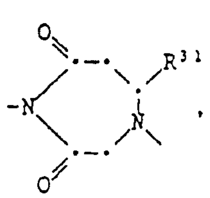 , 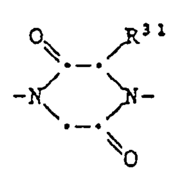

où $R^{31}$ est un hydrogène ou un carboxy ;

ci)

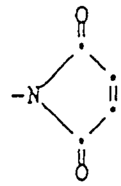

cj)

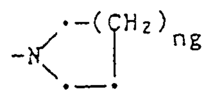

où ng vaut 1 ou 2, chacun étant non substitué ou substitué par un alcoyle inférieur, de préférence un méthyle ou un éthyle ;

ck)

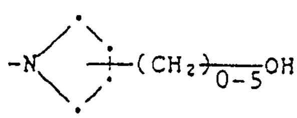

;

cl) un polyol choisi parmi les radicaux alcool polyvinylique,

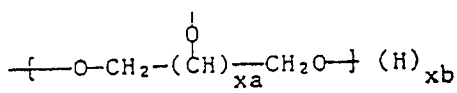

où

xa vaut 2-10 et xb est un nombre entier allant de zéro à xa + 1 compris, ses analogues saccharide cycliques, ses di-tétrasaccharides, $C(CH_2O)_4(H)_{xc}$ où

xc vaut 0-3, et les radicaux polyhydroxy-alcoylène inférieur glycol où jusqu'à 50% des groupes hydroxy sont dépourvus de leurs hydrogènes alcooliques.

45. Polymère de la revendication 41, où div est choisi parmi

$(CH_2)_2NHCOO(CH_2)_2-$;

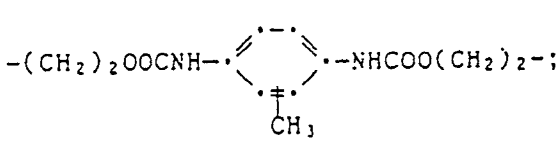

$-(CH_2)_2NHCO-$; et

$-(CH_2)_2NHCO(CH_2)_2-$.

46. Procédé de la revendication 41 où ledit monomère modifiant hydrophile est choisi parmi

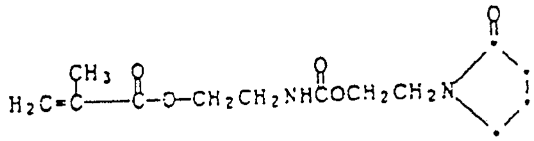

acb) 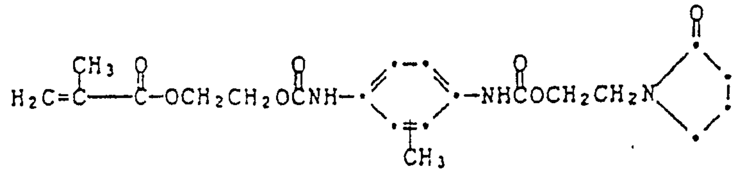 ,

acc) 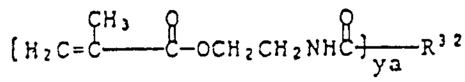

où $R^{32}$ représente $[OCH_2(CH)_{yc}CH_2O]-(H)_{yb}$ où yc vaut 1-6 et yb vaut 0 à (Yc + 1), et ya vaut 1 à (yc + 2 − yb),

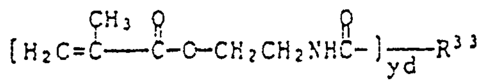

où $R^{33}$ représente $C(CH_2O)_4(H)_{4-yl}$ et yd vaut 1-4 ;

ace) un alcool polyvinylique ayant au moins 1 et jusqu'à 50% compris de ses hydrogènes alcooliques absents ; et

acf) 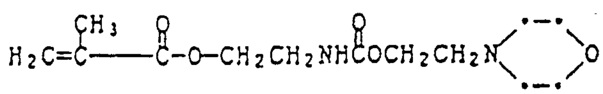 .

47. Procédé de la revendication 46, où ledit monomère modifiant hydrophile est choisi parmi lesdits groupes aca), acb) et acf).

48. Application d'un polymère de la revendication 37 ou 39 à la fabrication d'un dispositif ophtalmique.

**Revendications pour l'Etat Contractant : ES**

1. Dispositif ophtalmique perméable à l'oxygène, flexible, mouillable, optiquement clair, fabriqué à partir d'un polymère

a) un monomère réticulable ayant un segment S″ de formule Ia

$$-(W-S'-L-D-A-L)_{a}- \qquad (Ia)$$

où a vaut de 1 à 10 ;
chaque D représente indépendamment un oxygène ou $-N(R^{21})-$ ;
chaque W représente une liaison, un oxygène ou $-N(R^{21})-$ ;
chaque L représente indépendamment $-BRB'$, $-BR-$, $-RB'-$ ou $-R-$ ;
chaque S′ représente indépendamment un segment de formule II,

$$-(CH_2)_{h}-(\underset{R^2}{\overset{R^1}{Si}}O)_{v}-\underset{R^2}{\overset{R^1}{Si}}-(CH_2)_{i}-W- \qquad (II)$$

chaque A représente indépendamment un segment de formule III

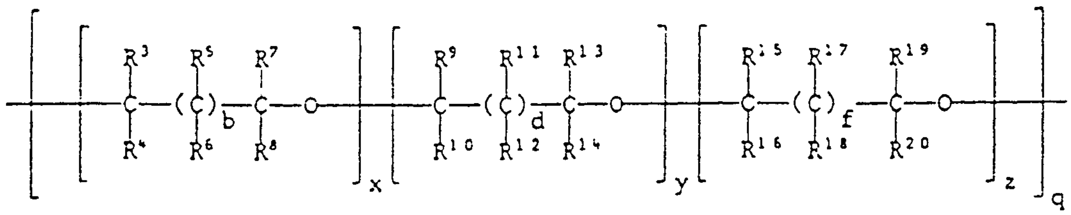

(III)

l'oxygène terminal dans chaque unité de formule III étant remplaçable par $-N(R^{21})-$ ;

où chaque b, d et f vaut indépendamment 0-4 ; q est un nombre allant de 1 à 1000 ; chaque x, y et z vaut indépendamment 0 à 200, à condition qu'au moins un des symboles x, y et z vale au moins 1 ; de manière que (x + y + z) multiplié par q vaille de 4 à 1000 ;

chaque h et i est un nombre entier allant de 1 à 6, v est un nombre entier allant de 2 à 300 ;

$R^1$ et $R^2$ représentent indépendamment un alcoyle ayant jusqu'à 18 atomes de carbone, ou un aryle ayant jusqu'à 12 atomes de carbone ;

chacun des radicaux $R^3$, $R^4$, $R^7$-$R^{10}$, $R^{13}$-$R^{16}$ et $R^{20}$ est indépendamment choisi dans le groupe constitué par hydrogène, halogène un radical aliphatique, aromatique ou hétérocyclique contenant un radical choisi parmi : alcoyle en $C_{1-16}$ non-substitué ; alcoyle en $C_{1-16}$ substitué ; alcényle en $C_{2-16}$ non substitué ; et alcényle en $C_{2-16}$ substitué ; où les substituants alcoyle et alcényle sont choisis indépendamment parmi un alcoxy en $C_{1-16}$, -carbonyle, alcényloxy en $C_{2-16}$-carbonyle, fluoro, aryle ayant jusqu'à 10 atomes de carbone, alcoxy en $C_{1-16}$, de préférence en $C_{1-8}$, alcanoyloxy en $C_{1-16}$, aryloxy ayant jusqu'à 10 atomes de carbone, alcénoyloxy en $C_{3-6}$, aroyle ayant jusqu'à 10 atomes de carbone, aroyloxy ayant jusqu'à 11 atomes de carbone, cycloalcoyle en $C_{3-8}$ cycloalcoxy en $C_{3-8}$, cycloalcoyle en $C_{3-8}$-carbonyloxy, cycloalcoxy en $C_{3-8}$-carbonyle, oxacycloalcoyle ayant jusqu'à 7 atomes de carbone, oxacycloalcoxy ayant jusqu'à 7 atomes de carbone, oxacycloalcoxy (jusqu'à 7 atomes de carbone)-carbonyle, oxacycloalcoyle (jusqu'à 7 atomes de carbone)-carbonyloxy et aryl (jusqu'a 10 atomes de carbone)oxy-carbonyle, chacun desdits substituants alcoyle et alcényle étant à son tour éventuellement substitué par un alcoyle en $C_{1-6}$, un fluoro ou un alcoxy en $C_{1-6}$ à condition que ledit alcoxy mentionné en dernier ne soit pas lié à un atome de carbone déjà lié par une liaison simple à un autre atome d'oxygène ;

$R^3$, $R^4$, $R^{7-10}$, $R^{13-16}$, $R^{19}$ et $R^{20}$ étant en outre indépendamment choisis parmi aryle ayant jusqu'à 10 atomes de carbone, cycloalcoyle en $C_{3-8}$, et oxacycloalcoyle ayant jusqu'à 7 atomes de carbone, dont chacun peut être non substitué ou encore substitué par un substituant choisi dans le groupe des substituants pour ledit $R^3$ alcoyle exposé ci-dessus ;

$R^5$, $R^6$, $R^{11}$, $R^{12}$, $R^{17}$ et $R^{18}$ sont choisis dans le même groupe que celui présenté ci-dessus pour $R^3$ ; et $R^5$, $R^6$, $R^{11}$, $R^{12}$, $R^{17}$ et $R^{18}$ sont en outre indépendamment choisis parmi alcoxy en $C_{1-16}$-carbonyle, alcénoyloxy en $C_{3-16}$, alcényloxy en $C_{2-16}$-carbonyle, et alcanoyloxy en $C_{1-16}$ et chacun d'entre eux peut être en outre substitué par un fluoro, un aryle allant jusqu'à 10 atomes de carbone, un alcoxy en $C_{1-16}$ et $R^5$, $R^6$, $R^{11}$, $R^{12}$, $R^{17}$ et $R^{18}$ sont encore en outre indépendamment choisis parmi aryloxy allant jusqu'à 10 atomes de carbone, cycloalcoxy allant jusqu'à 8 atomes de carbone, cycloalcoyle (allant jusqu'à 8 atomes de carbone)-carbonyloxy, cycloalcoxy (allant jusqu'à 8 atomes de carbone)-carbonyle, aroyloxy allant jusqu'à 11 atomes de carbone, oxacycloalcoxy allant jusqu'à 7 atomes de carbone, oxacycloalcényloxy allant jusqu'à 7 atomes de carbone, oxacycloalcoxy (allant jusqu'à 7 atomes de carbone)-carbonyle, oxycycloalcoyle (allant jusqu'à 7 atomes de carbone)-carbonyloxy, et aryloxy (allant jusqu'à 10 atomes de carbone)-carbonyle, dont chacun peut être en outre substitué par un fluoro, alcoyle en $C_{1-6}$ ou alcoxy en $C_{1-6}$, à condition que tout substituant ayant un atome d'oxygène comme liaison au reste de la molécule ne peut pas être un substituant sur le même atome de carbone qui est lié par une liaison simple à un autre atome d'oxygène ; en outre, deux groupes adjacents, choisis par $R^3$ à $R^{20}$, ensemble avec les atomes auxquels ils sont attachés, peuvent former un noyau cycloalcoyle, oxacycloalcoyle, ou bicycloalcoyle à 5 à 8 chaînons ; et chaque $R^{21}$ est indépendamment choisi parmi hydrogène, alcoyle en $C_{1-4}$ et phényle chaque B et B' est choisi parmi

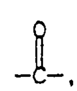 , 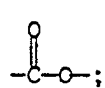 ; et 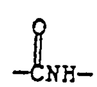

le groupe carbonyle étant lié à A, S' ou D ; et chaque R est indépendamment un groupe de liaison bivalent choisi parmi

a) un groupe aliphatique bivalent allant jusqu'à 25 atomes de carbone, qui peut être interrompu par un oxy, carbonyloxy, amino, aminocarbonyle, oxycarbonyle, uréido, oxycarbonylamino- ou carbonylamino ;

b) un groupe cycloaliphatique bivalent à 5 à 7 chaînons et un groupe cycloaliphatique à 5 à 7 chaînons-aliphatique en $C_{1-20}$ ;

c) un groupe arylène bivalent ayant de 6 à 25 atomes ;

d) un groupe aralcoyle ou alcaryle bivalent ayant de 7 à 25 atomes de carbone ; et

e) un alcoylène-aryl-alcoylène bivalent ayant de 8 à 30 atomes de carbone, où les groupes b), d) et e) peuvent être éventuellement interrompus dans leurs groupes aliphatiques et alcoyles non-cyliques respectivement par le même groupe que dans les groupes a) et où les noyaux aryle dans les groupes c), d) et e) peuvent être encore substitués par un ou plusieurs substituants choisis parmi halogène, alcoyle en $C_{1-4}$ et perhaloalcoyle en $C_{1-12}$, et où un groupe interrompant présenté dans le groupe a) peut être présent entre les parties cycliques et non cycliques des groupes b), d) et e) ; et

b) de 0 à une quantité suffisante d'un monomère modifiant hydrophile pour conférer audit polymère une teneur en eau dans son état gonflé aqueux d'au moins 10%, ledit monomère modifiant hydrophile étant choisi parmi

aa) les polyéthylène glycols de formule

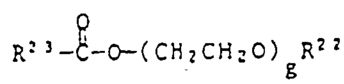

(A)

ou

ab) les pyrrolidones de formule

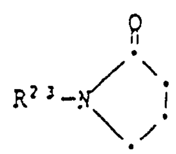

(B)

où $R^{22}$ est un hydrogène ou un alcoyle en $C_{1-7}$, g est un nombre entier allant de 1 à 25, ou

ac) un composé de formule

$$(R^{24}\text{-div})_{nz}Hy \quad (C)$$

où $R^{23}$ est une fraction polymérisable ou réactive choisie parmi i) les radicaux éthyléniquement insaturés, ii) les annydrides, iii) les amines, iv) les acides, v) les esters, vi) les amides, vii) les éthers, viii) les halogénures d'acides,

$R^{24}$ est choisi parmi les significations données pour $R^{23}$ et ix) les groupes époxy, x) les isocyanates et isothiocyanates et xi) hydroxy ; div est choisi parmi

ba) un groupe aliphatique bivalent ayant jusqu'à 25 atomes de carbone, de préférence alcoyle, alcényle, ou alcynyle, qui peut également être interrompu, ou terminé ou interrompu et terminé par un oxy, carbonyloxy, amino, aminocarbonyle, oxycarbonyle, uréido, oxycarbonylamino, ou carbonylamino ;

bb) un groupe cycloaliphatique à 5 à 7 chaînons bivalent et un groupe cycloaliphatique-aliphatique en $C_{1-20}$ à 5 à 7 chaînons qui peut également être interrompu, terminé, ou interrompu et terminé comme dans le groupe ba) ci-dessus, sauf que lesdites interruptions ne peuvent se produire dans lesdites parties cycloaliphatiques ;

bc) un groupe arylène bivalent ayant de 6 à 25 atomes de carbone, qui est non substitué ou substitué par au moins un substituant choisi parmi halogène, alcoyle en $C_{1-4}$ et perhaloalcoyle en $C_{1-12}$ ;

bd) un aralcoyle ou alkaryle ou alcoylèn-aryl-alcoylène bivalent ayant de 7 à 25 atomes de carbone, qui est non interrompu ou interrompu par la partie alcoyle, ou interrompu dans la partie alcoyle, ou terminé, ou interrompu dans la partie alcoyle et terminé avec un groupe interrupteur ou terminant tel que mentionné en ba) ci-dessus, et chacun desdits groupes aralcoyle et alkaryle non interrompus, interrompus et terminés est en outre non substitué ou substitué par un substituant choisi parmi halogène, alcoyle en $C_{1-4}$ et perhaloalcoyle

en $C_{1-12}$ ;

be )

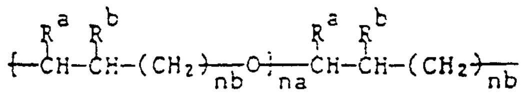 (D)

où na est un nombre entier valant de 8 à 100 ; et

bea) $R^a$ est un hydrogène, $R^b$ est un méthyle, et nb vaut zéro ; ou

beb) $R^a$ est un méthyle, $R^b$ est un hydrogène et nb vaut zéro ; ou

bec) $R^a$ et $R^b$ représentent un hydrogène, et nb vaut 1 ;

nz est un nombre entier valant de 1 jusqu'à la valence de Hy et où nz est inférieur à la valence de Hy, les valences restantes de Hy étant prises par des hydrogènes ;

et Hy est un groupe hydrophile choisi parmi ca) morpholino : des radicaux amide cycliques à 5 à 7 chaînons; des radicaux N,N-diamide cycliques saturés et non saturés à 5 à 6 chaînons ; des groupes de formule

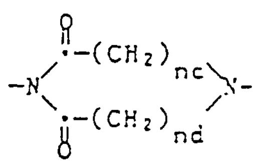 (E) ou 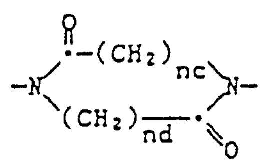 (E')

ayant de 6 à 7 chaînons où nc et nd sont choisis parmi 0-2 ; et les amines cycliques de 5 à 6 chaînons ; chacun étant non substitué ou substitué par un hydroxy-alcoyle en $C_{1-5}$, carboxy ou alcoyle inférieur ;

cb) tétrahydrofurfuryle ;

cc) des radicaux mono-, di-, et polysaccharide, qu'ils soient à chaîne droite ou cycliques, leurs radicaux alcool sucre correspondants, les radicaux pentaérythritol, et les radicaux alcool polyvinylique ;

cd) les radicaux polyhydroxy-alcoyle en $C_{2-7}$ ledit dispositif ayant un angle de contact aigü inférieur à 60°; et ayant un Dk (× $10^{-10}$mm · ml $O_2$ (cm² · sec · mmHg) d'au moins environ 7.

2. Dispositif de la revendication 1, où a vaut 1 et chaque D est un oxygène.

3. Dispositif de la revendication 1, où chaque L représente –BRB′–, –BR–, ou –RB′, chaque B représente –C(O)NH– où l'atome d'azote est lié à R et R est un phénylène non substitué ou substitué par un méthyle.

4. Dispositif de la revendication 1 où chaque $R^1$ et $R^2$ est un méthyle, h vaut 4 ; i vaut 4 ; et v vaut d'environ 15 à environ 50.

5. Dispositif de la revendication 1 où (x + y + z) multiplié par q vaut d'environ 25 à environ 75.

6. Dispositif de la revendication 1 où

a) chaque b, d et f vaut 1 et $R^3$-$R^{20}$ représentent tous des hydrogènes, ou

b) chaque b, d, et f vaut 0 ; chaque $R^3$, $R^4$, $R^8$-$R^{10}$, $R^{14}$-$R^{16}$, et $R^{20}$ est un hydrogène, et chaque $R^7$, $R^{13}$ et $R^{19}$ est un méthyle.

7. Dispositif de la revendication 6, où (x + y + z) multiplié par q vaut d'environ 25 à environ 75.

8. Dispositif de la revendication 1, où

a vaut 1 ;

chaque D est un oxygène ;

chaque L représente –BRB′–, –BR– ou –RB′– ;

chaque B et B′ représentent –C(O)NH– avec l'atome d'azote lié à R ;

chaque R est un phénylène non substitué ou substitué par un méthyle ;

chaque $R^1$ et $R^2$ représente un méthyle ;

h et i valent chacun 4 ;

v vaut d'environ 15 à environ 50 ;

(x + y + z) multiplié par q vaut environ 25 à environ 75 ; et

a) chaque b, d, et f vaut 1 et $R^3$-$R^{20}$ sont tous des hydrogènes ; ou

b) chaque b, d et f vaut 0 ; chaque $R^3$, $R^4$, $R^8$-$R^{10}$, $R^{14}$-$R^{16}$ et $R^{20}$ est un hydrogène ; et chaque $R^7$, $R^{13}$ et $R^{19}$ est un méthyle.

9. Dispositif de la revendication 8, où chaque W est une liaison et chaque L représente –BR– ou –RB′–.

10. Dispositif ophtalmique perméable à l'oxygène, flexible, mouillable, de la revendication 1, comprenant

un monomère réticulable ayant les segments de formule Ib,

$$-(D\text{-}A\text{-}L\text{-}S'')_c- \qquad (Ib)$$

ou de formule Ic,

$$-(S'')_c\text{-}D\text{-}S'\text{-}La- \qquad (Ic)$$

ou de formule Id

$$-(D\text{-}A\text{-}L)\text{-}(S'')_c- \qquad (Id)$$

où chaque S″ est indépendamment un segment de formule Ia de la revendication 1 ;
chaque D, A et L est indépendamment tel que défini dans la revendication 1 ;
c vaut 1-10 ;
et multiplié par c vaut 1-10 ;
La étant choisi parmi –BrB′– et –BR– ; et où S′, B, R et B′ sont tels que définis dans la revendication 1.

11. Dispositif de la revendication 10, où a vaut 1 et chaque D est un oxygène.

12. Dispositif de la revendication 10, où chaque L représente –BRB′–, –BR– ou –RB′–, chaque B représente –C(O)NH– où l'atome d'azote est lié à R, et R est un phénylène non substitué ou substitué par un méthyle.

13. Dispositif de la revendication 10 où chaque $R^1$ et chaque $R^2$ est un méthyle ; h vaut 4 ; i vaut 4 ; et v vaut d'environ 15 à environ 50.

14. Dispositif de la revendication 10, où (x + y + z) multiplié par q vaut d'environ 25 à environ 75.

15. Dispositif de la revendication 10, où

a) chaque b, d, et f vaut 1 et $R^3$-$R^{20}$ sont tous des hydrogène et ou

b) chaque b, d et f vaut 0, chaque $R^3$, $R^4$, $R^8$-$R^{10}$, $R^{14}$-$R^{16}$, et $R^{20}$ est un hydrogène, et chaque $R^7$, $R^{13}$ et $R^{19}$ est un méthyle.

16. Dispositif de la revendication 15, où (x + y + z) multiplié par q vaut d'environ 25 à environ 75.

17. Dispositif de la revendication 10 où c vaut 1.

18. Dispositif de la revendication 10 où a vaut 1 ;
chaque D est un oxygène ;
chaque L représente –BRB′–, –BR–, ou –RB′– ;
chaque B et B représente –C(O)NH– avec l'atome d'azote lié à R ;
chaque R est un phénylène non substitué ou substitué par un méthyle ;
chaque $R^1$ et $R^2$ est un méthyle ;
h et i valent chacun 4 ;
v vaut d'environ 15 à environ 50 ;
(x + y + z) multiplié par q vaut d'environ 25 à environ 75 ; et
a) chaque b, d, et f vaut 1 et $R^3$-$R^{20}$ sont tous des hydrogènes ; ou
b) chaque b, d et f vaut 0 ; chaque $R^3$, $R^4$, $R^8$-$R^{10}$, $R^{14}$-$R^{16}$ et $R^{20}$ est un hydrogène ; et chaque $R^7$, $R^{13}$ et $R^{19}$ est un méthyle ;
et c vaut 1.

19. Dispositif de la revendication 18, où chaque W est une liaison et chaque L représente –BR– ou –RB′–.

20. Dispositif ophtalmique perméable à l'oxygène, flexible, mouillable, de la revendication 14, le monomère étant de formule

a)

$$L'-[(D\text{-}A\text{-}L)_e\text{-}S'']_c-L'' \qquad (I)$$

où e vaut 0 ou 1 ;
chaque D, A, L, S″ et c est indépendamment tel que défini dans la revendication 10 ;
L′ est un hydrogène, P′-R–, P′-BR–, P′-RB′–, ou P′-BRB′– ; et L″ est un hydrogène ou –P′, ou, dans le cas où

e vaut 0, également -D-S'-Br-P (ou -D-S'-BRB'-P' et où P' est un hydrogène, amino, hydroxy, NCO, NCS, vinyle ou une fraction contenant un groupe réticulable qui peut être réticulé lorsqu'on le fait coagir avec un agent réticulant approprié ou lorsqu'on l'irradie par un rayonnement actinique.

21. Dispositif de la revendication 20, où a vaut 1 et chaque D est un oxygène.

22. Dispositif de la revendication 20, où chaque L représente (–BRB'–, –BR– ou –RB'–, chaque B représente –C(O)NH– où l'atome d'azote est lié à R, et R est un phénylène non substitué ou substitué par un méthyle.

23. Dispositif de la revendication 20, où chaque $R^1$ et $R^2$ est un méthyle, h vaut 4 ; i vaut 4 ; et v vaut d'environ 15 à environ 50.

24. Dispositif de la revendication 20 où (x + y + z) multiplié par q est d'environ 25 à environ 75.

25. Dispositif de la revendication 20, où a) chaque b, d, et f vaut 1 et $R^3$-$R^{20}$ sont tous des hydrogènes ou b) chaque b, d et f vaut 0, chaque $R^3$, $R^4$, $R^8$-$R^{10}$, $R^{14}$-$R^{16}$ et $R^{20}$ sont des hydrogènes, et chaque $R^7$, $R^{13}$ et $R^{19}$ sont un méthyle.

26. Dispositif de la revendication 25 où (x + y + z) multiplié par q donne environ 25 à environ 75.

27. Dispositif de la revendication 20, où c vaut 1.

28. Dispositif de la revendication 20, où L' est un P'-BRB'–.

29. Dispositif de la revendication 20, où chaque P' représente

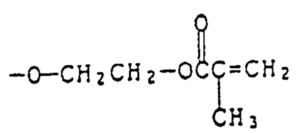, 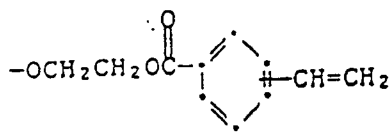

ou

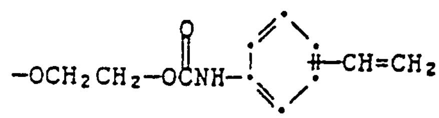

30. Dispositif de la revendication 20 où
a vaut 1 ;
chaque D est un oxygène ;
chaque L représente –BRB' ; –BR– ou –RB'– ;
chaque B et B représentent –C(O)NH– avec l'atome d'azote lié à R ;
chaque R est un phénylène non substitué ou substitué par un méthyle ;
chaque $R^1$ et $R^2$ est un méthyle ;
h et i valent chacun 4 ;
v vaut d'environ 15 à environ 50 ;
(x + y + z) multiplié par q vaut d'environ 25 à environ 75 ; et
a) chaque b, d et f vaut 0 ; et chaque $R^3$-$R^{20}$ sont tous des hydrogènes ; ou
b) chaque b, d et f vaut 0 ; chaque $R^3$, $R^4$, $R^8$-$R^{10}$, $R^{14}$-$R^{16}$ et $R^{20}$ est un hydrogène ; et chaque $R^7$, $R^{13}$ et $R^{19}$ est un méthyle ;
L' représente P'-BRB' ou P' ;
et P' représente

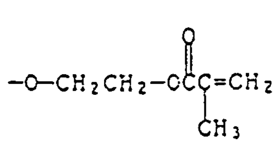, 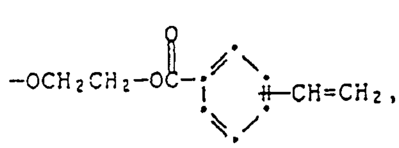, 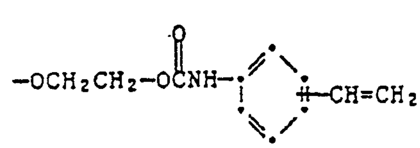,

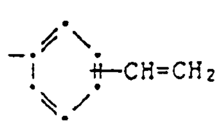, ou $-CH=CH_2$.

31. Dispositif de la revendication 30 où chaque W représente une liaison, chaque L représente –BR– ou

–RB′–, et L′ et L″ représentent chacun $-CH{=}CH_2$.

32. Dispositif de la revendication 1, qui est une lentille de contact.

33. Dispositif de la revendication 1, où chaque A est de formule

$$-\left[(CH_2CH_2O)_x-(CH_2\underset{\displaystyle CH_3}{\underset{|}{C}}HO)_y-(CH_2CH_2O)_z\right]_q- \quad \text{ou}$$

$$-\left[(CH_2-\underset{\displaystyle CH_3}{\underset{|}{C}}H-O)_x-(CH_2-CH_2O)_y-(CH_2-\underset{\displaystyle CH_3}{\underset{|}{C}}HO)_z\right]_q-$$

où chacun des symboles x, y, z et q est supérieur à 0.

34. Dispositif de la revendication 33 où q vaut 1.

35. Dispositif de la revendication 33, où x et z dans un A quelconque sont identiques.

36. Dispositif de la revendication 33, où chaque x et chaque z a la même valeur.

37. Polymère perméable à l'oxygène, flexible, mouillable, optiquement clair comprenant :

a) un monomère réticulable ayant un segment S″ de formule

$$-(W-S'-L-D-A-L)_a- \qquad (Ia)$$

où chacune des variables est telle que définie dans la revendication 1, et

b) une quantité suffisante d'un monomère modifiant hydrophile pour conférer audit polymère une teneur en eau à son état gonflé aqueux d'au moins 10%, ledit monomère modifiant hydrophile étant choisi parmi les composés de formule (A), (B) et –C) comme définis dans la revendication 1 ; et ledit polymère ayant un angle de contact aigü inférieur à 60° ; et ayant un Dk ($\times 10^{-10}$ mm · ml $O_2/cm^2$ · sec · mmHg) d'au moins environ 7.

38. Polymère perméable à l'oxygène, flexible, mouillable, de la revendication 37, le monomère réticulable a) ayant des segments de formule Ib

$$-(D-A-L-S'')_c- \qquad (Ib)$$

ou de formule Ic

$$-(S'')_c-D-S'-La \qquad (Ic)$$

ou de formule Id

$$-(D-A-L)-(S'')_c- \qquad (Id)$$

où S″ est indépendamment un segment de formule Ia de la revendication 1 ; chaque D, A et L est indépendamment tel que défini dans la revendication 1 ;
c vaut 1-10 ;
et a multiplié par c vaut 1-10 ;
La étant choisi parmi –BRB′– et –BR– ; et où S′, B, R et B′ sont tels que définis dans la revendication 1.

39. Polymère perméable à l'oxygène, flexible mouillable de la revendication 38, le monomère a) étant de formule

$$L'-\left[(D-A-L)_e-S''\right]_c-L'' \qquad (I)$$

où e vaut 0 ou 1 ;
chaque D, A, L, S″, et c est indépendamment tel que défini dans la revendication 10 ;
L′ est un hydrogène, P′-R–, P′-BR–, P′-RB′–, ou P′-BRB′– ; et L″ est un hydrogène ou –P′, ou dans le cas où

e vaut 0, également –D-S′-BR-P′ ou –D-S′-BRB′-P′ et où P′ est un hydrogène, amino, hydroxy, NCO, NCS, vinyle ou une fraction contenant un groupe réticulable qui peut être réticulé lorsqu'on a fait coréagir avec un agent réticulant approprié ou lorsqu'on l'irradie par un rayonnement actinique.

40. Dispositif de la revendication 1, où ledit monomère modifiant hydrophile est choisi dans le groupe de formule

$$(R^{24}\text{-div})_{nz}Hy \quad (C).$$

41. Le polymère de la revendication 37 où ledit monomère modifiant hydrophile est choisi dans le groupe de formule

$$(R^{24}\text{-div})_{nz}Hy \quad (C)$$

42. Polymère de la revendication 41 où $R^{24}$ est un groupe éthylèniquement insaturé.

43. Le polymère de la revendication 42 où $R^{24}$ est un vinyle, 1-méthylvinyle, 2-méthylvinyle, ou allyle ;

ia) 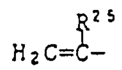

et l'extrémité de div à laquelle il est lié représente $-C(O)R^{26}$, le carbonyle étant lié à $R^{24}$, où $R^{25}$ est un hydrogène ou un méthyle et $R^{26}$ représente –O–, ou $-NR^{27}-$ $R^{27}$ étant un hydrogène ou un alcoyle inférieur ;

, 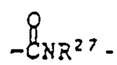

ib) $H_2C=CH-$ et l'extrémité de div à laquelle il est lié est

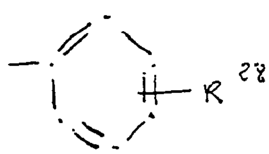 ,

la liaison à gauche étant liée à $R^{24}$, où $R^{28}$ représente –O–, $-NR^{27}-$, –C(O)–, ou –C(O)O– ; et

ic) 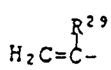

et l'extrémité de div à laquelle il est lié représente $-C(O)R^{30}-$, le carbonyle étant lié à $R^{24}$ où $R^{30}$ est un alcoylène inférieur ou $-[CH_2CH(\text{alcoyle inférieur})-O]_{1-5}-$ et $R^{29}$ est un hydrogène, alcoyle inférieur ou cyano.

44. Procédé de la revendication 41 où Hy est choisi parmi

ce) un morpholino qui est non substitué ou mono- à tétra-substitué par un alcoyle inférieur, de préférence méthyle ou éthyle ;

cf) 14g 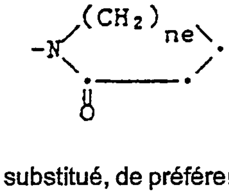

où ne vaut 1, 2 ou 3, de préférence 1, chacun étant non substitué ou substitué, de préférence mono- ou disubstitué par un alcoyle inférieur, de préférence méthyle ou éthyle ;

cg)

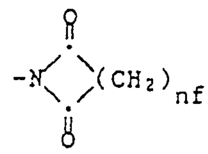

où nf vaut 2 ou 3, de préférence 2, chacun étant non substitué ou substitué par un alcoyle inférieur, de préférence méthyle ou éthyle ;

ch) un groupe bivalent de formule

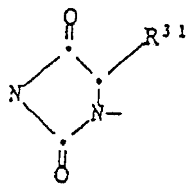 , 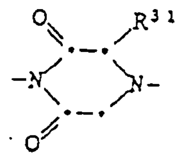 , 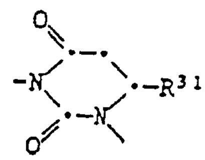

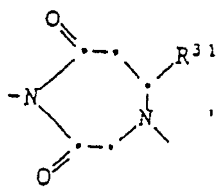 , 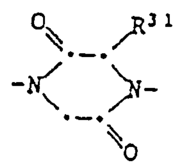

où $R^{31}$ est un hydrogène ou un carboxy ;

ci)

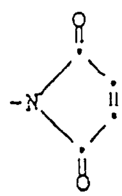

cj)

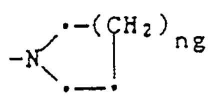

où ng vaut 1 ou 2, chacun étant non substitué ou substitué par un alcoyle inférieur, de préférence un méthyle ou un éthyle ;

ck)

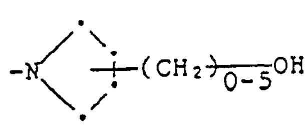 ;

cl) un polyol choisi parmi les radicaux alcool polyvinylique,

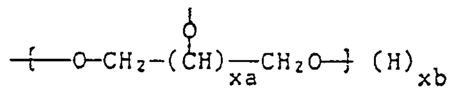

où

xa vaut 2-10 et xb est un nombre entier allant de zéro à xa + 1 compris, ses analogues saccharide cycliques, ses di-tétrasaccharides, $C(CH_2O)_4(H)_{xc}$ où

xc vaut 0-3, et les radicaux polyhydroxy-alcoylène inférieur glycol où jusqu'à 50% des groupes hydroxy sont dépourvus de leurs hydrogènes alcooliques.

45. Procédé de la revendication 41, où div est choisi parmi

$-(CH_2)_2NHCOO(CH_2)_2-$;

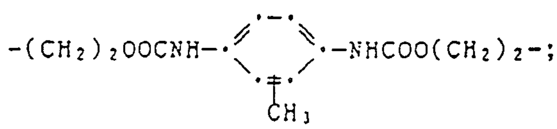

$-(CH_2)_2NHCO-$; et

$-(CH_2)_2NHCO(CH_2)_2-$.

46. Polymère de la revendication 41 où ledit monomère modifiant hydrophile est choisi parmi

aca)

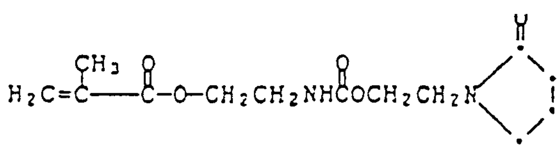
,

acb)

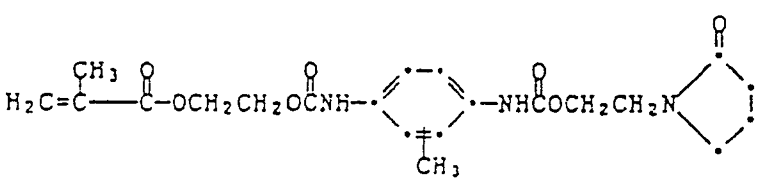
,

acc)

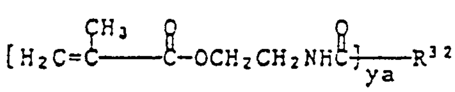

où $R^{32}$ représente $[OCH_2(CH)_{yc}CH_2O]\text{-}(H)_{yb}$ où yc vaut 1-6 et yb vaut 0 à (yc + 1), et ya vaut 1 à (yc + 2 – yb),

acd) 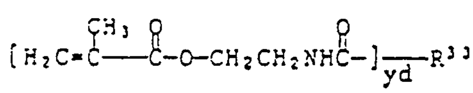

où $R^{33}$ représente $C(CH_2O)_4(H)_{4\text{-}yl}$ et yd vaut 1-4 ;

ace) un alcool polyvinylique ayant au moins 1 et jusqu'à 50% compris de ses hydrogènes alcooliques absents ; et

acf) 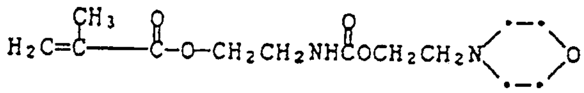 .

47. Polymère de la revendication 46, où ledit monomère modifiant hydrophile est choisi parmi lesdits groupes aca), acb) et acf).

48. Application d'un polymère de la revendication 37 ou 39 à la fabrication d'un dispositif ophtalmique.